# EUROPEAN PATENT SPECIFICATION

(11) **EP 4 005 384 B1**
(45) Date of publication and mention of the grant of the patent: **02.09.2026**
(21) Application number: 20846511.2
(22) Date of filing: 14.07.2020
(51) Int. Cl.: A01N 43/40, A01N 33/22, A01N 35/10, A01N 37/22, A01N 37/48, A01N 39/02, A01N 39/04, A01N 41/06, A01N 41/10, A01N 47/36, A01N 43/08, A01N 43/36, A01N 43/42, A01N 43/50, A01N 43/54, A01N 43/56, A01P 13/00

(54) **HERBICIDAL COMPOSITION CONTAINING R-TYPE PYRIDYLOXY CARBOXYLIC ACID COMPOUND AND USE THEREOF**
HERBIZIDE ZUSAMMENSETZUNG MIT R-PYRIDYLOXYCARBONSÄUREVERBINDUNG UND DEREN VERWENDUNG
COMPOSITION HERBICIDE CONTENANT UN COMPOSÉ D'ACIDE PYRIDYLOXYCARBOXYLIQUE DE TYPE R ET SON UTILISATION

(30) Priority: 27.07.2019 CN 201910685431; 27.08.2019 CN 201910796285; 27.03.2020 CN 202010228317; 27.03.2020 CN 202010228765; 14.05.2020 CN 202010406451
(43) Date of publication of application: 01.06.2022
(73) Proprietor: Qingdao KingAgroot Chemical Compound Co., Ltd., Qingdao, Shandong 266000 (CN)
(72) Inventor: PENG, Xuegang, Qingdao, Shandong 266000 (CN); ZHAO, De, Qingdao, Shandong 266000 (CN); CUI, Qi, Qingdao, Shandong 266000 (CN); JIN, Tao, Qingdao, Shandong 266000 (CN); ZHANG, Jingyuan, Qingdao, Shandong 266000 (CN); LIU, Na, Qingdao, Shandong 266000 (CN)
(74) Representative: De Vries & Metman
(86) International application number: PCT/CN2020/101901
(87) International publication number: WO 2021/017817

(56) References cited:
- EP-A1- 3 904 341
- CN-A- 106 187 872
- CN-A- 109 400 526
- CN-A- 109 400 526
- CN-A- 109 438 333
- CN-A- 109 438 333
- CN-A- 109 535 070
- CN-A- 109 535 070
- US-A- 3 755 339
- US-A- 3 761 486
- US-A- 3 969 360
- US-A- 4 108 629
- US-A- 4 110 104
- US-A- 4 115 100
- US-A- 4 127 582
- KURIHARA N ET AL: "Chirality in synthetic agrochemicals: bioactivity and safety considerations", PESTICIDE SCIENCE., vol. 55, no. 2, 1 February 1999 (1999-02-01), GB, pages 219 - 219, XP055936903, ISSN: 0031-613X, DOI: 10.1002/(SICI)1096-9063(199902)55:2<219::AID-PS820>3.0.CO;2-0

## Description

### Technical field

The present invention belongs to the technical field of pesticides, and particularly relates to an herbicidal composition comprising R-pyridyloxycarboxylic acid or specific esters thereof, and a second herbicide, a use thereof for (selectively) controlling a weed (in a useful crop), a method for controlling unwanted plant growth, and a method for selectively controlling a weed in a useful crop.

### Background art

Chemical control of weed is a most economical and effective means for controlling weeds in farmlands, however, continuously use of a single chemical herbicide or chemical herbicides having a single functional mechanism at a high dosage for a long period of time is likely to cause problems associated with evolved drug resistance and tolerance of weeds. Well complexing or formulating of herbicidal compounds can achieve the following advantages: exhibiting a broad spectrum of weed control, improving weed control effect, and delaying occurrence and development of drug resistance and tolerance of weeds, and thus is one of the most effective means to solve the above problems. Accordingly, herbicidal compositions which have a high safety and a broad weed controlling spectrum, and are capable of bringing about a synergistic effect and removing resistant weeds are desiderated in production.

CN 109 400 526 describes pyridyloxy thioester derivatives and a preparation method, as well as herbicidal compositions and applications thereof.

CN 109 438 333 describes pyridyloxy carboxylic ester derivatives and a preparation method thereof, as well as weed control compositions and applications thereof.

CN 109 535 070 describes pyridyloxycarboxylate derivatives and a preparation method thereof, as well as a weeding composition and applications thereof.

EP 3 904 341 describes an R-type pyridyloxycarboxylic acid, salt and ester derivative thereof, and a preparation method therefor, and herbicidal compositions and applications thereof.

Kurihara N et al.: "Chirality in synthetic agrochemicals: bioactivity and safety considerations", PESTICIDE SCIENCE., vol. 55, no. 2, 1 February 1999, pages 219-219, contains considerations about bioactivity and safety of chiral synthetic agrochemicals.

### The contents of the invention

In order to solve the above existing problems in the prior art, the present invention provides an herbicidal composition comprising R-pyridyloxycarboxylic acid and derivative and a method or use thereof as defined in the appended set of claims. The composition is capable of effectively controlling weeds such as grassy weeds or broadleaf weeds etc., and has the following advantages: exhibiting a broad spectrum of weed control, being used in a reduced dose, and being capable of bringing about a synergistic effect and removing resistant weeds

Accordingly, the disclosure relates to a herbicidal composition comprising an active ingredient A and an active ingredient B in an herbicidally effective amount, wherein the ingredient A to the ingredient B is in a weight ratio of 1:30~100:1, wherein, the combination of active ingredient A and the active ingredient B is selected from group 1 and group 2,
(1) group 1:
the active ingredient A is one or more compounds selected from an R-pyridyloxycarboxylic acid represented by formula I and salt, ester derivative thereof, 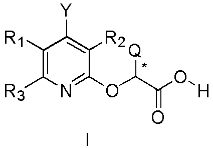
the ester is 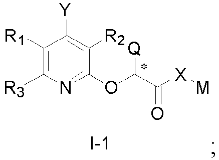
the carbon atom with an asterisk is a chiral center, which is in R-configuration;
the active ingredient B is selected from the following one or more compounds,
   (1) ALS inhibitor selected from: penoxsulam (CAS NO.:219714-96-2), bispyribac-sodium (CAS NO.:125401-92-5), pyrazosulfuron-ethyl (CAS NO.: 93697-74-6), nicosulfuron (CAS NO.: 111991-09-4), florasulam(CAS NO.: 145701-23-1), rimsulfuron (CAS NO.: 122931-48-0), imazethapyr (CAS NO.: 81335-77-5), imazapic (CAS NO.: 104098-48-8), imazamox (CAS NO.: 114311-32-9), sulfometuron-methyl (CAS NO.: 74222-97-2), and cloransulam-methyl (CAS NO.: 147150-35-4);
   (2) ACCase inhibitor selected from: cyhalofop-butyl (CAS NO.: 122008-85-9), clodinafop-propargyl (CAS NO.: 105512-06-9), pinoxaden (CAS NO.: 243973-20-8), clethodim (CAS NO.: 99129-21-2), sethoxydim (CAS NO.: 74051-80-2), quizalofop-P-methyl (CAS NO.: 100646-51-3), fluazifop-P-butyl (CAS NO.: 79241-46-6), and haloxyfop-P-methyl (CAS NO.: 72619-32-0);
   (3) PSII inhibitor selected from: atrazine (CAS NO.: 1912-24-9), isoproturon (CAS NO.: 34123-59-6), chlorotoluron (CAS NO.: 15545-48-9), diuron (CAS NO.: 330-54-1), bentazone (CAS NO.: 25057-89-0), bromoxynil (CAS NO.: 1689-84-5), and propanil(CAS NO.: 709-98-8);
   (4) HPPD inhibitor selected from: cypyrafluone (CAS NO.: 1855929-45-1), bipyrazone (CAS NO.: 1622908-18-2), fenpyrazone (CAS NO.: 1992017-55-6), tripyrasulfone (CAS NO.: 1911613-97-2), tefuryltrione (CAS NO.: 473278-76-1), mesotrione (CAS NO.: 104206-82-8), tembotrione (CAS NO.: 335104-84-2), topramezone (CAS NO.: 210631-68-8), isoxaflutole (CAS NO.: 141112-29-0), and benzobicylon (CAS NO.: 156963-66-5);
   (5) PDS inhibitor selected from: diflufenican(CAS NO.: 83164-33-4) and flurochloridone (CAS NO.: 61213-25-0);
   (6) DOXP inhibitor: clomazone (CAS NO.: 81777-89-1);
   (7) PPO inhibitor selected from: carfentrazone-ethyl (CAS NO.: 128621-72-7), fomesafen (CAS NO.: 72178-02-0), fluoroglycofen (CAS NO.: 77501-60-1), oxyfluorfen (CAS NO.: 42874-03-3), lactofen (CAS NO.: 77501-63-4), acifluorfen-sodium (CAS NO.: 50594-66-6), flumioxazin (CAS NO.: 103361-09-7), sulfentrazone (CAS NO.: 122836-35-5), saflufenacil (CAS NO.: 372137-35-4), oxadiazon (CAS NO.: 19666-30-9), and oxadiargyl (CAS NO.: 39807-15-3);
   (8) Synthetic hormone inhibitor selected from: triclopyr (CAS NO.: 55335-06-3), MCPA (CAS NO.: 94-74-6), dicamba (CAS NO.: 1918-00-9), picloram (CAS NO.: 1918-02-1), aminopyralid (CAS NO.: 150114-71-9), fluroxypyr (CAS NO.: 69377-81-7), florpyrauxifen benzyl (CAS NO.: 1390661-72-9), halauxifen-methyl (CAS NO.: 943831-98-9), quinclorac (CAS NO.: 84087-01-4), and clopyralid (CAS NO.: 1702-17-6);
   (9) EPSPS inhibitor: glyphosate (CAS NO.: 1071-83-6);
   (10) GS inhibitor selected from: glufosinate ammonium (CAS NO.: 77182-82-2);
   (11) PSI inhibitor selected from: diquat Dibromide monohydrate (CAS NO.: 6385-62-2) and paraquat dichloride (CAS NO.: 1910-42-5);
wherein, R₁, R₂ each independently represent chloro;
R₃ represents fluoro;
Q represents methyl;
Y represents NH₂;
the salt is sodium salt, lithium salt or potassium salt;
in formula I-1, X represents O or S;
M represents methyl, undecyl, 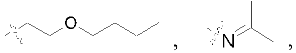 tetrahydrofurylmethylene, furylmethylene; or benzyl that is unsubstituted or substituted by fluoro or methyl;

(2) group 2:
the active ingredient A is one or more compounds selected from A171, A172, A173 and A212, the active ingredient B is one or more compounds selected from glyphosate and glufosinate ammonium,

| No. of component A | Structure | ¹HNMR |
|---|---|---|
| A171 | 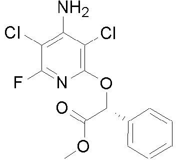 | ¹H NMR (500 MHz, Chloroform-*d*) δ 7.61 - 7.63 (m, 2H), 7.38 - 7.45 (m, 3H), 6.13 (s, 1H), 5.18 (s, 2H), 3.73 (s, 3H). |
| A172 | 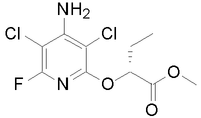 | ¹H NMR (500 MHz, DMSO-*d*₆) δ 7.04 (s, 2H), 5.00-5.03 (m, 1H), 3.66 (s, 3H), 1.84-1.94 (m, 2H), 0.96-1.0 (m, 3H). |
| A173 | 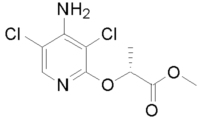 | ¹H NMR (500 MHz, DMSO-*d*₆) δ 7.61 (s, 1H), 6.80 (s, 2H), 4.63 (q, *J =* 7.0 Hz, 1H), 3.72 (s, 3H), 1.51 (d, *J* = 7.0Hz, 3H). |
| A212 | 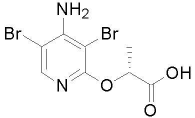 | ¹H NMR (500 MHz, Chloroform-d) δ 10.25 (s, 1H), 7.74 (s, 1H), 4.54 (q, *J =* 7.0 Hz, 1H), 3.50 (s, 2H), 1.72 (d, *J =* 7.0 Hz, 3H). |

More preferably, in group 1, the active ingredient A is one or more compounds selected from,

| No. of component A | Structure | ¹HNMR |
|---|---|---|
| A1 | 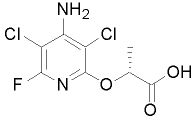 | ¹H NMR (500 MHz, DMSO-*d*₆) δ 12.96 (s, 1H), 6.99 (s, 2H), 5.06 (q, J=7.0 Hz, 1H), 1.50 (d, J=7.0 Hz, 3H) |
| A2 | 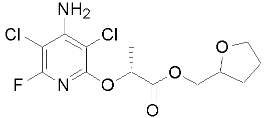 | ¹H NMR (500 MHz, Chloroform-d) δ 5.28 (q, *J* = 7.0 Hz, 1H), 5.15 (s, 2H), 4.27 - 4.07 (m, 3H), 3.91 - 3.73 (m, 2H), 2.04 - 1.82 (m, 3H), 1.66 (d, *J =* 7.0 Hz, 3H), 1.59-1.54 (m, 1H). |
| A3 | A1 sodium salt | |
| A4 | A1 potassium salt | |
| A67 | 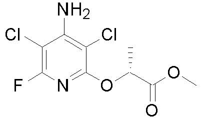 | ¹H NMR (500 MHz, DMSO-*d*₆) δ 7.04 (s, 2H), 5.15 (q, *J* = 7.0 Hz, 1H), 3.65 (s, 3H), 1.50 (d, *J =* 7.0Hz, 3H). |
| A94 | 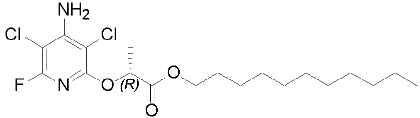 | ¹H NMR (500 MHz, DMSO-*d*₆) δ 6.81 (s, 2H), 4.67 (q, *J* = 7.0 Hz, 1H), 3.91-4.01 (m, 2H), 1.52 (d, *J* = 7.0Hz, 3H), 1.21 - 1.31 (m, 2H), 1.12- 1.24 (m, 16H), 0.83 - 0.91 (m, 3H) |
| A130 | 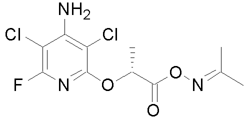 | ¹H NMR (500 MHz, DMSO-*d*₆) δ 6.79 (s, 2H), 4.73 (q, *J =* 7.0 Hz, 1H), 2.47 (s, 3H), 2.41 (s, 3H), 1.50 (d, *J =* 7.0 Hz, 3H). |
| A141 | 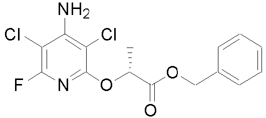 | ¹H NMR (500 MHz, DMSO-*d*₆) δ 7.34-7.27 (m, 5H), 7.05 (s, 2H), 5.20-5.17 (m, 3H), 1.53 (d, *J =* 7.0 Hz, 3H). |
| A163 | 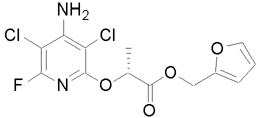 | ¹H NMR (500 MHz, Chloroform-d) δ 7.41 (d, *J* = 2.0 Hz, 1H), 6.41 (d, *J* = 3.5 Hz, 1H), 6.36 (dd, *J* = 3.5, 2.0 Hz, 1H), 5.25 (q, *J =* 7.0 Hz, 1H), 5.20 - 5.08 (m, 4H), 1.63 (d, *J* = 7.0 Hz, 3H). |
| A211 | 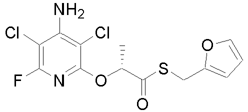 | ¹H NMR (500 MHz, Chloroform-d) δ 7.34 (d, *J* = 2.5, 1H), 6.32-6.30 (m, 1H), 6.13 - 6.07 (m, 1H), 5.01 (q, *J =* 6.5 Hz, 1H), 4.74 (s, 2H), 4.46 (s, 2H), 1.72 (d, *J =* 6.5Hz, 3H). |
| A213 | 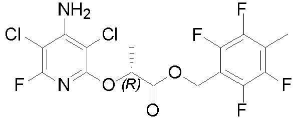 | ¹H NMR (500 MHz, Chloroform-d) δ 5.42 (s, 2H), 4.63 (q, *J* = 7.0 Hz, 1H), 4.43 (s, 2H), 2.33 (s, 3H), 1.65 (d, *J =* 7.0Hz, 3H). |
| A214 | 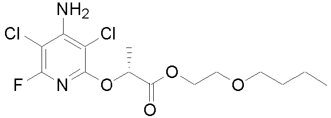 | ¹H NMR (500 MHz, Chloroform-d) δ 4.67 (q, *J* = 6.5 Hz, 1H), 4.45 (s, 2H), 4.20 - 4.09 (m, 2H), 3.38 - 3.12 (m, 3H), 3.04 - 2.95 (m, 1H), 1.61 (d, *J* = 6.5 Hz, 3H), 1.59 -1.15 (m, 4H), 1.03 (t, *J* = 7.5 Hz, 3H). |

The preparation method of the active ingredient A (not part of the claimed invention) comprises the following steps.

A compound of formula III is reacted with a compound of formula II to obtain a compound of formula I-1-1; the reaction scheme is as follows: 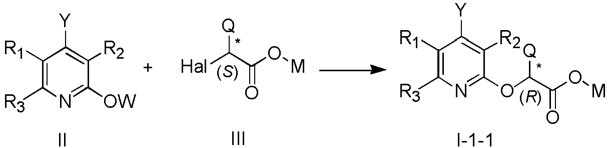 wherein, W represents hydrogen or an alkali metal, preferably K, Na; Hal represents halogen, preferably Br, Cl; the reaction is carried out in the presence of a catalyst and a solvent. Preferably, the catalyst is TBAB, and the solvent is one or more selected from the group consisting of DCM, DCE, ACN, THF, DMF.

The compound of formula I-1-1 is reacted in the presence of a lithium hydroxide aqueous solution and a solvent to obtain a compound of formula I; the reaction scheme is as follows: 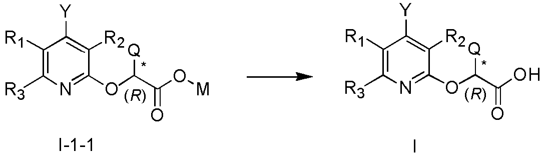 preferably, the solvent is one or more selected from the group consisting of methanol, ethanol, and isopropanol.

The compound of formula I is reacted with M-SH to obtain a compound of formula I-1-2; the reaction scheme is as follows: 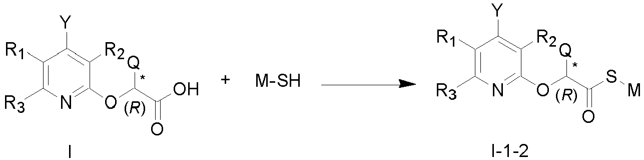
wherein, the reaction is carried out in the presence of a dehydrant and a solvent, preferably the dehydrant is DCC, and the solvent is one or more selected from the group consisting of dichloromethane, dichloroethane, acetonitrile, N,N-dimethylformamide, N,N-dimethylacetamide, dimethyl sulfoxide, tetrahydrofuran, toluene, xylene;
or, when Y represents NR₁R₂ (R₁, R₂ are not hydrogen at the same time), it is obtained by reacting a compound of formula I-2 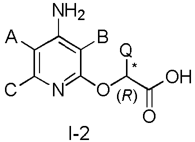 or a compound of formula I-1-3 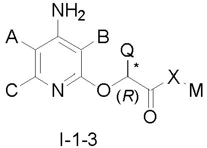 with a corresponding halide;
wherein, the halide is preferably chloride or bromide; the reaction is carried out in the presence of a base and a solvent, wherein the base is one or more selected from the group consisting of sodium hydroxide, potassium hydroxide, sodium carbonate, potassium carbonate, sodium bicarbonate and cesium carbonate; the solvent is one or more selected from the group consisting of THF, 1,4-dioxane, toluene, 1,2-dichloroethane, ethyl acetate, acetonitrile, DMF, acetone, dichloromethane and chloroform; a catalyst, preferably DMAP, is optionally added during the reaction.

The salt is an agrochemically acceptable salt, which is preferably prepared by reacting the R-pyridyloxycarboxylic acid compound of the present invention with a chemically acceptable basic compound. The aforesaid agrochemically acceptable salt can be easily separated and can be purified by conventional separation methods such as solvent extraction, dilution, recrystallization, column chromatography, and preparative thin layer chromatography.

The active ingredient A to the active ingredient B is in a weight ratio of 1:30~100:1. In some embodiments, the active ingredient A to the active ingredient B is in a weight ratio of 1:20~100:1 or 1:20~50:1, or 1:20~30:1 or 1:20~20:1, or 1:10~10:1 or 1:8~8:1, or 1:5~5:1, 1:1~2:1 or 1:1~1:2.

In some embodiments, the active ingredients A and B together account for 1-95%, preferably 10-80%, of the total weight of the herbicidal composition.

The herbicidal composition may comprise a conventional adjuvant, the conventional adjuvant comprises, for example, a carrier and/or a surfactant.

The term "carrier" herein refers to an organic or inorganic, natural or synthetic substance, which facilitates the application of the active ingredients. In general, the carrier is inert and must be agriculturally acceptable, especially is acceptable to a plant to be treated. The carrier may be a solid, such as clay, a natural or synthetic silicate, silica, a resin, a wax, a solid fertilizer and so on; or a liquid such as water, an alcohol, a ketone, a petroleum fraction, an aromatic or paraffinic hydrocarbon, a chlorohydrocarbon, liquefied gas and so on.

The surfactant, which may be ionic or non-ionic, can include an emulsifier, a dispersant or a wetting agent. Examples which may be mentioned are a salt of polyacrylic acid, a salt of lignosulfonic acid, a salt of phenolsulfonic acid or of naphthalenesulfonic acid, a polymer of ethylene oxide with an aliphatic alcohol or with an aliphatic acid or with an aliphatic amine or with a substituted phenol (in particular, an alkylphenol or an arylphenol), a sulfosuccinate, a taurine derivative (especially an alkyl taurate) and a phosphoric ester of an alcohol or of a polyhydroxyethylated phenol, an alkyl sulfonate, an alkylaryl sulfonate, an alkyl sulfate, a laurylether sulfate, a fatty alcohol sulfate, a sulfated hexadecanol, heptadecanol and octadecanol and a sulfated fatty alcohol polyglycol ether, and further include a condensate of naphthalene or naphthalenesulfonic acid with phenol and formaldehyde, polyoxyethylene octylphenyl ether, ethoxylated isooctylphenol, octylphenol or nonylphenol, a polyethylene glycol alkylphenyl ether, a polyethylene glycol tributylphenyl ether, a polyethylene glycol tristearylphenyl ether, a alkylaryl polyether alcohol, an alcohol and fatty alcohol/ethylene oxide condensate, ethoxylated castor oil, a polyoxyethylene alkyl ether, an ethoxylated polyoxypropylene, a lauryl alcohol polyglycol ether acetal, a sorbitol ester, a lignin sulfite waste liquid, a protein, a denatured protein, a polysaccharide (e.g., methylcellulose), a hydrophobic modified starch, a polyvinyl alcohol, a polycarboxylate, a polyalkoxylate, a polyvinylamine, a polyvinylpyrrolidone, and a copolymer thereof. At least one surfactant may be required to facilitate dispersion of the active ingredient in water and proper application thereof to a plant.

The composition can also comprise various other components, such as a protective colloid, an adhesive, a thickener, a thixotropic agent, a penetrant, a stabilizer, a chelating agent, a dye, a colorant or a polymer.

In addition, the composition which can be combined with the active compounds are, for example, known active compounds as described in for example World Herbicide New Product Technology Handbook, China Agricultural Science and Farming Techniques Press, 2010.9 and in the literature cited therein. For example the following active compounds may be mentioned as herbicides (note: the compounds are either named by the "common name" in accordance with the International Organization for Standardization (ISO) or by the chemical names, if appropriate together with a customary code number): acetochlor, butachlor, alachlor, propisochlor, metolachlor, s-metolachlor, pretilachlor, propachlor, ethachlor, napropamide, R-left handed napropamide, propanil, mefenacet, diphenamid, diflufenican, ethaprochlor, beflubutamid, bromobutide, dimethenamid, dimethenamid-P, etobenzanid, flufenacet, thenylchlor, metazachlor, isoxaben, flamprop-M-methyl, flamprop-M-propyl, allidochlor, pethoxamid, chloranocryl, cyprazine, mefluidide, monalide, delachlor, prynachlor, terbuchlor, xylachlor, dimethachlor, cisanilide, trimexachlor, clomeprop, propyzamide, pentanochlor, carbetamide, benzoylprop-ethyl, cyprazole, butenachlor, tebutam, benzipram, mogrton, dichlofluanid, naproanilide, diethatyl-ethyl, naptalam, flufenacet, benzadox, chlorthiamid, chlorophthalimide, isocarbamide, picolinafen, atrazine, simazine, prometryn, cyanatryn, simetryn, ametryn, propazine, dipropetryn, SSH-108, terbutryn, terbuthylazine, triaziflam, cyprazine, proglinazine, trietazine, prometon, simetone, aziprotryne, desmetryn, dimethametryn, procyazine, mesoprazine, sebuthylazine, secbumeton, terbumeton, methoprotryne, cyanatryn, ipazine, chlorazine, atraton, pendimethalin, eglinazine, cyanuric acid, indaziflam, chlorsulfuron, metsulfuron-methyl, bensulfuron methyl, chlorimuron-ethyl, tribenuron-methyl, thifensulfuron-methyl, pyrazosulfuron-ethyl, mesosulfuron, iodosulfuron-methyl sodium, foramsulfuron, cinosulfuron, triasulfuron, sulfometuron methyl, nicosulfuron, ethametsulfuron-methyl, amidosulfuron, ethoxysulfuron, cyclosulfamuron, rimsulfuron, azimsulfuron, flazasulfuron, monosulfuron, monosulfuron-ester, flucarbazone-sodium, flupyrsulfuron-methyl, halosulfuron-methyl, oxasulfuron, imazosulfuron, primisulfuron, propoxycarbazone, prosulfuron, sulfosulfuron, trifloxysulfuron, triflusulfuron-methyl, tritosulfuron, sodium metsulfuron methyl, flucetosulfuron, HNPC-C, orthosulfamuron, propyrisulfuron, metazosulfuron, acifluorfen, fomesafen, lactofen, fluoroglycofen, oxyfluorfen, chlornitrofen, aclonifen, ethoxyfen-ethyl, bifenox, nitrofluorfen, chlomethoxyfen, fluorodifen, fluoronitrofen, furyloxyfen, nitrofen, TOPE, DMNP, PPG1013, AKH-7088, halosafen, chlortoluron, isoproturon, linuron, diuron, dymron, fluometuron, benzthiazuron, methabenzthiazuron, cumyluron, ethidimuron, isouron, tebuthiuron, buturon, chlorbromuron, methyldymron, phenobenzuron, SK-85, metobromuron, metoxuron, afesin, monuron, siduron, fenuron, fluothiuron, neburon, chloroxuron, noruron, isonoruron, 3-cyclooctyl-1, thiazfluron, tebuthiuron, difenoxuron, parafluron, methylamine tribunil, karbutilate, trimeturon, dimefuron, monisouron, anisuron, methiuron, chloreturon, tetrafluron, phenmedipham, phenmedipham-ethyl, desmedipham, asulam, terbucarb, barban, propham, chlorpropham, rowmate, swep, chlorbufam, carboxazole, chlorprocarb, fenasulam, BCPC, CPPC, carbasulam, butylate, benthiocarb, vernolate, molinate, triallate, dimepiperate, esprocarb, pyributicarb, cycloate, avadex, EPTC, ethiolate, orbencarb, pebulate, prosulfocarb, tiocarbazil, CDEC, dimexano, isopolinate, methiobencarb, 2,4-D butyl ester, MCPA-Na, 2,4-D isooctyl ester, MCPA isooctyl ester, 2,4-D sodium salt, 2,4-D dimethylamine salt, MCPA-thioethyl, MCPA, 2,4-D propionic acid, high 2,4-D propionic acid salt, 2,4-D butyric acid, MCPA propionic acid, MCPA propionic acid salt, MCPA butyric acid, 2,4,5-D, 2,4,5-D propionic acid, 2,4,5-D butyric acid, MCPA amine salt, dicamba, erbon, chlorfenac, saison, TBA, chloramben, methoxy-TBA, diclofop-methyl, fluazifop-butyl, fluazifop-p-butyl, haloxyfop-methyl, haloxyfop-P, quizalofop-ethyl, quizalofop-p-ethyl, fenoxaprop-ethy, fenoxaprop-p-ethyl, propaquizafop, cyhalofop-butyl, metamifop, clodinafop-propargyl, fenthiaprop-ethyl, chloroazifop-propynyl, poppenate-methyl, trifopsime, isoxapyrifop, paraquat, diquat, oryzalin, ethalfluralin, isopropalin, nitralin, profluralin, prodinamine, benfluralin, fluchloraline, dinitramina, dipropalin, chlornidine, methalpropalin, dinoprop, glyphosate, anilofos, glufosinate ammonium, amiprophos-methyl, sulphosate, piperophos, bialaphos-sodium, bensulide, butamifos, phocarb, 2,4-DEP, H-9201, zytron, imazapyr, imazethapyr, imazaquin, imazamox, imazamox ammonium salt, imazapic, imazamethabenz-methyl, fluroxypyr, fluroxypyr isooctyl ester, clopyralid, picloram, trichlopyr, dithiopyr, haloxydine, 3,5,6-trichloro-2-pyridinol, thiazopyr, fluridone, aminopyralid, diflufenzopyr, triclopyr-butotyl, Cliodinate, sethoxydim, clethodim, cycloxydim, alloxydim, clefoxydim, butroxydim, tralkoxydim, tepraloxydim, buthidazole, metribuzin, hexazinone, metamitron, ethiozin, ametridione, amibuzin, bromoxynil, bromoxynil octanoate, ioxynil octanoate, ioxynil, dichlobenil, diphenatrile, pyraclonil, chloroxynil, iodobonil, flumetsulam, florasulam, penoxsulam, metosulam, cloransulam-methyl, diclosulam, pyroxsulam, benfuresate, bispyribac-sodium, pyribenzoxim, pyriftalid, pyriminobac-methyl, pyrithiobac-sodium, benzobicylon, mesotrione, sulcotrione, tembotrione, tefuryltrione, bicyclopyrone, ketodpiradox, isoxaflutole, clomazone, fenoxasulfone, methiozolin, fluazolate, pyraflufen-ethyl, pyrazolynate, difenzoquat, pyrazoxyfen, benzofenap, nipyraclofen, pyrasulfotole, topramezone, pyroxasulfone, cafenstrole, flupoxam, aminotriazole, amicarbazone, azafenidin, carfentrazone-ethyl, sulfentrazone, bencarbazone, benzfendizone, butafenacil, bromacil, isocil, lenacil, terbacil, flupropacil, cinidon-ethyl, flumiclorac-pentyl, flumioxazin, propyzamide, MK-129, flumezin, pentachlorophenol, dinoseb, dinoterb, dinoterb acetate, dinosam, DNOC, chloronitrophene, medinoterb acetate, dinofenate, oxadiargyl, oxadiazon, pentoxazone, Flufenacet, fluthiacet-methyl, fentrazamide, flufenpyr-ethyl, pyrazon, brompyrazon, metflurazon, kusakira, dimidazon, oxapyrazon, norflurazon, pyridafol, quinclorac, quinmerac, bentazone, pyridate, oxaziclomefone, benazolin, clomazone, cinmethylin, ZJ0702, pyribambenz-propyl, indanofan, sodium chlorate, dalapon, trichloroacetic acid, monochloroacetic acid, hexachloroacetone, flupropanate, cyperquat, bromofenoxim, epronaz, methazole, flurtamone, benfuresate, ethofumesate, tioclorim, chlorthal, fluorochloridone, tavron, acrolein, bentranil, tridiphane, chlorfenpropmethyl, thidiarizonaimin, phenisopham, busoxinone, methoxyphenone, saflufenacil, clacyfos, chloropon, alorac, diethamquat, etnipromid, iprymidam, ipfencarbazone, thiencarbazone-methyl, pyrimisulfan, chlorflurazole, tripropindan, sulglycapin, prosulfalin, cambendichlor, aminocyclopyrachlor, rodethanil, benoxacor, fenclorim, flurazole, fenchlorazole-ethyl, cloquintocet-mexyl, oxabetrinil, MG/91, cyometrinil, DKA-24, mefenpyr-diethyl, furilazole, fluxofenim, isoxadifen-ethyl, dichlormid, halauxifen-methyl, DOW florpyrauxifen, UBH-509, D489, LS 82-556, KPP-300, NC-324, NC-330, KH-218, DPX-N8189, SC-0744, DOWCO535, DK-8910, V-53482, PP-600, MBH-001, KIH-9201, ET-751, KIH-6127 and KIH-2023.

The herbicidal composition may further comprise one or more safeners, which is one or more compounds selected from,
a) Compounds of the dichlorophenylpyrazoline-3-carboxylic acid (S1) type, preferably compounds such as ethyl l-(2,4-dichlorophenyl)-5-(ethoxycarbonyl)-5-methyl-2-pyrazoline-3-carboxylate (Sl-1, mefenpyr-diethyl, PM, pp.594-595), and related compounds as they are described for example in WO 91/07874 and PM (pp.594-595).
b) Dichlorophenylpyrazolecarboxylic acid derivatives, preferably compounds such as ethyl 1 - (2,4-dichlorophenyl)-5-methylpyrazole-3-carboxylate (S1-2), ethyl 1-(2,4-dichlorophenyl)-5 - isopropylpyrazole-3-carboxylate(Sl-3), ethyl l-(2,4-dichlorophenyl)-5-(l,l-dimethyl-ethyl) pyrazole - 3-carboxylate (S1-4), ethyl-1-(2,4-dichlorophenyl)-5-phenylpyrazole-3-carboxylate (S1-5) and related compounds as are described in EP-A-333 131 and EP-A-269 806.
c) Compounds of the triazolecarboxylic acid (S1) type, preferably compounds such as fenchlorazole, i.e. ethyl 1-(2,4-dichlorophenyl)-5-trichloromethyl-(1H)-1,2,4-triazole-3-carboxylate (S1-6) and related compounds (see EP-A-174 562 and EP-A-346 620).
d) Compounds of the 5-benzyl- or 5-phenyl-2-isoxazoline-3-carboxylic acid type or of the 5,5-diphenyl-2-isoxazoline-3-carboxylic acid type, preferably compounds such as ethyl 5-(2,4-dichlorobenzyl)-2- isoxazoline-3 -carboxylate (Sl-7) or ethyl 5-phenyl-2-isoxazoline-3- carboxylate (Sl-8) and related compounds as are described in WO 91/08202, or of ethyl 5,5-diphenyl-2-isoxazoline-3-carboxylate (Sl-9, isoxadifen-ethyl) or n-propyl 5,5-diphenyl-2- isoxazoline-3-carboxylate(Sl-10) or ethyl 5-(4-fluorophenyl)-5-phenyl-2-isoxazoline-3- carboxylate (Sl-11), as are described in patent application (WO-A-95/07897).
e) Compounds of the 8-quinoline oxyacetic acid (S2) type, preferably 1-methylhex-l-yl (5-chloro-8-quinolinoxy)acetate(S2-1, cloquintocet-mexyl, e.g. PM (pp.195-196), (1,3-dimethylbut -l-yl) (5-chloro-8-quinolinoxy)acetate(S2-2), 4-allyloxybutyl (5-chloro-8- quinolinoxy) acetate (S2-3), 1-allyloxyprop-2-yl(5-chloro-8-quinolinoxy)acetate(S2-4), ethyl (5-chloro-8-quinolinoxy) acetate (S2-5), methyl (5-chloro-8-quinolinoxy)acetate (S2-6), allyl (5-chloro-8-quinolinoxy)acetate (S2-7),2- (2-propylideneiminooxy)- 1 -ethyl (5-chloro-8-quinolinoxy)acetate (S2-8), 2-oxoprop-l-yl (5-chloro-8-quinolinoxy)acetate (S2-9) and related compounds as are described in EP-A-86750, EP-A-94349 and EP-A-191736 or EP-A-0492366.
f) Compounds of the (5-chloro-8-quinolinoxy)malonic acid type, preferably compounds such as diethyl (5-chloro-8-quinolinoxy)malonate, diallyl (5-chloro-8-quinolinoxy)malonate, methyl ethyl (5-chloro-8-quinolinoxy)-malonate and related compounds as are described in EP-A-0582 198.
g) Active compounds of the phenoxyacetic acids, phenoxypropionic acids or aromatic carboxylic acids type, such as, for example, 2,4-dichlorophenoxyacetic acid (and esters) (2,4-D), 4-chloro-2-methylphenoxypropionic esters (mecoprop), MCPA or 3,6-dichloro-2-methoxybenzoic acid (and esters) (dicamba).
h) active compounds of the pyrimidine type, such as, for example, "fenclorim" (PM, pp.386-387) (= 4,6- dichloro-2-phenylpyrimidine).
i) active compounds of the dichloroacetamide type, which are frequently used as pre-emergence safeners (soil-acting safeners) such as, for example, "dichloromid" (PM, pp. 270-271) (=N,N-diallyl-2,2-dichloroacetamide),"AR-29148"(=3-dichloroacetyl-2,2,5-trimethyl-l,3-oxazolidone by Stauffer),"benoxacor"(PM, pp.74-75) (=4-dichloroacetyl-3,4-dihydro-3-methyl-2H-l,4-benzoxazine), "APPG-1292" (= N-allyl-N[(l,3-dioxolan-2-yl)-methyl]dichloroacetamide by PPG Industries),"ADK-24" (=N-allyl-N-[(allylaminocarbonyl)-methyl]-dichloroacetamide by Sagro-Chem), "AAD-67" or "AMON 4660" (=3-dichloroaceryl-l-oxa-3-aza-spiro[4,5]decane by Nirrokemia or Monsanto), "diclonon" or "ABAS145138" or "ALAB145138" (= (= 3-dichloroacetyl -2,5,5-trimethyl-l,3- diazabicyclo[4.3.0]nonane by BASF) and"furilazol" or "AMON 13900" (see PM, 482-483) (= (RS)-3-dichloroacetyl-5-(2-furyl)-2,2- dimethyloxazoli done) .
j) active compounds of the dichloroacetone derivatives type, such as, for example,"AMG 191" (CAS Reg. No. 96420-72-3) (= 2-dichloromethyl-2-methyl-l,3-dioxolane by Nitrokemia).
k) active compounds of the oxyimino compounds type which are known as seed-dressing materials such as, for example, "oxabetrinil" (PM, p.689) (=(Z)-l,3-dioxolan-2- ylmethoxyimino (phenyl)acetonitrile), which is known as safener in seed dressing to prevent metolachlor damage, "fluxofenim" (PM, pp. 467-468) (= l-(4-chlorophenyl)-2,2,2-trifluoro -l-ethanone O-(l,3-dioxolan - 2- ylmethyl)-oxime, which is known as safener in seed dressing to prevent metolachlor damage, and "cyometrinil" or "A-CGA-43089" (PM, p. 983) (= (Z)-cyanomethoxyimino(phenyl)acetonitrile), which is known as safener in seed dressing to prevent metolachlor damage.
l) active compounds of the thiazolecarboxylic esters type, which are known as seed-dressing materials, such as, for example, "flurazol" (PM, pp. 450-451) (= benzyl 2-chloro-4-trifluoromethyl - l,3-thiazole-5-carboxylate), which is known as safener in seed dressing to prevent alachlor and metolachlor damage.
m) active compounds of the naphthalenedicarboxylic acid derivatives type which are known as seed- dressing agents, such as, for example,"naphthalic anhydride" (PM, pp. 1009-1010) (= 1,8 - naphthalenedicarboxylic anhydride), which is known as safener for maize in seed dressing to prevent thiocarbamate herbicide damage.
n) active compounds of the chromaneacetic acid derivatives type, such as, for example,"ACL 304415" (CAS Reg. No. 31541-57-8) (=2-84-carboxychroman-4-yl)acetic acid by American Cyanamid).
o) active compounds which, in addition to a herbicidal action against harmful plants, also have a safener action on crop plants, such as, for example, "dimepiperate" or "AMY-93" (PM, pp. 302-303) (= S-l -methyl- 1-phenylethyl piperidine-1- carbothioate),"daimuron" or "ASK 23" (PM, p. 247)(=1-(1-methyl-1-phenylethyl)-3-p-tolylurea),"cumyluron"="AJC-940"(=3-(2-chlorophenyl methyl) -l-(l -methyl- 1 -phenyl- ethyl)urea, see JP-A- 60087254),"methoxyphenon" or "ANK 049" (=3,3'-dimethyl-4-methoxy-benzophenone), "CSB"(=l-bromo-4- (chloromethylsulfonyl) benzene) (CAS Reg. No. 54091-06-4 by Kumiai).

In a preferred embodiment, the safener is one or more compounds selected from, for example, isoxadifen-ethyl (CAS NO.: 163520-33-0), cyprosulfamide (CAS NO.: 221667-31-8), mefenpyr-diethyl (CAS NO.: 135590-91-9), cloquintocet-mexyl (CAS NO.: 99607-70-2), gibberellic acid (CAS NO.: 77-06-5), furilazole (CAS NO.: 121776-33-8), metcamifen (CAS NO.: 129531-12-0).

In the context of the present specification, if an abbreviation of a generic name of an active compound is used, it includes in each case all customary derivatives, such as esters and salts, as well as isomers, in particular optical isomers, especially one or more commercially available forms. If the generic name denotes an ester or a salt, it also includes in each case all other conventional derivatives, such as other esters and salts, free acids and neutral compounds, as well as isomers, in particular optical isomers, especially one or more commercially available forms. The chemical name given to a compound means at least one compound encompassed by the generic name, and generally the preferred compound. In the case of sulfonamides such as sulfonylurea, salts also include salts formed by the exchange of cations with hydrogen atoms in the sulfonamide group. For example, 2-methyl-4-chloro derivatives include but are not limited to: 2-methyl-4-chloro sodium salt, -potassium salt, - dimethylammonium salt, -isopropylamine salt, etc., as well as 2-methyl-4-chloro methyl ester, -ethyl ester, -isooctyl ester, -thioethyl, etc.; 2,4-D derivatives include but are not limited to: 2,4- D salt such as sodium salt, potassium salt, dimethylammonium salt, triethanolammonium salt, isopropylamine salt, choline, etc., and 2,4-D esters such as methyl ester, ethyl ester, butyl ester, isooctyl ester, etc.

In the context of the present invention, the salts of the compounds are preferably in the form of respective alkali metal salts, alkaline earth metal salts or ammonium salts, preferably in the form of respective alkali metal salts, more preferably in the form of respective sodium or potassium salts, most preferably in the form of the respective sodium salt.

The composition of the present invention may be diluted prior to use or used directly by users. The compositon can be prepared through a conventional processing method, that is, the active ingredient(s) is mixed with a liquid solvent or a solid carrier, and then one or more of the surfactants such as a dispersant, a stabilizer, a wetting agent, an adhesive, or a defoaming agent, etc. are added.

The herbicidal composition may be in a form of a formulation which is selected from: a dispersible oil suspension, a water suspension, a suspoemulsion, a wettable powder, an emulsifiable concentrate, a water-dispersible granule (a dry suspension), an aqueous emulsion and a microemulsion.

In short, the composition of the present invention can be mixed with solid and liquid additives conventionally used in formulations of the prior art.As the external conditions change, the amount of active ingredients used is also different. The external conditions are, for example, temperature, humidity, the nature of the herbicide used, etc. It can have a large variation range, for example between 0.001 and 1.0 kg/ha, or more active substances, but preferably between 0.005 and 750 g/ha, especially between 0.005 and 500 g/ha.

In addition, the composition according to the invention can be sprayed to a leaf of a plant to be treated, i.e., the composition of the invention can be applied to a weed, especially to the weed, and particularly to a surface of the weed from where the weed invades or is likely to invade crops.

Further, the present invention also provides use of the herbicidal composition for controlling weeds; and provides a method for controlling unwanted plant growth, which comprises applying the herbicidal composition to plants, plant parts, plants seed or plant growing area; preferably the herbicidal composition being used to selectively control a weed in a useful crop; more preferably, the useful crop is genetically modified crop or a crop treated by gene editing technology.

Compounds used in the compositions of the invention are useful in treating all plants and plant parts. Plant varieties and cultivars can be obtained by conventional propagation and breeding methods or by genetic engineering methods. Genetically modified plants (transgenic plants) are those in which a heterologous gene (transgene) has been stably integrated into the plant's genome. A transgene that is defined by its particular location in the plant genome is called a transformation or transgenic event.

Genetically modified plant cultivars which can be treated according to the invention include those that are resistant against one or more biotic stresses (pests such as nematodes, insects, mites, fungi, etc.) or abiotic stresses (drought, cold temperature, soil salinity, etc.), or that contain other desirable characteristics. Plants can be genetically modified to exhibittraits of, for example, herbicide tolerance, insect-resistance, modified oil profiles or drought tolerance. Useful genetically modified plants containing single gene transformation events or combinations of transformation events are listed in Table 1. Additional information for the genetic modifications listed in Table 1 can be obtained from publicly available databases maintained, for example, by the U.S. Department of Agriculture.

The following abbreviations, T1 through T37, are used in Table 1 or traits. A "-" means the entry is not available.

| Trait | Description | Trait | Description | Trait | Description |
|---|---|---|---|---|---|
| T1 | Glyphosate tolerance | T15 | Cold tolerance | T27 | High tryptophan |
| T2 | High lauric acid oil | T16 | Imidazolinone herb. tol. | T28 | Erect leaves semidwarf |
| T3 | Glufosinate tolerance | T17 | Modified alpha-amylase | T29 | Semidwarf |
| T4 | Phytate breakdown | T18 | Pollination control | T30 | Low iron tolerance |
| T5 | Oxynil tolerance | T19 | 2,4-D tolerance | T31 | Modified oil/fatty acid |
| T6 | Disease resistance | T20 | Increasal lysine | T32 | HPPD tolerance |
| T7 | Insect resistance | T21 | Drought tolerance | T33 | High oil |
| T9 | Modified flower color | T22 | Delayed ripening/senescence | T34 | Aryloxyalkanoate tol. |
| Til | ALS Herbicide Tol. | T23 | Modified product quality | T35 | Mesotrione tolerance |
| T12 | Dicamba Tolerance | T24 | High cellulose | T36 | Reduced nicotine |
| T13 | Anti-allergy | T25 | Modified starch/carbohydrate | T37 | Modified product |
| T14 | Salt tolerance | T26 | Insect & disease resist. | | |

Genetically modified plants are shown in Table 1.

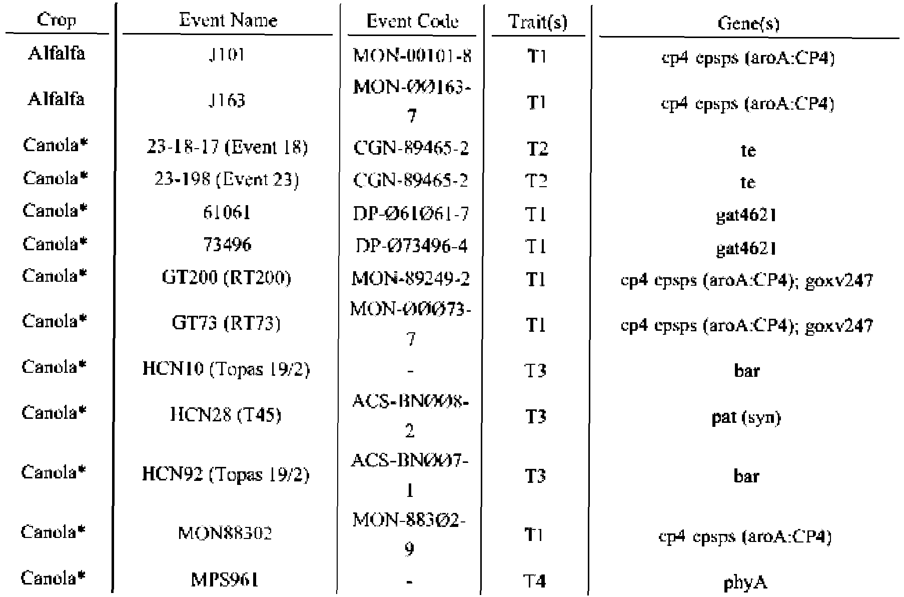

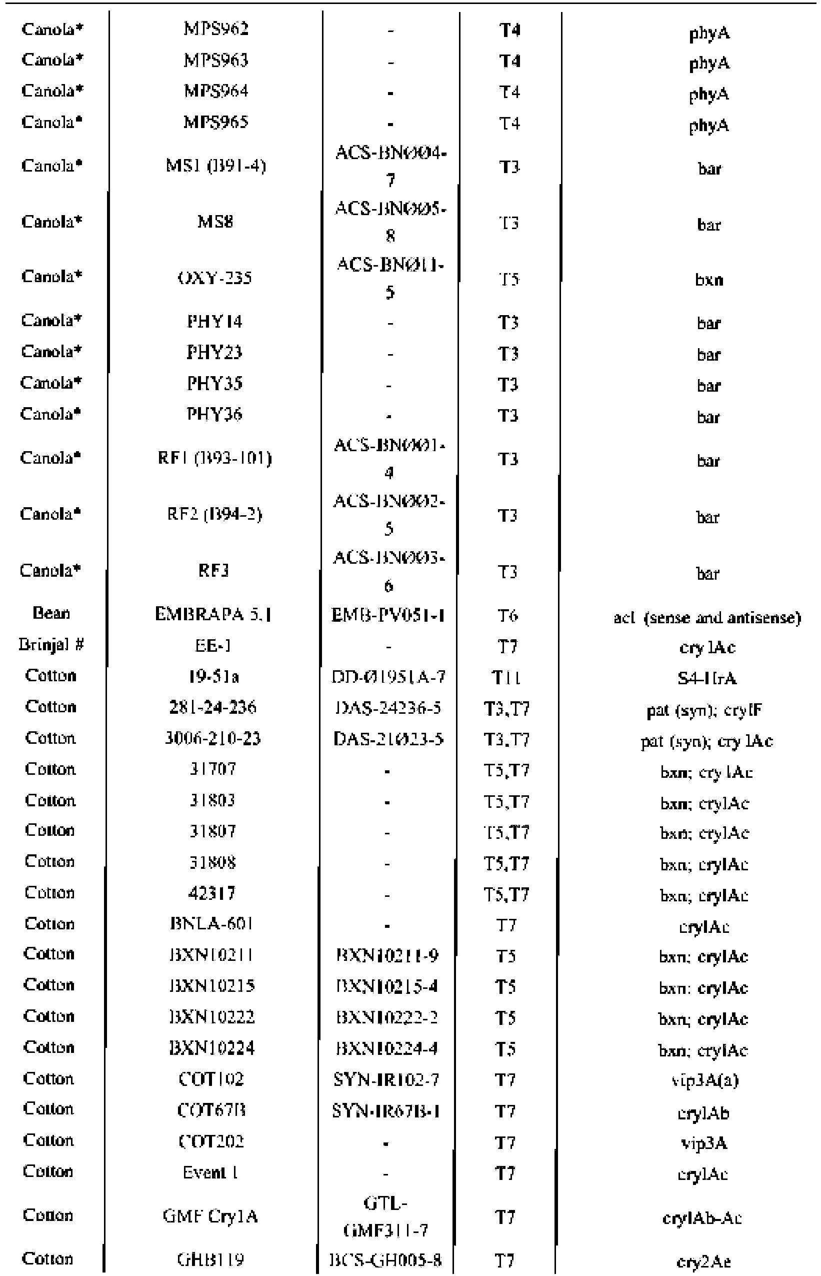

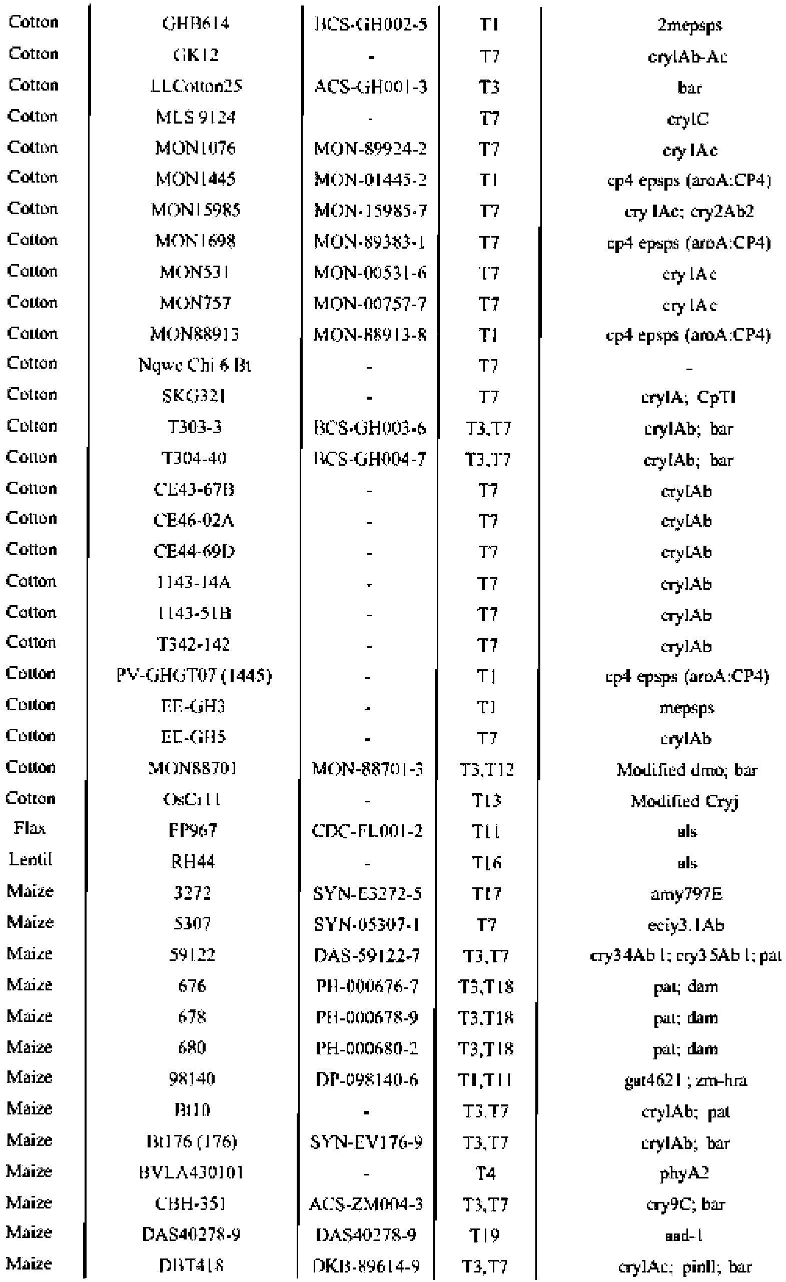

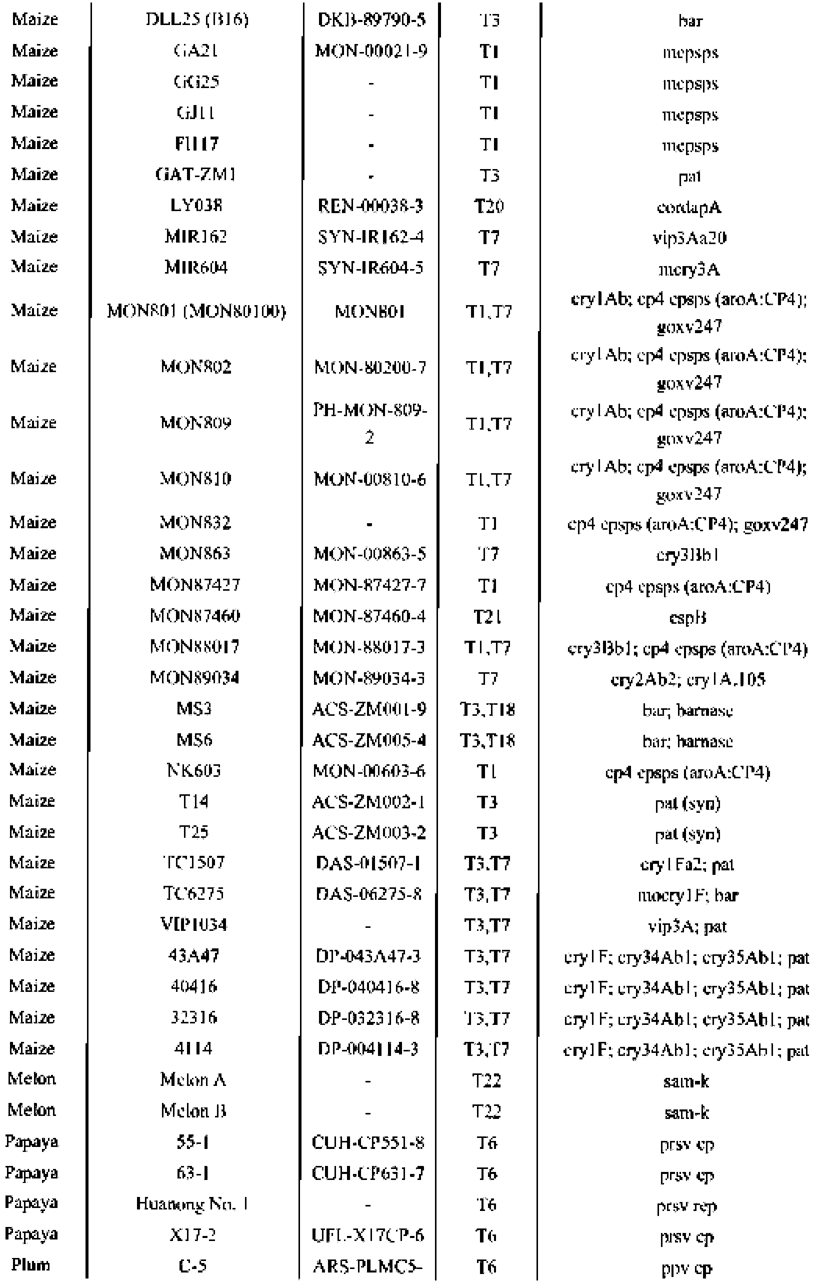

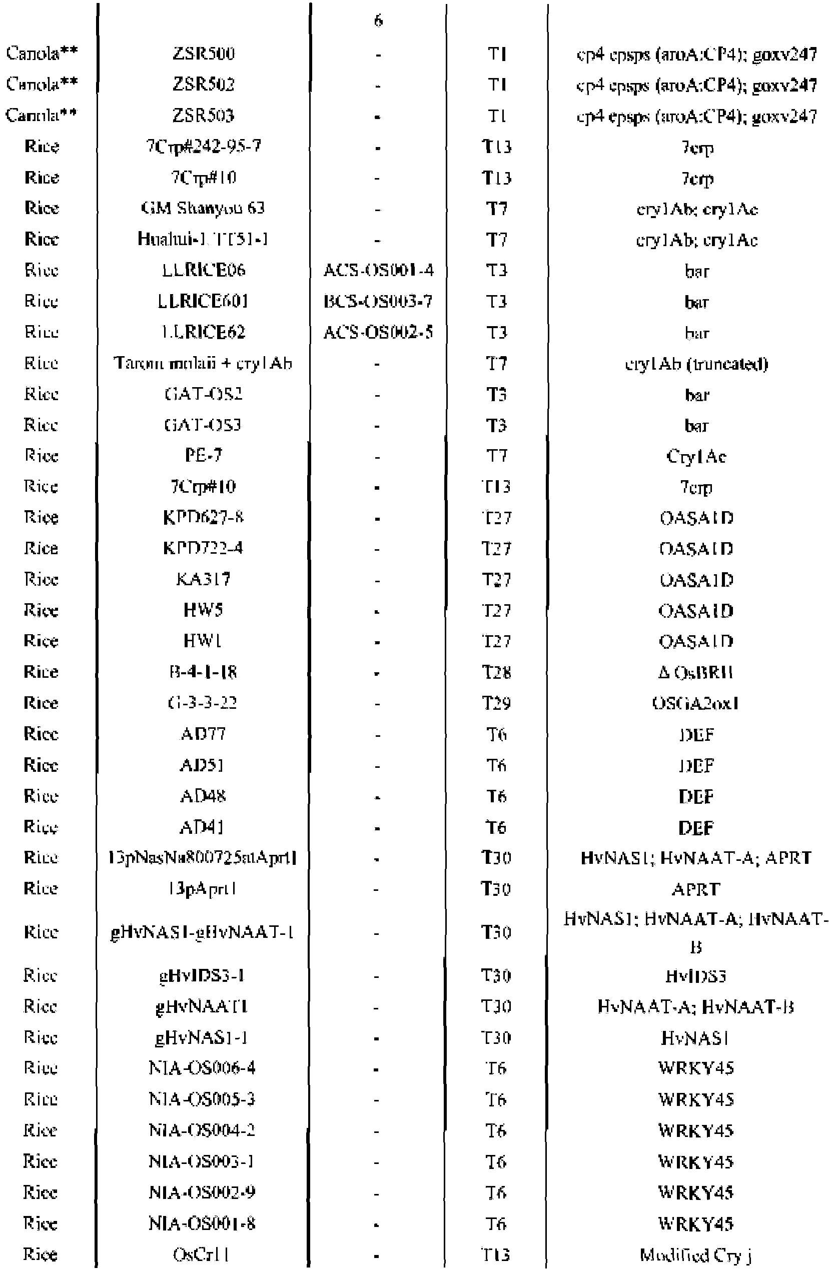

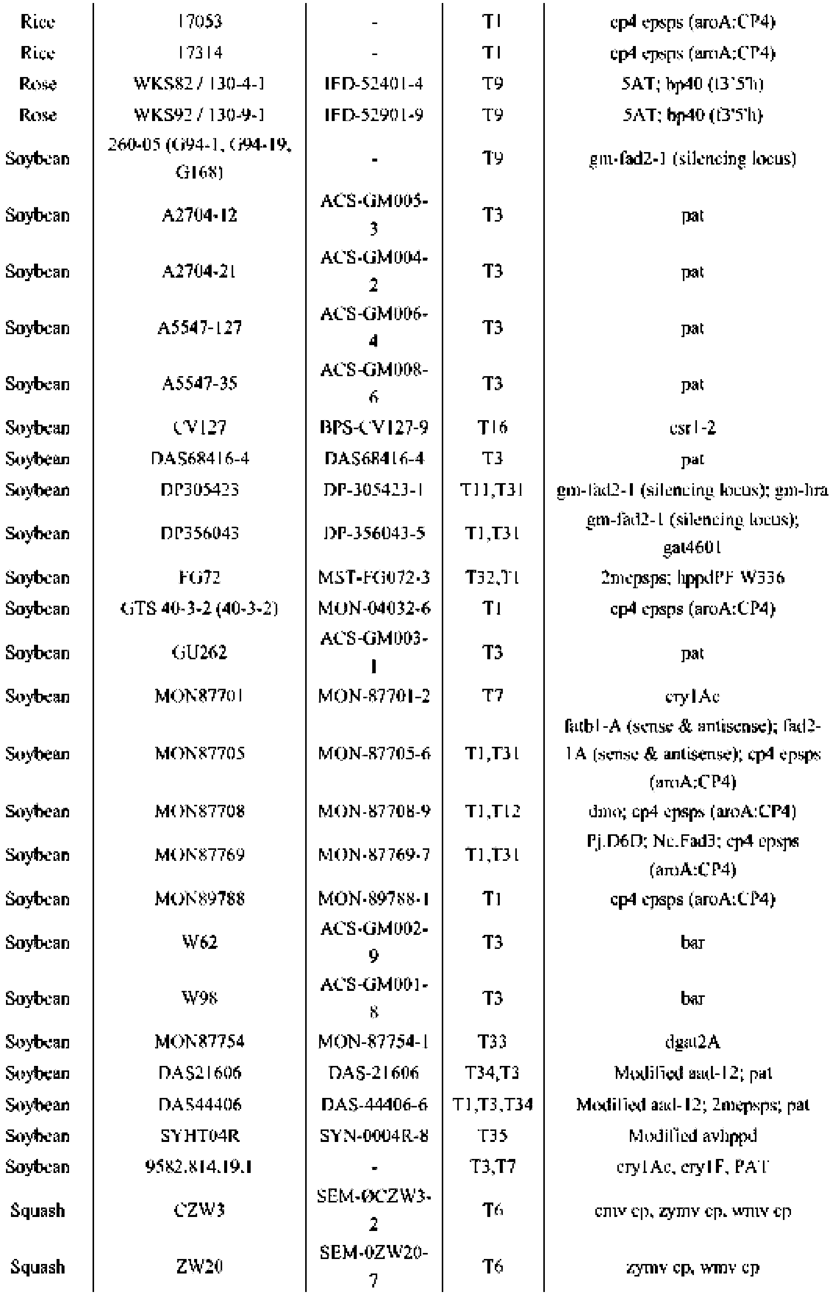

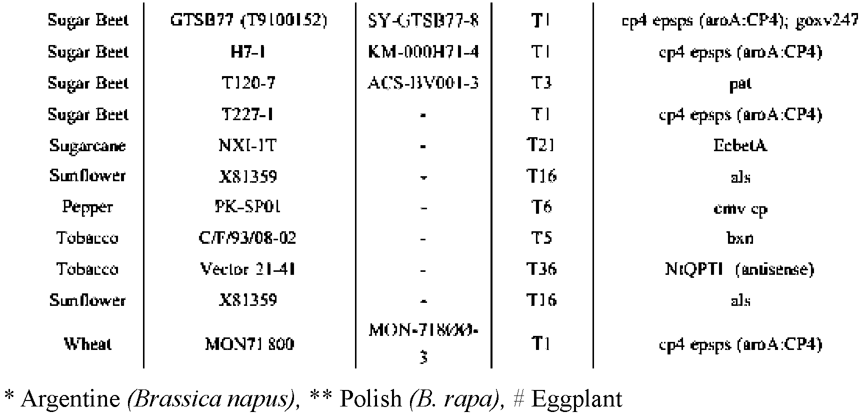

When the herbicidal composition of the present invention is applied, an unexpected synergistic effect is achieved, and the herbicidal activity is greater than a single or the sum of the predicted activity of each herbicide. The synergistic effect is manifested by a reduced application rate, a broader weed control spectrum, and faster and more durable weeding action, all of which are required for weed control practives. In regarding to the described characteristics, the composition is significantly superior to the existing herbicides in the art. It is more environmentally friendly since the composition is used in less amount than that of the existing herbicides in the art.

The synergistic herbicidal composition of the present invention also has following advantages:
(1) The composition of the present invention is environmentally friendly, which is easily degraded in the environment.
(2) The herbicidal composition of the invention is of low cost and convenient in usage, and has great economic and social benefit for popularization and application thereof.

### Specific mode for carrying out the invention

The following examples provided are not intend to limit the invention, but merely to illustrate how the invention is carried out. These examples show particularly significant effectiveness to certain weeds. Examples are as follows.

### A) Examples

### 1 Dispersible oil suspension of 10%penoxsulam·A1 (2+8)

2%penoxsulam+8%A1+5% calcium dodecylbenzen sulfonate +7% polyoxyethylene fatty alcohol ether +4% castor oil polyoxyethylene ether +5%200# solvent oil +2.5% organobentonite +1.5% fumed silica+ methyl oleate as balance.

### 2 Dispersible oil suspension of 12%penoxsulam·A2 (2+10)

2%penoxsulam+10%A2+5% calcium dodecylbenzen sulfonate +7% polyoxyethylene fatty alcohol ether +4% castor oil polyoxyethylene ether +5%200# solvent oil +2.0% organobentonite +1.5% fumed silica+ methyl oleate as balance.

### 3 Dispersible oil suspension of 14%penoxsulam·A4 (2+12)

2%penoxsulam+12%A4+5% calcium dodecylbenzen sulfonate +7% polyoxyethylene fatty alcohol ether +4% castor oil polyoxyethylene ether +5%200# solvent oil +2.0% organobentonite +1.5% fumed silica+ methyl oleate as balance.

### 4 Dispersible oil suspension of 10%bispyribac-sodium·A1 (2+8)

2%bispyribac-sodium+8%A1+6% calcium dodecylbenzen sulfonate +8% polyoxyethylene fatty alcohol ether +4% castor oil polyoxyethylene ether +5%200# solvent oil +2.5% organobentonite+1.5% fumed silica+ methyl oleate as balance.

### 5 Dispersible oil suspension of 12%bispyribac-sodium·A2 (2+10)

2%bispyribac-sodium+10%A2+6% calcium dodecylbenzen sulfonate +8% polyoxyethylene fatty alcohol ether +4% castor oil polyoxyethylene ether +5%200# solvent oil +2.0% organobentonite+1.5% fumed silica + methyl oleate as balance.

### 6 Dispersible oil suspension of 14%bispyribac-sodium·A4 (2+12)

2%bispyribac-sodium+12%A4+6% calcium dodecylbenzen sulfonate +8% polyoxyethylene fatty alcohol ether +4% castor oil polyoxyethylene ether +5%200# solvent oil +2.0% organobentonite+1.5% fumed silica+ methyl oleate as balance.

### 7 Dispersible oil suspension of 10%pyrazosulfuron-ethyl·A1 (2+8)

2%pyrazosulfuron-ethyl+8%A1+1% urea+6% calcium dodecylbenzen sulfonate +8% polyoxyethylene fatty alcohol ether +4% castor oil polyoxyethylene ether +2.5% organobentonite+1.5% fumed silica + methyl oleate as balance.

### 8 Dispersible oil suspension of 12%pyrazosulfuron-ethyl·A2 (2+10)

2%pyrazosulfuron-ethyl+10%A2+1% urea+6% calcium dodecylbenzen sulfonate +8% polyoxyethylene fatty alcohol ether +4% castor oil polyoxyethylene ether +2.0% organobentonite+1.5% fumed silica+ methyl oleate as balance.

### 9 Dispersible oil suspension of 14%pyrazosulfuron-ethyl·A3 (2+12)

2%pyrazosulfuron-ethyl+12%A3+1% urea+6% calcium dodecylbenzen sulfonate +8% polyoxyethylene fatty alcohol ether +4% castor oil polyoxyethylene ether +2.0% organobentonite+1.5% fumed silica + methyl oleate as balance.

### 10 Dispersible oil suspension of 12%nicosulfuron ·A1 (4+8)

4%nicosulfuron +8%A1+1% urea+6% calcium dodecylbenzen sulfonate +8% polyoxyethylene fatty alcohol ether +4% castor oil polyoxyethylene ether +2.2% organobentonite+1.5% fumed silica + methyl oleate as balance.

### 11 Dispersible oil suspension of 14%nicosulfuron ·A2 (4+10)

4%nicosulfuron +10%A2+1% urea+6% calcium dodecylbenzen sulfonate +8% polyoxyethylene fatty alcohol ether +4% castor oil polyoxyethylene ether +2.0% organobentonite+1.5% fumed silica + methyl oleate as balance.

### 12 Dispersible oil suspension of 16%nicosulfuron ·A4 (4+12)

4%nicosulfuron +12%A4+1% urea+6% calcium dodecylbenzen sulfonate +8% polyoxyethylene fatty alcohol ether +4% castor oil polyoxyethylene ether +1.8% organobentonite+1.5% fumed silica + methyl oleate as balance.

### 13 Dispersible oil suspension of 8.3%florasulam·A1 (0.3+8)

0.3%florasulam+8%A1+1% urea+6% calcium dodecylbenzen sulfonate +8%dehydrated sorbitol fatty acid ester polyoxyethylene ether+4% castor oil polyoxyethylene ether +2.5% organobentonite+1.5% fumed silica+ methyl oleate as balance.

### 14 Dispersible oil suspension of 10.3%florasulam·A2 (0.3+10)

0.3%florasulam+10%A2+1% urea+6% calcium dodecylbenzen sulfonate +8%dehydrated sorbitol fatty acid ester polyoxyethylene ether+4% castor oil polyoxyethylene ether +2.2% organobentonite+1.5% fumed silica+ methyl oleate as balance.

### 15 Dispersible oil suspension of 12.3%florasulam·A3 (0.3+12)

0.3%florasulam+12%A3+1% urea+6% calcium dodecylbenzen sulfonate +8%dehydrated sorbitol fatty acid ester polyoxyethylene ether+4% castor oil polyoxyethylene ether +2.0% organobentonite+1.5% fumed silica + methyl oleate as balance.

### 16 Dispersible oil suspension of 10%rimsulfuron·A1 (2+8)

2%rimsulfuron+8%A1+1% urea+6% calcium dodecylbenzen sulfonate +8% polyoxyethylene fatty alcohol ether +4% castor oil polyoxyethylene ether +2.5% organobentonite+1.5% fumed silica + methyl oleate as balance.

### 17 Dispersible oil suspension of 12%rimsulfuron·A2 (2+10)

2%rimsulfuron+10%A2+1% urea+6% calcium dodecylbenzen sulfonate +8% polyoxyethylene fatty alcohol ether +4% castor oil polyoxyethylene ether +2.0% organobentonite+1.5% fumed silica + methyl oleate as balance.

### 18 Dispersible oil suspension of 14%rimsulfuron·A4 (2+12)

2%rimsulfuron+12%A4+1% urea+6% calcium dodecylbenzen sulfonate +8% polyoxyethylene fatty alcohol ether +4% castor oil polyoxyethylene ether +2.0% organobentonite+1.5% fumed silica + methyl oleate as balance.

### 19 Dispersible oil suspension of 14%imazethapyr·A1 (6+8)

6%imazethapyr+8%A1+6% calcium dodecylbenzen sulfonate +8% polyoxyethylene fatty alcohol ether +4% castor oil polyoxyethylene ether +2.0% organobentonite+1.5% fumed silica+ methyl oleate as balance.

### 20 Dispersible oil suspension of 16%imazethapyr·A2 (6+10)

6%imazethapyr+10%A2+6% calcium dodecylbenzen sulfonate +8% polyoxyethylene fatty alcohol ether +4% castor oil polyoxyethylene ether +2.0% organobentonite+1.5% fumed silica+ methyl oleate as balance.

### 21 Dispersible oil suspension of 18%imazethapyr·A4 (6+12)

6%imazethapyr+12%A4+6% calcium dodecylbenzen sulfonate +8% polyoxyethylene fatty alcohol ether +4% castor oil polyoxyethylene ether +1.8% organobentonite+1.5% fumed silica+ methyl oleate as balance.

### 22 Dispersible oil suspension of 18%imazapic·A1 (10+8)

10%imazapic+8%A1+6% calcium dodecylbenzen sulfonate +8% polyoxyethylene fatty alcohol ether +4% castor oil polyoxyethylene ether +2.0% organobentonite+1.5% fumed silica+ methyl oleate as balance.

### 23 Dispersible oil suspension of 20%imazapic·A2 (10+10)

10%imazapic+10%A2+6% calcium dodecylbenzen sulfonate +8% polyoxyethylene fatty alcohol ether +4% castor oil polyoxyethylene ether +2.0% organobentonite+1.5% fumed silica+ methyl oleate as balance.

### 24 Dispersible oil suspension of 22%imazapic·A4 (10+12)

10%imazapic+12%A4+6% calcium dodecylbenzen sulfonate +8% polyoxyethylene fatty alcohol ether +4% castor oil polyoxyethylene ether +1.8% organobentonite+1.5% fumed silica+ methyl oleate as balance.

### 25 Dispersible oil suspension of 12%imazamox·A1 (4+8)

4%imazamox+8%A1+6% calcium dodecylbenzen sulfonate +8% polyoxyethylene fatty alcohol ether +4% castor oil polyoxyethylene ether +2.2% organobentonite+1.5% fumed silica+ methyl oleate as balance.

### 26 Dispersible oil suspension of 14%imazamox·A2 (4+10)

4%imazamox+10%A2+6% calcium dodecylbenzen sulfonate +8% polyoxyethylene fatty alcohol ether +4% castor oil polyoxyethylene ether +2.0% organobentonite+1.5% fumed silica+ methyl oleate as balance.

### 27 Dispersible oil suspension of 16%imazamox·A4 (4+12)

4%imazamox+12%A4+6% calcium dodecylbenzen sulfonate +8% polyoxyethylene fatty alcohol ether +4% castor oil polyoxyethylene ether +1.8% organobentonite+1.5% fumed silica+ methyl oleate as balance.

### 28 Dispersible oil suspension of 18%sulfometuron-methyl·A1 (10+8)

10%sulfometuron-methyl+8%A1+1% urea+6% calcium dodecylbenzen sulfonate +8% polyoxyethylene fatty alcohol ether +4% castor oil polyoxyethylene ether +2.0% organobentonite+1.5% fumed silica+ methyl oleate as balance.

### 29 Dispersible oil suspension of 20%sulfometuron-methyl·A2 (10+10)

10%sulfometuron-methyl+10%A2+1% urea+6% calcium dodecylbenzen sulfonate +8% polyoxyethylene fatty alcohol ether +4% castor oil polyoxyethylene ether +1.8% organobentonite+1.5% fumed silica+ methyl oleate as balance.

### 30 Dispersible oil suspension of 22%sulfometuron-methyl·A4 (10+12)

10%sulfometuron-methyl+12%A4+1% urea+6% calcium dodecylbenzen sulfonate +8% polyoxyethylene fatty alcohol ether +4% castor oil polyoxyethylene ether +1.6% organobentonite+1.5% fumed silica+ methyl oleate as balance.

### 31 Dispersible oil suspension of 10%cloransulam-methyl·A1 (2+8)

2%cloransulam-methyl+8%A1+6% calcium dodecylbenzen sulfonate +8%dehydrated sorbitol fatty acid ester polyoxyethylene ether+4% castor oil polyoxyethylene ether +2.5% organobentonite+1.5% fumed silica+ methyl oleate as balance.

### 32 Dispersible oil suspension of 12%cloransulam-methyl·A2 (2+10)

2%cloransulam-methyl+10%A2+6% calcium dodecylbenzen sulfonate +8%dehydrated sorbitol fatty acid ester polyoxyethylene ether+4% castor oil polyoxyethylene ether +2.2% organobentonite+1.5% fumed silica+ methyl oleate as balance.

### 33 Dispersible oil suspension of 14%cloransulam-methyl-A3 (2+12)

2%cloransulam-methyl+12%A3+6% calcium dodecylbenzen sulfonate +8%dehydrated sorbitol fatty acid ester polyoxyethylene ether+4% castor oil polyoxyethylene ether +2.0% organobentonite+1.5% fumed silica+ methyl oleate as balance.

### 34 Dispersible oil suspension of 18%cyhalofop-butyl·A1 (10+8)

10%cyhalofop-butyl+8%A1+6% calcium dodecylbenzen sulfonate +8%dehydrated sorbitol fatty acid ester polyoxyethylene ether+4% castor oil polyoxyethylene ether +2.0% organobentonite+1.5% fumed silica+15%150# solvent oil + methyl oleate as balance.

### 35 Aqueous emulsion of 20%cyhalofop-butyl·A2 (10+10)

10%cyhalofop-butyl+10%A2+20%150# solvent oil +3.5% phenylethyl phenol polyoxyethylene ether phosphate triethanolamine salt+5% castor oil polyoxyethylene ether +3% ethylene glycol+ deionized water as balance.

### 36 Dispersible oil suspension of 22%cyhalofop-butyl·A4 (10+12)

10%cyhalofop-butyl+12%A4+6% calcium dodecylbenzen sulfonate +8%dehydrated sorbitol fatty acid ester polyoxyethylene ether+4% castor oil polyoxyethylene ether +2.0% organobentonite+1.5% fumed silica+15%150# solvent oil + methyl oleate as balance.

### 37 Dispersible oil suspension of 11%clodinafop-propargyl·A1 (3+8)

3%clodinafop-propargyl+8%A1+6% calcium dodecylbenzen sulfonate +8%dehydrated sorbitol fatty acid ester polyoxyethylene ether+4% castor oil polyoxyethylene ether +2.5% organobentonite+2.0% fumed silica+15%150# solvent oil + methyl oleate as balance.

### 38 Aqueous emulsion of 13%clodinafop-propargyl·A2 (3+10)

3%clodinafop-propargyl+10%A2+15%150# solvent oil +5% cyclohexanone+3.5% phenylethyl phenol polyoxyethylene ether phosphate triethanolamine salt+5% castor oil polyoxyethylene ether +3% ethylene glycol+ deionized water as balance.

### 39 Dispersible oil suspension of 15%clodinafop-propargyl·A3 (3+12)

3%clodinafop-propargyl+12%A3+6% calcium dodecylbenzen sulfonate +8%dehydrated sorbitol fatty acid ester polyoxyethylene ether+4% castor oil polyoxyethylene ether +2.0% organobentonite+1.5% fumed silica+15%150# solvent oil + methyl oleate as balance.

### 40 Water suspension of 13%pinoxaden-A1 (5+8)

5%pinoxaden+8%A1+5%polycarboxylate+2%propylene glycol block polyether+2% polyoxyethylene fatty alcohol ether +0.2% xanthan gum+2.0% magnesium aluminum silicate+3% ethylene glycol+0.1%silicone as a defoaming agent+ deionized water as balance.

### 41 Emulsifiable concentrate of 15%pinoxaden·A2 (5+10)

5%pinoxaden+10%A2+15% tetrahydrofurfuryl alcohol +1% triphenyl phosphate +5% calcium dodecylbenzen sulfonate +3.5%phenylethyl phenol polyoxyethylene ether+5% castor oil polyoxyethylene ether +150# solvent oil as balance.

### 42 Dispersible oil suspension of 17%pinoxaden·A3 (5+12)

5%pinoxaden+12%A3+6% calcium dodecylbenzen sulfonate +8%dehydrated sorbitol fatty acid ester polyoxyethylene ether+4% castor oil polyoxyethylene ether +1.8% organobentonite +1.5% fumed silica+10%150# solvent oil + methyl oleate as balance.

### 43 Dispersible oil suspension of 14%clethodim·A1 (6+8)

6%clethodim+8%A1+6% calcium dodecylbenzen sulfonate +8%dehydrated sorbitol fatty acid ester polyoxyethylene ether+4% castor oil polyoxyethylene ether +2.0% organobentonite+1.5% fumed silica+5%150# solvent oil + methyl oleate as balance.

### 44 Emulsifiable concentrate of 16%clethodim·A2 (6+10)

6%clethodim+10%A2+4% calcium dodecylbenzen sulfonate +4%phenylethyl phenol polyoxyethylene ether+4% polyoxyethylene fatty alcohol ether +150# solvent oil as balance.

### 45 Dispersible oil suspension of 18%clethodim·A4 (6+12)

6%clethodim+12%A4+6% calcium dodecylbenzen sulfonate +9%dehydrated sorbitol fatty acid ester polyoxyethylene ether+4% castor oil polyoxyethylene ether +1.8% organobentonite +1.5% fumed silica+5%150# solvent oil + methyl oleate as balance.

### 46 Dispersible oil suspension of 23%sethoxydim·A1 (15+8)

15%sethoxydim+8%A1+6% calcium dodecylbenzen sulfonate +8%cardanol polyoxyethylene ether+4% castor oil polyoxyethylene ether +2.2% organobentonite+1.5% fumed silica+5%150# solvent oil + methyl oleate as balance.

### 47 Emulsifiable concentrate of 25%sethoxydim·A2 (15+10)

15%sethoxydim+10%A2+4% calcium dodecylbenzen sulfonate +6%phenylethyl phenol polyoxyethylene ether+3% polyoxyethylene fatty alcohol ether +150# solvent oil as balance.

### 48 Dispersible oil suspension of 27%sethoxydim·A4 (15+12)

15%sethoxydim+12%A4+6% calcium dodecylbenzen sulfonate +9%cardanol polyoxyethylene ether+4% castor oil polyoxyethylene ether +1.8% organobentonite+1.5% fumed silica+5%150# solvent oil + methyl oleate as balance.

### 49 Dispersible oil suspension of 12%quizalofop-P-methyl·A1 (4+8)

4%quizalofop-P-methyl+8%A1+6% calcium dodecylbenzen sulfonate +8%cardanol polyoxyethylene ether+4% castor oil polyoxyethylene ether +2.4% organobentonite+1.5% fumed silica+20%150# solvent oil + methyl oleate as balance.

### 50 Aqueous emulsion of 14%quizalofop-P-methyl·A2 (4+10)

4%quizalofop-P-methyl+10%A2+6% cyclohexanone+20%150# solvent oil +3.5% phenylethyl phenol polyoxyethylene ether phosphate triethanolamine salt+4.5% castor oil polyoxyethylene ether +3% ethylene glycol+ deionized water as balance.

### 51 Dispersible oil suspension of 16%quizalofop-P-methyl·A4 (4+12)

4%quizalofop-P-methyl+12%A4+6% calcium dodecylbenzen sulfonate +8%cardanol polyoxyethylene ether+4% castor oil polyoxyethylene ether +2.0% organobentonite+1.5% fumed silica+20%150# solvent oil + methyl oleate as balance.

### 52 Dispersible oil suspension of 12%fluazifop-P-butyl·A1 (4+8)

4%fluazifop-P-butyl+8%A1+6% calcium dodecylbenzen sulfonate +8%cardanol polyoxyethylene ether+4% castor oil polyoxyethylene ether +2.4% organobentonite+1.5% fumed silica+5%150# solvent oil + methyl oleate as balance.

### 53 Aqueous emulsion of 14%fluazifop-P-butyl-A2 (4+10)

4%fluazifop-P-butyl+10%A2+20%150# solvent oil +3.5% phenylethyl phenol polyoxyethylene ether phosphate triethanolamine salt +4.5% castor oil polyoxyethylene ether +3% ethylene glycol + deionized water as balance.

### 54 Dispersible oil suspension of 16%fluazifop-P-butyl·A4 (4+12)

4%fluazifop-P-butyl+12%A4+6% calcium dodecylbenzen sulfonate +8%cardanol polyoxyethylene ether+4% castor oil polyoxyethylene ether +2.0% organobentonite+1.5% fumed silica+5%150# solvent oil + methyl oleate as balance.

### 55 Dispersible oil suspension of 12%haloxyfop-P-methyl·A1 (4+8)

4%haloxyfop-P-methyl+8%A1+6% calcium dodecylbenzen sulfonate +8%cardanol polyoxyethylene ether+4% castor oil polyoxyethylene ether +2.4% organobentonite+1.5% fumed silica+5%150# solvent oil + methyl oleate as balance.

### 56 Aqueous emulsion of 14%haloxyfop-P-methyl·A2 (4+10)

4%haloxyfop-P-methyl+10%A2+20%150# solvent oil +3.5% phenylethyl phenol polyoxyethylene ether phosphate triethanolamine salt+4.5% castor oil polyoxyethylene ether +3% ethylene glycol+ deionized water as balance.

### 57 Dispersible oil suspension of 16%haloxyfop-P-methyl·A4 (4+12)

4%haloxyfop-P-methyl+12%A4+6% calcium dodecylbenzen sulfonate +8%cardanol polyoxyethylene ether+4% castor oil polyoxyethylene ether +2.0% organobentonite+1.5% fumed silica+5%150# solvent oil + methyl oleate as balance.

### 58 Dispersible oil suspension of 29%atrazine·A1 (25+4)

25%atrazine+4%A1+4% calcium dodecylbenzen sulfonate +8%dehydrated sorbitol fatty acid ester polyoxyethylene ether+4% castor oil polyoxyethylene ether +1.0% organobentonite+5%150# solvent oil + methyl oleate as balance.

### 59 Dispersible oil suspension of 30%atrazine·A2 (25+5)

25%atrazine+5%A2+6% calcium dodecylbenzen sulfonate +8%dehydrated sorbitol fatty acid ester polyoxyethylene ether+4% castor oil polyoxyethylene ether +1.0% organobentonite+0.5% fumed silica+5%150# solvent oil + methyl oleate as balance.

### 60 Dispersible oil suspension of 31%atrazine·A4 (25+6)

25%atrazine+6%A4+6% calcium dodecylbenzen sulfonate +8%dehydrated sorbitol fatty acid ester polyoxyethylene ether+4% castor oil polyoxyethylene ether +0.8% organobentonite+5%150# solvent oil + methyl oleate as balance.

### 61 Dispersible oil suspension of 29%isoproturon·A1 (25+4)

25%isoproturon+4%A1+4% calcium dodecylbenzen sulfonate +8%dehydrated sorbitol fatty acid ester polyoxyethylene ether+4% castor oil polyoxyethylene ether +1.0% organobentonite +5%150# solvent oil + methyl oleate as balance.

### 62 Dispersible oil suspension of 30%isoproturon·A2 (25+5)

25%isoproturon+5%A2+6% calcium dodecylbenzen sulfonate +8%dehydrated sorbitol fatty acid ester polyoxyethylene ether+4% castor oil polyoxyethylene ether +1.0% organobentonite +0.5% fumed silica+5%150# solvent oil + methyl oleate as balance.

### 63 Dispersible oil suspension of 31%isoproturon·A3 (25+6)

25%isoproturon+6%A3+6% calcium dodecylbenzen sulfonate +8%dehydrated sorbitol fatty acid ester polyoxyethylene ether+4% castor oil polyoxyethylene ether +0.8% organobentonite +5%150# solvent oil + methyl oleate as balance.

### 64 Dispersible oil suspension of 29%chlorotoluron·A1 (25+4)

25%chlorotoluron+4%A1+4% calcium dodecylbenzen sulfonate +8%dehydrated sorbitol fatty acid ester polyoxyethylene ether+4% castor oil polyoxyethylene ether +1.0% organobentonite +5%150# solvent oil + methyl oleate as balance.

### 65 Dispersible oil suspension of 30%chlorotoluron·A2 (25+5)

25%chlorotoluron+5%A2+6% calcium dodecylbenzen sulfonate +8%dehydrated sorbitol fatty acid ester polyoxyethylene ether+4% castor oil polyoxyethylene ether +1.0% organobentonite +0.5% fumed silica+5%150# solvent oil + methyl oleate as balance.

### 66 Dispersible oil suspension of 31%chlorotoluron·A3 (25+6)

25%chlorotoluron+6%A3+6% calcium dodecylbenzen sulfonate +8%dehydrated sorbitol fatty acid ester polyoxyethylene ether+4% castor oil polyoxyethylene ether +0.8% organobentonite +5%150# solvent oil + methyl oleate as balance.

### 67 Dispersible oil suspension of 34%diuron·A1 (30+4)

30%diuron+4%A1+4% calcium dodecylbenzen sulfonate +8%dehydrated sorbitol fatty acid ester polyoxyethylene ether+4% castor oil polyoxyethylene ether +0.6% organobentonite+5%150# solvent oil + methyl oleate as balance.

### 68 Dispersible oil suspension of 35%diuron·A2 (30+5)

30%diuron+5%A2+6% calcium dodecylbenzen sulfonate +8%dehydrated sorbitol fatty acid ester polyoxyethylene ether+4% castor oil polyoxyethylene ether +0.8% organobentonite+8%150# solvent oil + methyl oleate as balance.

### 69 Dispersible oil suspension of 36%diuron·A4 (30+6)

30%diuron+6%A4+5% calcium dodecylbenzen sulfonate +7%dehydrated sorbitol fatty acid ester polyoxyethylene ether+4% castor oil polyoxyethylene ether +0.4% organobentonite+8%150# solvent oil + methyl oleate as balance.

### 70 Aqueous solution of 48%bentazone·A1 (40+8)

40%bentazone+8%A1+5% NaOH+5% polyoxyethylene fatty alcohol ether +15% C8-10 alkyl glucoside + deionized water as balance.

### 71 Dispersible oil suspension of 25%bentazone·A2 (20+5)

20%bentazone+5%A2+6% calcium dodecylbenzen sulfonate +8%dehydrated sorbitol fatty acid ester polyoxyethylene ether+4% castor oil polyoxyethylene ether +0.8% organobentonite +0.8% fumed silica+8%150# solvent oil + methyl oleate as balance.

### 72 Aqueous solution of 52%bentazone·A3 (40+12)

40%bentazone+12%A3+5.5% NaOH+5% polyoxyethylene fatty alcohol ether +15%C8-10 alkyl glucoside+ deionized water as balance.

### 73 Aqueous solution of 20%bromoxynil·A1 (12+8)

12%bromoxynil+8%A1+4% NaOH+5% polyoxyethylene fatty alcohol ether +15%C8-10 alkyl glucoside+ deionized water as balance.

### 74 Emulsifiable concentrate of 22%bromoxynil·A2 (12+10)

12%bromoxynil+10%A2+10%1-octylpyrrolidin-2-one +3% calcium dodecylbenzen sulfonate +5% polyoxyethylene fatty alcohol ether +4% castor oil polyoxyethylene ether +150# solvent oil as balance.

### 75 Aqueous solution of 24%bromoxynil·A3 (12+12)

12%bromoxynil+12%A3+5% NaOH+5% polyoxyethylene fatty alcohol ether +15%C8-10 alkyl glucoside+ deionized water as balance.

### 76 Dispersible oil suspension of 27%propanil·A1 (25+2)

25%propanil+2%A1+4% calcium dodecylbenzen sulfonate +8%cardanol polyoxyethylene ether+4% castor oil polyoxyethylene ether +0.6% organobentonite+ methyl oleate as balance.

### 77 Emulsifiable concentrate of 27.5%propanil·A2 (25+2.5)

25%propanil+2.5%A2+10%1-octylpyrrolidin-2-one+10%N,N-dimethylcapramide+2% calcium dodecylbenzen sulfonate +10% polyoxyethylene fatty alcohol ether +4% castor oil polyoxyethylene ether +150# solvent oil as balance.

### 78 Dispersible oil suspension of 28%propanil·A4 (25+3)

25%propanil+3%A4+5% calcium dodecylbenzen sulfonate +7%cardanol polyoxyethylene ether+4% castor oil polyoxyethylene ether +0.4% organobentonite+ methyl oleate as balance.

### 79 Dispersible oil suspension of 17%cypyrafluone·A1 (9+8)

9%cypyrafluone+8%A1+4% calcium dodecylbenzen sulfonate +8%cardanol polyoxyethylene ether+4% castor oil polyoxyethylene ether +1.5% organobentonite+1.5% fumed silica+10%150# solvent oil + methyl oleate as balance.

### 80 Dispersible oil suspension of 19%cypyrafluone·A2 (9+10)

9%cypyrafluone+10%A2+4% calcium dodecylbenzen sulfonate +8%cardanol polyoxyethylene ether+4% castor oil polyoxyethylene ether +2.0% organobentonite+2.0% fumed silica+10%150# solvent oil + methyl oleate as balance.

### 81 Dispersible oil suspension of 21%cypyrafluone·A3 (9+12)

9%cypyrafluone+12%A3+4% calcium dodecylbenzen sulfonate +8%cardanol polyoxyethylene ether+4% castor oil polyoxyethylene ether +1.2% organobentonite+1.2% fumed silica+10%150# solvent oil + methyl oleate as balance.

### 82 Dispersible oil suspension of 10%bipyrazone·A1 (2+8)

2%bipyrazone+8%A1+0.4%citricacid+4% calcium dodecylbenzen sulfonate +8%cardanol polyoxyethylene ether+4% castor oil polyoxyethylene ether +1.5% organobentonite +1.5% fumed silica+8%150# solvent oil + methyl oleate as balance.

### 83 Dispersible oil suspension of 12%bipyrazone·A2 (2+10)

2%bipyrazone+10%A2+0.4%citric acid+4% calcium dodecylbenzen sulfonate +8%cardanol polyoxyethylene ether+4% castor oil polyoxyethylene ether +1.5% organobentonite +1.5% fumed silica+8%150# solvent oil + methyl oleate as balance.

### 84 Dispersible oil suspension of 14%bipyrazone·A3 (2+12)

2%bipyrazone+12%A3+0.4%citric acid+4% calcium dodecylbenzen sulfonate +8%cardanol polyoxyethylene ether+4% castor oil polyoxyethylene ether +1.2% organobentonite +1.2% fumed silica+8%150# solvent oil + methyl oleate as balance.

### 85 Dispersible oil suspension of 17%fenpyrazone·A1 (9+8)

9%fenpyrazone+8%A1+4% calcium dodecylbenzen sulfonate +8%cardanol polyoxyethylene ether+4% castor oil polyoxyethylene ether +1.5% organobentonite+1.5% fumed silica+5%150# solvent oil + methyl oleate as balance.

### 86 Dispersible oil suspension of 19%fenpyrazone·A2 (9+10)

9%fenpyrazone+10%A2+4% calcium dodecylbenzen sulfonate +8%cardanol polyoxyethylene ether+4% castor oil polyoxyethylene ether +2.0% organobentonite+2.0% fumed silica+5%150# solvent oil + methyl oleate as balance.

### 87 Dispersible oil suspension of 21%fenpyrazone·A3 (9+12)

9%fenpyrazone+12%A3+4% calcium dodecylbenzen sulfonate +8%cardanol polyoxyethylene ether+4% castor oil polyoxyethylene ether +1.2% organobentonite+1.2% fumed silica+5%150# solvent oil + methyl oleate as balance.

### 88 Dispersible oil suspension of 20%tripyrasulfone·A1 (12+8)

12%tripyrasulfone+8%A1+4% calcium dodecylbenzen sulfonate +8%cardanol polyoxyethylene ether+4% castor oil polyoxyethylene ether +1.5% organobentonite+1.5% fumed silica+5%150# solvent oil + methyl oleate as balance.

### 89 Dispersible oil suspension of 22%tripyrasulfone·A2 (12+10)

12%tripyrasulfone+10%A2+4% calcium dodecylbenzen sulfonate +8%cardanol polyoxyethylene ether+4% castor oil polyoxyethylene ether +2.0% organobentonite+2.0% fumed silica+5%150# solvent oil + methyl oleate as balance.

### 90 Dispersible oil suspension of 24%tripyrasulfone·A4 (12+12)

12%tripyrasulfone+12%A4+4% calcium dodecylbenzen sulfonate +8%cardanol polyoxyethylene ether+4% castor oil polyoxyethylene ether +1.2% organobentonite+1.2% fumed silica+5%150# solvent oil + methyl oleate as balance.

### 91 Dispersible oil suspension of 14%tefuryltrione·A1 (6+8)

6%tefuryltrione+8%A1+4% calcium dodecylbenzen sulfonate +8%cardanol polyoxyethylene ether+4% castor oil polyoxyethylene ether +1.8% organobentonite+1.8% fumed silica+5%150# solvent oil + methyl oleate as balance.

### 92 Dispersible oil suspension of 16%tefuryltrione·A2 (6+10)

6%tefuryltrione+10%A2+4% calcium dodecylbenzen sulfonate +8%cardanol polyoxyethylene ether+4% castor oil polyoxyethylene ether +2.0% organobentonite+2.0% fumed silica+5%150# solvent oil + methyl oleate as balance.

### 93 Dispersible oil suspension of 18%tefuryltrione·A4 (6+12)

6%tefuryltrione+12%A4+4% calcium dodecylbenzen sulfonate +8%cardanol polyoxyethylene ether+4% castor oil polyoxyethylene ether +1.2% organobentonite+1.0% fumed silica+5%150# solvent oil + methyl oleate as balance.

### 94 Dispersible oil suspension of 18%mesotrione·A1 (10+8)

10%mesotrione+8%A1+0.5%citric acid+4% calcium dodecylbenzen sulfonate +8%cardanol polyoxyethylene ether+4% castor oil polyoxyethylene ether +1.8% organobentonite+1.8% fumed silica+5%150# solvent oil + methyl oleate as balance.

### 95 Dispersible oil suspension of 20%mesotrione·A2 (10+10)

10%mesotrione+10%A2+0.5%citric acid+4% calcium dodecylbenzen sulfonate +8%cardanol polyoxyethylene ether+4% castor oil polyoxyethylene ether +2.0% organobentonite+2.0% fumed silica+5%150# solvent oil + methyl oleate as balance.

### 96 Dispersible oil suspension of 22%mesotrione·A3 (10+12)

10%mesotrione+12%A3+0.5%citric acid+4% calcium dodecylbenzen sulfonate +8%cardanol polyoxyethylene ether+4% castor oil polyoxyethylene ether +1.2% organobentonite+1.0% fumed silica+5%150# solvent oil + methyl oleate as balance.

### 97 Dispersible oil suspension of 14%tembotrione·A1 (6+8)

6%tembotrione+8%A1+1%citric acid+4% calcium dodecylbenzen sulfonate +8%cardanol polyoxyethylene ether+4% castor oil polyoxyethylene ether +1.8% organobentonite+1.8% fumed silica+5%150# solvent oil + methyl oleate as balance.

### 98 Dispersible oil suspension of 16%tembotrione·A2 (6+10)

6%tembotrione+10%A2+1%citric acid+4% calcium dodecylbenzen sulfonate +8%cardanol polyoxyethylene ether+4% castor oil polyoxyethylene ether +2.0% organobentonite+2.0% fumed silica+5%150# solvent oil + methyl oleate as balance.

### 99 Dispersible oil suspension of 18%tembotrione·A3 (6+12)

6%tembotrione+12%A3+1%citric acid+4% calcium dodecylbenzen sulfonate +8%cardanol polyoxyethylene ether+4% castor oil polyoxyethylene ether +1.2% organobentonite+1.0% fumed silica+5%150# solvent oil + methyl oleate as balance.

### 100 Dispersible oil suspension of 11%topramezone·A1 (3+8)

3%topramezone+8%A1+0.2%citric acid+4% calcium dodecylbenzen sulfonate +8%cardanol polyoxyethylene ether+4% castor oil polyoxyethylene ether +2.0% organobentonite+2.0% fumed silica+5%150# solvent oil + methyl oleate as balance.

### 101 Dispersible oil suspension of 13%topramezone·A2 (3+10)

3%topramezone+10%A2+0.2%citric acid+4% calcium dodecylbenzen sulfonate +8%cardanol polyoxyethylene ether+4% castor oil polyoxyethylene ether +2.0% organobentonite+2.0% fumed silica+5%150# solvent oil + methyl oleate as balance.

### 102 Dispersible oil suspension of 15%topramezone·A3 (3+12)

3%topramezone+12%A3+0.2%citric acid+4% calcium dodecylbenzen sulfonate +8%cardanol polyoxyethylene ether+4% castor oil polyoxyethylene ether +1.5% organobentonite+1.5% fumed silica+5%150# solvent oil + methyl oleate as balance.

### 103 Dispersible oil suspension of 14%isoxaflutole·A1 (6+8)

6%isoxaflutole+8%A1+0.5%citric acid+4% calcium dodecylbenzen sulfonate +8%cardanol polyoxyethylene ether+4% castor oil polyoxyethylene ether +1.8% organobentonite+1.8% fumed silica+5%150# solvent oil + methyl oleate as balance.

### 104 Dispersible oil suspension of 16%isoxaflutole·A2 (6+10)

6%isoxaflutole+10%A2+0.5%citric acid+4% calcium dodecylbenzen sulfonate +8%cardanol polyoxyethylene ether+4% castor oil polyoxyethylene ether +2.0% organobentonite+2.0% fumed silica+5%150# solvent oil + methyl oleate as balance.

### 105 Dispersible oil suspension of 18%isoxaflutole·A4 (6+12)

6%isoxaflutole+12%A4+0.5%citric acid+4% calcium dodecylbenzen sulfonate +8%cardanol polyoxyethylene ether+4% castor oil polyoxyethylene ether +1.2% organobentonite+1.0% fumed silica+5%150# solvent oil + methyl oleate as balance.

### 106 Dispersible oil suspension of 28%benzobicylon·A1 (20+8)

20%benzobicylon+8%A1+4% calcium dodecylbenzen sulfonate +8%cardanol polyoxyethylene ether+4% castor oil polyoxyethylene ether +1.0% organobentonite+5%150# solvent oil + methyl oleate as balance.

### 107 Dispersible oil suspension of 30%benzobicylon·A2 (20+10)

20%benzobicylon+10%A2+4% calcium dodecylbenzen sulfonate +8%cardanol polyoxyethylene ether+4% castor oil polyoxyethylene ether +1.2% organobentonite+1.2% fumed silica+5%150# solvent oil + methyl oleate as balance.

### 108 Dispersible oil suspension of 32%benzobicylon·A4 (20+12)

20%benzobicylon+12%A4+4% calcium dodecylbenzen sulfonate +8%cardanol polyoxyethylene ether+4% castor oil polyoxyethylene ether+0.5% organobentonite+5%150# solvent oil + methyl oleate as balance.

### 109 Dispersible oil suspension of 18%diflufenican·A1 (10+8)

10%diflufenican+8%A1+4% calcium dodecylbenzen sulfonate +8%cardanol polyoxyethylene ether+4% castor oil polyoxyethylene ether +1.2% organobentonite+1.2% fumed silica+5%150# solvent oil + methyl oleate as balance.

### 110 Dispersible oil suspension of 20%diflufenican·A2 (10+10)

10%diflufenican+10%A2+4% calcium dodecylbenzen sulfonate +8%cardanol polyoxyethylene ether+4% castor oil polyoxyethylene ether +1.5% organobentonite+1.5% fumed silica+5%150# solvent oil + methyl oleate as balance.

### 111 Dispersible oil suspension of 22%diflufenican·A3 (10+12)

10%diflufenican+12%A3+4% calcium dodecylbenzen sulfonate +8%cardanol polyoxyethylene ether+4% castor oil polyoxyethylene ether +0.8% organobentonite+5%150# solvent oil + methyl oleate as balance.

### 112 Dispersible oil suspension of 29%flurochloridone·A1 (25+4)

25%flurochloridone+4%A1+4% calcium dodecylbenzen sulfonate +8%cardanol polyoxyethylene ether+4% castor oil polyoxyethylene ether +2.0% organobentonite+2.0% fumed silica+15%150# solvent oil + methyl oleate as balance.

### 113 Dispersible oil suspension of 60%flurochloridone·A2 (50+10)

50%flurochloridone+10%A2+6% calcium dodecylbenzen sulfonate +8% castor oil polyoxyethylene ether +10% cyclopentanone +150# solvent oil as balance.

### 114 Dispersible oil suspension of 31%flurochloridone·A3 (25+6)

25%flurochloridone+6%A3+4% calcium dodecylbenzen sulfonate +8%cardanol polyoxyethylene ether+4% castor oil polyoxyethylene ether +1.8% organobentonite+1.8% fumed silica+15%150# solvent oil + methyl oleate as balance.

### 115 Dispersible oil suspension of 38%clomazone·A1 (30+8)

30%clomazone+8%A1+5% calcium dodecylbenzen sulfonate +6%cardanol polyoxyethylene ether+4% castor oil polyoxyethylene ether +2.5% organobentonite+2.5% fumed silica+5%150# solvent oil + methyl oleate as balance.

### 116 Emulsifiable concentrate of 40%clomazone·A2 (30+10)

30%clomazone+10%A2+6% calcium dodecylbenzen sulfonate +10% castor oil polyoxyethylene ether +10%ethanol +150# solvent oil as balance.

### 117 Dispersible oil suspension of 42%clomazone·A4 (30+12)

30%clomazone+12%A4+4% calcium dodecylbenzen sulfonate +8%cardanol polyoxyethylene ether+4% castor oil polyoxyethylene ether +2.2% organobentonite+1.8% fumed silica+15%150# solvent oil + methyl oleate as balance.

### 118 Suspoemulsion of 10%carfentrazone-ethyl·A1 (2+8)

2%carfentrazone-ethyl+8%A1+3% phenylethyl phenol polyoxyethylene ether phosphate triethanolamine salt+4%isooctyl alcohol block polyether +3% castor oil polyoxyethylene ether +10%150# solvent oil +0.25% xanthan gum+2.0% magnesium aluminum silicate+2% ethylene glycol+ deionized water as balance.

### 119 Aqueous emulsion of 12%carfentrazone-ethyl·A2 (2+10)

2%carfentrazone-ethyl+10%A2+3% phenylethyl phenol polyoxyethylene ether phosphate triethanolamine salt+5% castor oil polyoxyethylene ether +10%150# solvent oil +3% ethylene glycol+ deionized water as balance.

### 120 Aqueous emulsion of 14%carfentrazone-ethyl·A3 (2+12)

2%carfentrazone-ethyl+12%A3+3% phenylethyl phenol polyoxyethylene ether phosphate triethanolamine salt+5% castor oil polyoxyethylene ether +10%150# solvent oil +0.25% xanthan gum+2% ethylene glycol+ deionized water as balance.

### 121 Aqueous solution of 33%fomesafen·A1 (25+8)

25%fomesafen+8%A1+4% NaOH+5% polyoxyethylene fatty alcohol ether +15%C8-10 alkyl glucoside+ deionized water as balance.

### 122 Microemulsion of 35%fomesafen·A2 (25+10)

25%fomesafen+10%A2+10% cyclohexanone+10%ethanol +6% sodium di-sec-octyl maleate sulfonate+10%C8-10 alkyl glucoside+ deionized water as balance.

### 123 Aqueous solution of 37%fomesafen·A3 (25+12)

25%fomesafen+12%A3+4.5% NaOH+5% polyoxyethylene fatty alcohol ether +15%C8-10 alkyl glucoside+ deionized water as balance.

### 124 Dispersible oil suspension of 9%fluoroglycofen·A1 (1+8)

1%fluoroglycofen+8%A1+4% calcium dodecylbenzen sulfonate +8%cardanol polyoxyethylene ether+4% castor oil polyoxyethylene ether +2.0% organobentonite+2.0% fumed silica+10%150# solvent oil + methyl oleate as balance.

### 125 Aqueous emulsion of 11%fluoroglycofen·A2 (1+10)

1%fluoroglycofen+10%A2+3% phenylethyl phenol polyoxyethylene ether phosphate triethanolamine salt+4% castor oil polyoxyethylene ether +10%150# solvent oil +0.1% xanthan gum+2% ethylene glycol+ deionized water as balance.

### 126 Dispersible oil suspension of 13%fluoroglycofen·A3 (1+12)

1%fluoroglycofen+12%A3+4% calcium dodecylbenzen sulfonate +8%cardanol polyoxyethylene ether+4% castor oil polyoxyethylene ether +2.0% organobentonite+1.5% fumed silica+10%150# solvent oil + methyl oleate as balance.

### 127 Dispersible oil suspension of 20%oxyfluorfen·A1 (12+8)

12%oxyfluorfen+8%A1+4% calcium dodecylbenzen sulfonate +8%cardanol polyoxyethylene ether+4% castor oil polyoxyethylene ether +5% oil-soluble polycarboxylate +1.4% organobentonite+10% soya-bean oil+ methyl oleate as balance.

### 128 Emulsifiable concentrate of 22%oxyfluorfen·A2 (12+10)

12%oxyfluorfen+10%A2+10% cyclopentanone +3% calcium dodecylbenzen sulfonate +4% polyoxyethylene fatty alcohol ether +4% castor oil polyoxyethylene ether +150# solvent oil as balance.

### 129 Dispersible oil suspension of 24%oxyfluorfen·A3 (12+12)

12%oxyfluorfen+12%A3+4% calcium dodecylbenzen sulfonate +8%cardanol polyoxyethylene ether+4% castor oil polyoxyethylene ether +5% oil-soluble polycarboxylate +1.4% organobentonite+10% soya-bean oil+ methyl oleate as balance.

### 130 Dispersible oil suspension of 16%lactofen·A1 (8+8)

8%lactofen+8%A1+4% calcium dodecylbenzen sulfonate +8%cardanol polyoxyethylene ether+4% castor oil polyoxyethylene ether +1.8% organobentonite+1.8% fumed silica+5%150# solvent oil + methyl oleate as balance.

### 131 Emulsifiable concentrate of 18%lactofen·A2 (8+10)

8%lactofen+10%A2+3% calcium dodecylbenzen sulfonate +6% polyoxyethylene fatty alcohol ether +4% castor oil polyoxyethylene ether +150# solvent oil as balance.

### 132 Dispersible oil suspension of 20%lactofen·A3 (8+12)

8%lactofen+12%A3+4% calcium dodecylbenzen sulfonate +8%cardanol polyoxyethylene ether+4% castor oil polyoxyethylene ether +1.6% organobentonite+1.6% fumed silica+10%150# solvent oil + methyl oleate as balance.

### 133 Aqueous solution of 38%acifluorfen-sodium·A1 (30+8)

30%acifluorfen-sodium+8%A1+4.5% NaOH+5% polyoxyethylene fatty alcohol ether +15%C8-10 alkyl glucoside+ deionized water as balance.

### 134 Dispersible oil suspension of 20%acifluorfen-sodium·A2 (15+5)

15%acifluorfen-sodium+5%A2+4% calcium dodecylbenzen sulfonate +8%cardanol polyoxyethylene ether+4% castor oil polyoxyethylene ether +1.6% organobentonite+1.6% fumed silica+10%150# solvent oil + methyl oleate as balance.

### 135 Aqueous solution of 42%acifluorfen-sodium·A3 (30+12)

30%acifluorfen-sodium+12%A3+5% NaOH+5% polyoxyethylene fatty alcohol ether +15%C8-10 alkyl glucoside+ deionized water as balance.

### 136 Dispersible oil suspension of 14%flumioxazin·A1 (6+8)

6%flumioxazin+8%A1+4% calcium dodecylbenzen sulfonate +8%cardanol polyoxyethylene ether+4% castor oil polyoxyethylene ether +1.6% organobentonite+10% soya-bean oil+ methyl oleate as balance.

### 137 Emulsifiable concentrate of 16%flumioxazin·A2 (6+10)

6%flumioxazin+10%A2+15% cyclopentanone +3% calcium dodecylbenzen sulfonate +4% polyoxyethylene fatty alcohol ether +4% castor oil polyoxyethylene ether +150# solvent oil as balance.

### 138 Dispersible oil suspension of 18%flumioxazin·A3 (6+12)

6%flumioxazin+12%A3+4% calcium dodecylbenzen sulfonate +8%cardanol polyoxyethylene ether+4% castor oil polyoxyethylene ether +1.4% organobentonite+10% soya-bean oil+ methyl oleate as balance.

### 139 Dispersible oil suspension of 32%sulfentrazone·A1 (24+8)

24%sulfentrazone+8%A1+4% calcium dodecylbenzen sulfonate +8%cardanol polyoxyethylene ether+4% castor oil polyoxyethylene ether +1.3% organobentonite+10%150# solvent oil + methyl oleate as balance.

### 140 Suspoemulsion of 34%sulfentrazone·A2 (24+10)

24%sulfentrazone+10%A2+8%150# solvent oil +4% phenylethyl phenol polyoxyethylene ether phosphate triethanolamine salt+4% propylene glycol block polyether+4% castor oil polyoxyethylene ether +0.15% xanthan gum+2% ethylene glycol+ deionized water as balance.

### 141 Water suspension of 36%sulfentrazone·A4 (24+12)

24%sulfentrazone+12%A4+4% phenylethyl phenol polyoxyethylene ether phosphate triethanolamine salt+3% naphthalene sulfonate as a dispersant+2% polyoxyethylene fatty alcohol ether +0.15% xanthan gum+1% magnesium aluminum silicate+3% ethylene glycol+deionized water as balance.

### 142 Dispersible oil suspension of 32%saflufenacil·A1 (24+8)

24%saflufenacil+8%A1+4% calcium dodecylbenzen sulfonate +8%cardanol polyoxyethylene ether+4% castor oil polyoxyethylene ether +1.2% organobentonite+1.0% fumed silica+10%150# solvent oil + methyl oleate as balance.

### 143 Suspoemulsion of 34%saflufenacil·A2 (24+10)

24%saflufenacil+10%A2+8%150# solvent oil +4% phenylethyl phenol polyoxyethylene ether phosphate triethanolamine salt+4% propylene glycol block polyether+4% castor oil polyoxyethylene ether +0.12% xanthan gum+2% ethylene glycol+ deionized water as balance.

### 144 Water suspension of 36%saflufenacil·A3 (24+12)

24%saflufenacil+12%A3+4% phenylethyl phenol polyoxyethylene ether phosphate triethanolamine salt+3% naphthalene sulfonate as a dispersant+2% polyoxyethylene fatty alcohol ether +0.15% xanthan gum+1.2% magnesium aluminum silicate+3% ethylene glycol+deionized water as balance.

### 145 Dispersible oil suspension of 24%oxadiazon·A1 (20+4)

20%oxadiazon+4%A1+4% calcium dodecylbenzen sulfonate +8%cardanol polyoxyethylene ether+4% castor oil polyoxyethylene ether +1.2% organobentonite+1.0% fumed silica+10%150# solvent oil + methyl oleate as balance.

### 146 Dispersible oil suspension of 25%oxadiazon·A2 (20+5)

20%oxadiazon+5%A2+4% calcium dodecylbenzen sulfonate +8%cardanol polyoxyethylene ether+4% castor oil polyoxyethylene ether +1.0% organobentonite+10%150# solvent oil + methyl oleate as balance.

### 147 Dispersible oil suspension of 26%oxadiazon·A4 (20+6)

20%oxadiazon+6%A4+4% calcium dodecylbenzen sulfonate +8%cardanol polyoxyethylene ether+4% castor oil polyoxyethylene ether +1.2% organobentonite+10%150# solvent oil + methyl oleate as balance.

### 148 Dispersible oil suspension of 14%oxadiargyl·A1 (6+8)

6%oxadiargyl+8%A1+4% calcium dodecylbenzen sulfonate +8%cardanol polyoxyethylene ether+4% castor oil polyoxyethylene ether +1.6% organobentonite+1.5% fumed silica+10%150# solvent oil + methyl oleate as balance.

### 149 Dispersible oil suspension of 16%oxadiargyl·A2 (6+10)

6%oxadiargyl+10%A2+4% calcium dodecylbenzen sulfonate +8%cardanol polyoxyethylene ether+4% castor oil polyoxyethylene ether +1.5% organobentonite+1.5% fumed silica+10%150# solvent oil + methyl oleate as balance.

### 150 Dispersible oil suspension of 18%oxadiargyl·A4 (6+12)

6%oxadiargyl+12%A4+4% calcium dodecylbenzen sulfonate +8%cardanol polyoxyethylene ether+4% castor oil polyoxyethylene ether +1.4% organobentonite+1.2% fumed silica+10%150# solvent oil + methyl oleate as balance.

### 151 Dispersible oil suspension of A172+glyphosate (20+30)

20%A172+30%glyphosate+6% calcium dodecylbenzen sulfonate +6% polyoxyethylene fatty alcohol ether +6%castor oil polyoxyethylene ether+0.5% organobentonite+15%100# solvent oil + methyl oleate as balance.

### 152 Dispersible oil suspension of A67+glyphosate (10+30)

10%A67+30%glyphosate+5% calcium dodecylbenzen sulfonate +6% polyoxyethylene fatty alcohol ether +5%castor oil polyoxyethylene ether+0.5% organobentonite+15%100# solvent oil + methyl oleate as balance.

### 153 Dispersible oil suspension of A1+glyphosate (9+30)

9%A1+30%glyphosate+5% calcium dodecylbenzen sulfonate +6% polyoxyethylene fatty alcohol ether +5%castor oil polyoxyethylene ether+0.5% organobentonite+15%100# solvent oil + methyl oleate as balance.

### 154 Dispersible oil suspension of A4+glyphosate (12+30)

12%A4+30%glyphosate+5% calcium dodecylbenzen sulfonate +6% polyoxyethylene fatty alcohol ether +5%castor oil polyoxyethylene ether+0.5% organobentonite+15%100# solvent oil + methyl oleate as balance.

### 155 Dispersible oil suspension of A171+glyphosate (20+30)

20%A171+30%glyphosate+5% calcium dodecylbenzen sulfonate +6% polyoxyethylene fatty alcohol ether +6%castor oil polyoxyethylene ether+0.5% organobentonite+15%100# solvent oil + methyl oleate as balance.

### 156 Dispersible oil suspension of A211+glyphosate (10+30)

10%A211+30%glyphosate+5% calcium dodecylbenzen sulfonate +6% polyoxyethylene fatty alcohol ether +6%castor oil polyoxyethylene ether+0.5% organobentonite+15%100# solvent oil + methyl oleate as balance.

### 157 Dispersible oil suspension of A94+glyphosate (20+30)

20%A94+30%glyphosate+5% calcium dodecylbenzen sulfonate +6% polyoxyethylene fatty alcohol ether +6%castor oil polyoxyethylene ether+0.5% organobentonite+15%100# solvent oil + methyl oleate as balance.

### 158 Dispersible oil suspension of A173+glyphosate (10+30)

10%A173+30%glyphosate+5% calcium dodecylbenzen sulfonate +6% polyoxyethylene fatty alcohol ether +6%castor oil polyoxyethylene ether+0.5% organobentonite+15%100# solvent oil + methyl oleate as balance.

### 159 Dispersible oil suspension of A212+glyphosate (20+30)

20%A212+30%glyphosate+5% calcium dodecylbenzen sulfonate +6% polyoxyethylene fatty alcohol ether +6%castor oil polyoxyethylene ether+0.5% organobentonite+15%100# solvent oil + methyl oleate as balance.

### 160 Dispersible oil suspension of A141+glyphosate (10+30)

10%A141+30%glyphosate+5% calcium dodecylbenzen sulfonate +6% polyoxyethylene fatty alcohol ether +6%castor oil polyoxyethylene ether+0.5% organobentonite+15%100# solvent oil + methyl oleate as balance.

### 161 Dispersible oil suspension of A163+glyphosate (10+30)

10%A163+30%glyphosate+5% calcium dodecylbenzen sulfonate +8% polyoxyethylene fatty alcohol ether +5%castor oil polyoxyethylene ether+0.5% organobentonite+15%100# solvent oil + methyl oleate as balance.

### 162 Dispersible oil suspension of A130+glyphosate (10+30)

10%A130+30%glyphosate+5% calcium dodecylbenzen sulfonate +7% polyoxyethylene fatty alcohol ether +5%castor oil polyoxyethylene ether+0.5% organobentonite+15%100# solvent oil + methyl oleate as balance.

### 163 Dispersible oil suspension of A213+glyphosate (10+30)

10%A213+30%glyphosate+5% calcium dodecylbenzen sulfonate +7% polyoxyethylene fatty alcohol ether +5%castor oil polyoxyethylene ether+0.5% organobentonite+15%100# solvent oil + methyl oleate as balance.

### 164 Dispersible oil suspension of A214+glyphosate (10+30)

10%A214+30%glyphosate+5% calcium dodecylbenzen sulfonate +7% polyoxyethylene fatty alcohol ether +5%castor oil polyoxyethylene ether+0.5% organobentonite+15%100# solvent oil + methyl oleate as balance.

### 165 Dispersible oil suspension of A2+glyphosate (10+30)

10%A2+30%glyphosate+5% calcium dodecylbenzen sulfonate +7% polyoxyethylene fatty alcohol ether +5%castor oil polyoxyethylene ether+0.5% organobentonite+15%100# solvent oil + methyl oleate as balance.

The equipments for processing the above dispersible oil suspensions: a mixing tank, a colloid mill, a sand mill, and a shearer etc.

The process for processing the above dispersible oil suspensions: all of the materials were fed into the mixing tank and mixed under stirring, introduced into the colloid mill, then subjected to 3-grade grinding in the sand mill, and finally sheared uniformly in the shearer, and transferred to the storage tank after passing the inspection.

The equipments for processing the above water suspensions: a mixing tank, a colloid mill, a sand mill, and a shearer etc.

The process for processing the above water suspensions: all of the materials were fed into the mixing tank and mixed under stirring, introduced into the colloid mill, then subjected to 3-grade grinding in the sand mill, and finally sheared uniformly in the shearer, and transferred to the storage tank after passing the inspection.

The equipments for processing the above suspoemulsions: a mixing tank, a colloid mill, a sand mill, and a shearer etc..

The process for processing the above suspoemulsions: some of the materials and additives were fed into the mixing tank and mixed under stirring, introduced into the colloid mill, then subjected to 3-grade grinding in the sand mill, and then transferred to the intermediate tank as the aqueous phase; then the remainder of the materials and cosolvent were fed into the charging tank and dissolved by stirring until they were completely transparent, and then stirred until even as the oil phase; and finally sheared in the shearer; the oil phase was slowly dripped into the aqueous phase; after all the material were dripped, shearing was continued for 1 hour, and transferred to the storage tank after passing the inspection.

The equipments for processing the above aqueous emulsions: a vacuum pump, a dosing tank, a storage tank, and a shearing tank.

The process for processing the above aqueous emulsions: the technical materials and solvent were fed into the dosing tank, stirred and dissolved until completely transparent; and the emulsifier was added, and then stirred until even as the oil phase; after that, the glycol, antifoam and deionized water are pumped into the shearing tank; and finally in the shear state, the oil phase was slowly pumped into the shearing tank; after all the materials were pumped, shearing was continued for 1 hour, and transferred to the storage tank after passing the inspection.

The equipments for processing the above microemulsions: a vacuum pump, a dosing tank, and a storage tank.

The process for processing the above microemulsions: the technical materials and solvent were fed into the dosing tank, stirred and dissolved until completely transparent; and the emulsifier was added, and then stirred until even; and the deionized water was added, and then stirred until completely transparent; and transferred to the storage tank after passing the inspection.

The equipments for processing the above emulsifiable concentrates: a vacuum pump, a dosing tank, and a storage tank.

The process for processing the above emulsifiable concentrates: the technical materials and solvent were fed into the dosing tank, stirred and dissolved until completely transparent; and the emulsifier was added, and then stirred until completely transparent; and transferred to the storage tank after passing the inspection.

The equipments for processing the above aqueous solutions: a vacuum pump, a dosing tank, and a storage tank.

The process for processing the above aqueous solutions: the technical materials and the deionized water were fed into the dosing tank, stirred and dissolved until completely transparent; and the emulsifier was added, and then stirred until completely transparent; and transferred to the storage tank after passing the inspection.

Such equipments and processes may find use in the methods and uses according to the claimed invention but do not *per se* constitute part of of the claimed invention.

### B) Efficacy assays

### Post-emergence treatment by performing foliage spray

### 1) Experimental conditions

### 1.1) Tested targets

Table 1-48, 51-98, 101-148: *Echinochloa crusgalli var. zelayensis, Eclipta prostrate, Galium aparine L., Alopecurus aequalis, Alopecurus japonicus, Lindernia procumbens, Veronica persica*¹*, Malachium aquaticum, Beckmannia syzigachne, Stellaria media* were collected in Huai' an of Jiangsu Province; *Commelina communis, Sonchus arvensis, Setaria glauca, Chloris virgata, Setaria faberi, Sonchus oleraceus L., Echinochloa oryzoides, Cirsium setosum, Xanthium strumarium* were collected in Qiqiha'er of Heilongjiang Province; *Sinapis arvensis, Veronica persica²* were collected in Zhumadian of Henan Province; *Ludwigia prostrate, Ammannia arenaria* were collected in Zhuji of Zhejiang Province; *Amaranthus retroflexus, Descurainia sophia, Digitaria sanguinalis, Setaria viridis, Conyza Canadensis, Capsella bursa-pastoris, Eleusine indica, Ipomoea purpurea, Abutilon theophrasti, Chenopodium album, Acalypha australis, Solanum nigrum* were collected in Qingdao of Shandong Province; *Echinochloa caudate* were collected in Pingluo of Ningxia Province.

Table 151-206: *Digitaria sanguinalis, Amaranthus retroflexus, Conyza Canadensis, Capsella bursa-pastoris, Eleusine indica* were collected in Huangdao of Shandong Province, *Sinapis arvensis* were collected in Sixian of Anhui Province, *Alopecurus japonicus* were collected in Tianchang of Anhui Province, *Veronica didyma* were collected in Siyang of Jiangsu Province.

The above weeds were cultivated by a pot culture method. A 180 × 140 mm plastic nutritional bowl contained 4/5 topsoil from the field was placed in an enamel pan, wherein the soil had been air-dried and screened and had an initial moisture content of 20%. Full and uniform weed seeds were selected, soaked in warm water at 25°C for 6 hours, and germinated in a 28°C biochemical incubator (darkness). The weed seeds that had just germinatedwere evenly placed on the surface of the soil and then covered with 0.5-1 cm soil according to the sizes of seeds.

### 1.2) Culture conditions

The culture was carried out in a controllable sunlight greenhouse at 20 to 30°C, in natural light, and relative humidity of 57% to 72%.

The soil was loam with an organic matter content of 1.63%, a pH value of 7.1, an alkali-hydrolyzable nitrogen of 84.3 mg/kg, a rapidly available phosphorus of 38.5 mg/kg, and a rapidly available potassium 82.1 mg/kg.

### 1.3) Equipments and apparatuses

3WP-2000-type Walking Spray Tower (Nanjing Institute of Agricultural Machinery, the Ministry of Agriculture); GA10-type ten thousandth Electronic Balance (Germany); ZDR2000-type Intelligent Data Recorder (Hangzhou Zeda Instrument Co., Ltd.); and SPX-type Intelligent Biochemical Incubator (Ningbo Jiangnan Instrument Factory).

### 2) Designs of experiments

### 2.1) Reagents

The desired active ingredient A is prepared based on patent CN201911321469.4. The examples of representative compounds are as follows, the synthetic methods of other compounds are similar, and will not be described in detail here

### (1) Synthesis of compound A67 and A1

Compound a (0.5g, 2.13mmol), compound b (313mg, 2.55mmol), a catalytic amount of TBAB (10mg), and DMF (10mL) were added to a round-bottom flask, and stirred at room temperature 15 °C for 24 hr. When there was a small amount of starting materials remained according to LC-MS detection, a further treatment was made. The reaction solution was poured into 50mL of water, and extracted with methyl tert-butyl ether twice (50mL x 2). The organic phase was dried, concentrated, and separated by column chromatography, to obtain compound A67 (300mg, yield 50%), as a white solid.

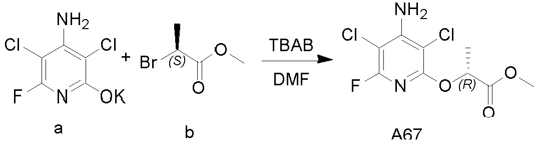

Compound A67 (0.3g, 1.06mmol), methanol (20mL) were added to a 100 mL single-port flask, lithium hydroxide (44.5mg, 1.06mmol) was dissolved in 2 mL of water, and slowly added dropwise to the single-port flask at room temperature, followed by stirring at room temperature for 12 hr. After completed reaction of the starting materials according to LC-MS detection, the reaction solution was adjusted with 0.5M dilute HCl to pH = 5-6, concentrated, and then extracted with water and ethyl acetate. The organic phase was dried, and concentrated to obtain compound A1 (200mg, yield 70%) as a white solid.

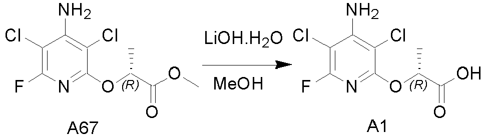

### (2) Synthesis of compound A2

CompoundA1 (200mg, 0.74mmol), compound c(75mg, 0.74mmol), DCC(152mg, 0.74mmol), and anhydrous DCM (20mL) were added to a 100 mL round-bottom flask, and reacted at room temperature for 12 hr. After completed reaction of the starting materials according to LC-MS detection, the reaction solution was concentrated, and separated by column chromatography to obtain compound A2 (200mg, yield 77%), as a white solid.

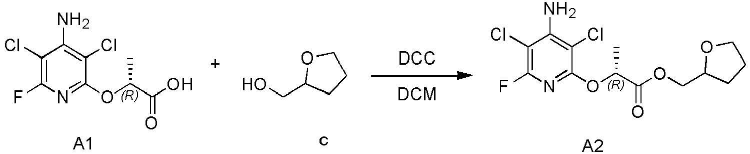

### (3) Synthesis of compound A211

CompoundA1 (200mg, 0.74mmol), compound c(85mg, 0.74mmol), DCC(152mg, 0.74mmol), and anhydrous DCM (20mL) were added to a 100 mL round-bottom flask, and reacted at room temperature for 12 hr. After completed reaction of the starting materials according to LC-MS detection, the reaction solution was concentrated, and separated by column chromatography to obtain compound A211 (200mg, yield 73%), as a white solid.

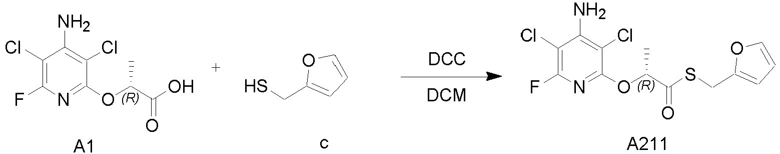

### (4) Synthesis of compound A173

Compound d (2 g, 18.16mmol), compound b (3.64 g, 21.80mmol), a catalytic amount of TBAB (10mg), and DMF (20mL) were added to a round-bottom flask, and stirred at room temperature 15 °C for 24 hr. When there was a small amount of starting materials remained according to LC-MS detection, a further treatment was made. The reaction solution was poured into 50mL of water, and extracted with methyl tert-butyl ether twice (100mL x 2). The organic phase was dried, concentrated, and separated by column chromatography, to obtain compound e (1.5mg, yield 42%), as a white solid.

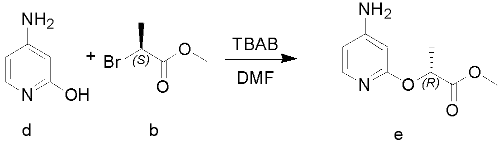

Compound e (0.5 g, 2.55 mmol) was dissolved in acetonitrile (20 mL) and placed in a 100mL single-port flask. NCS (850.7mg, 6.37mmol) and a catalytic amount of BPO (10mg) were added at room temperature, and the temperature was increased to 70°C and reaction was continued for 2 hours.After completed reaction of the starting materials according to LC-MS detection, the reaction solution was concentrated, and separated by column chromatography to obtain compound A173 (300mg, yield 44%), as a white solid.

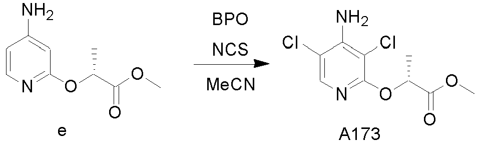

### (5) Synthesis of compound A174 and A212

Compound e (0.5 g, 2.55 mmol) was dissolved in acetonitrile (20 mL) and placed in a 100mL single-port flask. NBS (1.13mg, 6.37mmo) and a catalytic amount of BPO (10mg) were added at room temperature, and the temperature was increased to 70°C and reaction was continued for 2 hours.After completed reaction of the starting materials according to LC-MS detection, the reaction solution was concentrated, and separated by column chromatography to obtain compound A174 (500mg, yield 54%), as a white solid.

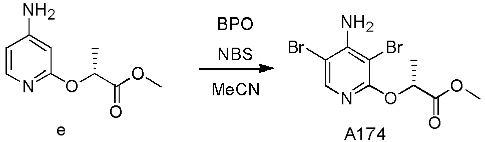

Compound A174 (0.5g, 1.41mmol) and methanol (20mL) were added to a 100 mL single-port flask, lithium hydroxide (59.3 mg, 1.41 mmol) was dissolved in 2 mL of water, and slowly added dropwise to the single-port flask at room temperature, followed by stirring at room temperature for 12 hr. After completed reaction of the starting materials according to LC-MS detection, the reaction solution was adjusted with 0.5M dilute HCl to pH = 5-6, concentrated, and then extracted with water and ethyl acetate. The organic phase was dried, and concentrated to obtain compound A212 (350mg, yield 73%) as a white solid.

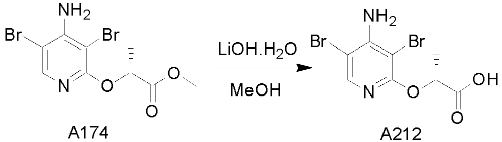

The active ingredient B for example cypyrafluone, bipyrazone, fenpyrazone and tripyrasulfone was produced by our company, and the others were purchased from reagent companies.The technical materials were all dissolved in acetone, and diluted with an aqueous solution containing 0.1% emulsifier Tween-80. The dilution is performed as required.

### 2.2) Experimental treatments

### 2.2.1) Determination of dosage

A ratio of the active ingredient A to the active ingredient B and amounts thereof in each group depends on the characteristics and toxicity of the two agents, as well as the main application purpose of a corresponding formulation. Based on the pre-tests in this study, the dosage of the active ingredient A and B applied alone and in combination were shown in the tables. Water containing the solvent and emulsifier same with the above groups but free of the agents was used as a blank control.

### 2.2.2) Repetition of experiments

Table 1-48, 51-98, 101-148, 151-206: 3 pots with 20 weed seeds per pot were treated in one treatment with 4 replications per treatment, that is, a total of 60 weeds were treated in one treatment.

Table 207-216: 10 pots with 10 weed seeds per pot were treated in one treatment with 4 replications per treatment, and then 3 weeds per pot were maintained.

### 2.3) Treatment method

### 2.3.1) The timing and frequency of the treatment

Table 1-48, 51-98, 101-148: The agents were used for only once in the experiment. In the stage of weeds with 3~4 leaves, the weeds were thinned out to maintain 15 weeds per pot and 45 weeds for each treatment, then continued to be cultured to 5~6 leaves stage of grassy weeds, 6~7 leaves stage of broadleaf weeds, and treated.

Table 151-206: The agents were used for only once in the experiment. In the stage of weeds with 3~4 leaves, the weeds were thinned out to maintain 15 weeds per pot and 45 weeds for each treatment, then continued to be cultured to 4~5 leaves stage of grassy weeds, 5~6 leaves stage of broadleaf weeds, and treated.

Table 207-216: The agents were used for only once in the experiment. In the stage of weeds with 6~8 leaves, the weeds were thinned out to maintain 3 weeds per pot and 30 weeds for each treatment, then continued to be cultured to *Conyza Canadensis* with a height of 10 cm, and treated.

### 2.3.2) Equipments and methods for applying agents

The well-cultured weeds were evenly placed on a platform with an area of 0.5m², and a solution of agents was sprayed on the stems and leaves thereof by the 3WP-2000-type walking spray tower at a dosage of 450kg/ha and at a spray pressure of 0.3MPa. After all the solution was sprayed, the valve was closed. After 30 seconds, the door of the spray tower was opened, and the nutritional bowl was taken out. Then the valve was opened, and the spray tube was cleaned by spraying 50 ml of water.

### 3) Experimental methods

A pot-culture method was employed. For the cultivation of weeds, please refer to the Section 1.1), and "Pesticide guidelines for laboratory bioactivity tests - herbicides". As to a method for applying agents, please refer to the section 2.3.2), that is, a foliage treatment was employed. After the treatment, the weeds were routinely cultured in a greenhouse.

### 4) Data investigation and statistical analysis

### 4.1) Investigation methods

A method for investigating absolute number was employed, wherein whole seedlings of survival weeds were cut off with a blade along the soil surface, and the fresh weight of the weeds was weighed with an analytical balance. For dead weeds, the fresh weight thereof was zero.

### 4.2) Investigation timing and frequency

Table 1-48, 51-98, 101-148, 207-216: The investigation was performed after 24 days of the treatment for only once.

Table 151-206: The investigation was performed after 20 days of the treatment for only once.

### 4.3) Statistical analysis of the data

Theoretical fresh weight inhibition rate of a combination of two active ingredients in each group was calculated by the Gowing method (E0=X+Y-X*Y/100), and then compared with an actually measured inhibition rate (E), thereby effect of the combination (hereafter referred to as combined effect) on weeds was evaluated: the value of E-E0, which was greater than 10%, corresponded to a synergistic effect, the value of E-E0, which was less than -10%, corresponded to an antagonistic effect, and the value of E-E0, which was from -10% to 10%, corresponded to an additional effect. An optimum ratio of the two active ingredients was determined by the actual control effect, characteristics of herbicides, and balance of a corresponding formula. Wherein, in the formula, X represented the fresh weight inhibition rate of the active ingredient A in a dosage of P, and Y represented the fresh weight inhibition rate of the active ingredient B in a dosage of Q.

### Soil sealing treatment:

### 1) Experimental conditions

### 1.1) Tested targets

*Echinochloa crusgalli var. zelayensis* were collected in Huai'an of Jiangsu Province; *Echinochloa caudate* were collected in Pingluo of Ningxia Province; *Echinochloa oryzoides* were collected in Qiqiha'er of Heilongjiang Province.

### 1.2) Culture conditions

The culture was carried out in a controllable sunlight greenhouse at 20 to 30°C, in natural light, and relative humidity of 57% to 72%. The soil was loam with an organic matter content of 1.63%, a pH value of 7.1, an alkali-hydrolyzable nitrogen of 84.3 mg/kg, a rapidly available phosphorus of 38.5 mg/kg, and a rapidly available potassium 82.1 mg/kg. The test soil was placed quantitatively to 3/4 of the pots and then watered from the bottom of the pots to completely wet the soil to saturation. The pretreated test weed seeds were uniformly sowed on the surface, then covered with 0.5-2 cm soil according to the seed size, and ready-for use 24 hours after sowing.

### 1.3) Equipments and apparatuses

GA10-type ten thousandth Electronic Balance (Germany); ZDR2000-type Intelligent Data Recorder (Hangzhou Zeda Instrument Co., Ltd.); SPX-type Intelligent Biochemical Incubator (Ningbo Jiangnan Instrument Factory) and pipettor etc..

### 2) Designs of experiments

### 2.1) Reagents

The technical materials were all dissolved in acetone, and diluted with an aqueous solution containing 0.1% emulsifier T-80. The dilution is performed as required.

### 2.2) Experimental treatments

### 2.2.1) Determination of dosage

A ratio of A to the active ingredient B and amounts thereof in each group depends on the characteristics and toxicity of the two agents, as well as the main application purpose of a corresponding formulation. Based on the pre-tests in this study, the dosage of A and the active ingredient B applied alone and in combination were shown in the tables. Water containing the solvent and emulsifier same with the above groups but free of the agents was used as a blank control.

### 2.2.2) Repetition of experiments

3 pots with 30 weed seeds per pot were treated in one treatment with 4 replications per treatment.

### 3) Experimental methods

The pots which were sowed and mulched were evenly placed on a platform with an area of 0.5m², and a solution of agents was sprayed on soil surface thereof by the 3WP-2000-type walking spray tower at a dosage of 675kg/ha and at a spray pressure of 0.3MPa. After all the solution was sprayed, the valve was closed. After 30 seconds, the door of the spray tower was opened, and the nutritional bowl was taken out. Then the valve was opened, and the spray tube was cleaned by spraying 50 ml of water.

### 4) Data investigation and statistical analysis

This section was same as the section 4) in the post-emergence treatment by performing foliage spray, and was not repeated herein.

The statistical results were shown in the tables 1-216 below.Apart from those marked as soil sealing treatments, others are all post-emergence treatments by performing foliage spray.

**Table 1 Control effects of A2 orpenoxsulam alone and of a combination thereof on Echinochloa crusgalli var. zelayensis**

| A + B dose g a.i./ha | A: B | Control effect (%) of A applied alone in corresponding dose | Control effect (%) of B applied alone in corresponding dose | Control effect of A + B (%), E | E0 (%) | E-E0 (%) |
|---|---|---|---|---|---|---|
| 150+1.875 | 80:1 | 75.3 | 2.4 | 89.4 | 75.9 | 13.5 |
| 150+3.75 | 40:1 | 75.3 | 10.9 | 90.2 | 78.0 | 12.2 |
| 75+7.5 | 10:1 | 54.2 | 48.8 | 88.9 | 76.6 | 12.3 |
| 75+15 | 5:1 | 54.2 | 70.1 | 99.7 | 86.3 | 13.4 |

**Table 2 Control effects of A2 or bispyribac-sodiumalone and of a combination thereof on Echinochloa crusgalli var. zelayensis**

| A + B dose g a.i./ha | A: B | Control effect (%) of A applied alone in corresponding dose | Control effect (%) of B applied alone in corresponding dose | Control effect of A + B (%), E | E0 (%) | E-E0 (%) |
|---|---|---|---|---|---|---|
| 150+1.875 | 80:1 | 75.3 | 5.3 | 87.9 | 76.6 | 11.3 |
| 150+3.75 | 40:1 | 75.3 | 17.4 | 92.1 | 79.6 | 12.5 |
| 75+7.5 | 10:1 | 54.2 | 43.4 | 86.2 | 74.1 | 12.1 |
| 75+15 | 5:1 | 54.2 | 62.9 | 95.2 | 83.0 | 12.2 |

**Table3 Control effects of A2 or pyrazosulfuron-ethyl alone and of a combination thereof on Eclipta prostrate**

| A + B dose g a.i./ha | A: B | Control effect (%) of A applied alone in corresponding dose | Control effect (%) of B applied alone in corresponding dose | Control effect of A + B (%), E | E0 (%) | E-E0 (%) |
|---|---|---|---|---|---|---|
| 150+1.875 | 80:1 | 68.4 | 9.5 | 83.5 | 71.4 | 12.1 |
| 150+3.75 | 40:1 | 68.4 | 19.9 | 87.2 | 74.7 | 12.5 |
| 75+7.5 | 10:1 | 32.3 | 51.0 | 80.4 | 66.8 | 13.6 |
| 75+15 | 5:1 | 32.3 | 76.1 | 96.2 | 83.8 | 12.4 |

**Table 4 Control effects of A2 or nicosulfuron alone and of a combination thereof on Echinochloa crusgalli var. zelayensis**

| A + B dose g a.i./ha | A: B | Control effect (%) of A applied alone in corresponding dose | Control effect (%) of B applied alone in corresponding dose | Control effect of A + B (%), E | E0 (%) | E-E0 (%) |
|---|---|---|---|---|---|---|
| 150+3.75 | 40:1 | 75.3 | 7.3 | 88.1 | 77.1 | 11.0 |
| 150+7.5 | 20:1 | 75.3 | 15.4 | 91.4 | 79.1 | 12.3 |
| 75+15 | 5:1 | 54.2 | 39.3 | 86.5 | 72.2 | 14.3 |
| 75+30 | 5:2 | 54.2 | 58.7 | 94.0 | 81.1 | 12.9 |

**Table 5 Control effects of A2 or florasulam alone and of a combination thereof on Galium aparine L.**

| A + B dose g a.i./ha | A: B | Control effect (%) of A applied alone in corresponding dose | Control effect (%) of B applied alone in corresponding dose | Control effect of A + B (%), E | E0 (%) | E-E0 (%) |
|---|---|---|---|---|---|---|
| 15+0.375 | 40:1 | 68.5 | 4.8 | 82.6 | 70.0 | 12.6 |
| 15+0.75 | 20:1 | 68.5 | 20.6 | 88.2 | 75.0 | 13.2 |
| 7.5+1.5 | 5:1 | 34.8 | 56.3 | 86.4 | 71.5 | 14.9 |
| 7.5+3.0 | 5:2 | 34.8 | 76.2 | 98.2 | 84.5 | 13.7 |

**Table 6 Control effects of A2 or rimsulfuron alone and of a combination thereof on Echinochloa crusgalli var. zelayensis**

| A + B dose g a.i./ha | A: B | Control effect (%) of A applied alone in corresponding dose | Control effect (%) of B applied alone in corresponding dose | Control effect of A + B (%), E | E0 (%) | E-E0 (%) |
|---|---|---|---|---|---|---|
| 150+1.875 | 80:1 | 75.3 | 7.7 | 88.4 | 77.2 | 11.2 |
| 150+3.75 | 40:1 | 75.3 | 25.5 | 93.6 | 81.6 | 12.0 |
| 75+7.5 | 10:1 | 54.2 | 39.7 | 87.0 | 72.4 | 14.6 |
| 75+15 | 5:1 | 54.2 | 67.7 | 97.9 | 85.2 | 12.7 |

**Table 7 Control effects of A2 or imazethapyr alone and of a combination thereof on Echinochloa crusgalli var. zelayensis**

| A + B dose g a.i./ha | A: B | Control effect (%) of A applied alone in corresponding dose | Control effect (%) of B applied alone in corresponding dose | Control effect of A + B (%), E | E0 (%) | E-E0 (%) |
|---|---|---|---|---|---|---|
| 150+7.5 | 20:1 | 75.3 | 3.2 | 86.6 | 76.1 | 10.5 |
| 150+15 | 10:1 | 75.3 | 19.8 | 93.9 | 80.2 | 13.7 |
| 75+30 | 5:2 | 54.2 | 31.2 | 83.3 | 68.5 | 14.8 |
| 75+60 | 5:4 | 54.2 | 59.2 | 93.7 | 81.3 | 12.4 |

**Table 8 Control effects of A2 or imazapic alone and of a combination thereof on Echinochloa crusgalli var. zelayensis**

| A + B dose g a.i./ha | A: B | Control effect (%) of A applied alone in corresponding dose | Control effect (%) of B applied alone in corresponding dose | Control effect of A + B (%), E | E0 (%) | E-E0 (%) |
|---|---|---|---|---|---|---|
| 150+9.375 | 16:1 | 75.3 | 1.2 | 87.9 | 75.6 | 12.3 |
| 150+18.75 | 8:1 | 75.3 | 18.6 | 92.3 | 79.9 | 12.4 |
| 75+37.5 | 2:1 | 54.2 | 26.9 | 82.2 | 66.5 | 15.7 |
| 75+75 | 1:1 | 54.2 | 57.0 | 92.4 | 80.3 | 12.1 |

**Table 9 Control effects of A2 or imazamox alone and of a combination thereof on Echinochloa crusgalli var. zelayensis**

| A + B dose g a.i./ha | A: B | Control effect (%) of A applied alone in corresponding dose | Control effect (%) of B applied alone in corresponding dose | Control effect of A + B (%), E | E0 (%) | E-E0 (%) |
|---|---|---|---|---|---|---|
| 150+3.75 | 40:1 | 75.3 | 6.9 | 89.2 | 77.0 | 12.2 |
| 150+7.5 | 20:1 | 75.3 | 14.2 | 91.4 | 78.8 | 12.6 |
| 75+15 | 5:1 | 54.2 | 25.1 | 81.1 | 65.7 | 15.4 |
| 75+30 | 5:2 | 54.2 | 54.8 | 91.1 | 79.3 | 11.8 |

**Table 10 Control effects of A2 or sulfometuron-methyl alone and of a combination thereof on Echinochloa crusgalli var. zelayensis**

| A + B dose g a.i./ha | A: B | Control effect (%) of A applied alone in corresponding dose | Control effect (%) of B applied alone in corresponding dose | Control effect of A + B (%), E | E0 (%) | E-E0 (%) |
|---|---|---|---|---|---|---|
| 150+9.375 | 16:1 | 75.3 | 2.0 | 85.9 | 75.8 | 10.1 |
| 150+18.75 | 8:1 | 75.3 | 13.8 | 94.5 | 78.7 | 15.8 |
| 75+37.5 | 2:1 | 54.2 | 24.5 | 79.1 | 65.4 | 13.7 |
| 75+75 | 1:1 | 54.2 | 54.8 | 91.8 | 79.3 | 12.5 |

**Table 11 Control effects of A2 or cloransulam-methyl alone and of a combination thereof on Commelina communis**

| A + B dose g a.i./ha | A: B | Control effect (%) of A applied alone in corresponding dose | Control effect (%) of B applied alone in corresponding dose | Control effect of A + B (%), E | E0 (%) | E-E0 (%) |
|---|---|---|---|---|---|---|
| 60+1.875 | 32:1 | 67.8 | 4.7 | 81.2 | 69.3 | 11.9 |
| 60+3.75 | 16:1 | 67.8 | 15.2 | 86.9 | 72.7 | 14.2 |
| 30+7.5 | 4:1 | 32.3 | 53.5 | 82.3 | 68.5 | 13.8 |
| 30+15 | 2:1 | 32.3 | 71.8 | 93.4 | 80.9 | 12.5 |

**Table 12 Control effects of A2 or cyhalofop-butyl alone and of a combination thereof on Echinochloa crusgalli var. zelayensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+9.375 | 16:1 | 75.3 | 1.6 | 86.7 | 75.7 | 11.0 |
| 150+18.75 | 8:1 | 75.3 | 17.4 | 89.8 | 79.6 | 10.2 |
| 75+37.5 | 2:1 | 54.2 | 31.0 | 81.3 | 68.4 | 12.9 |
| 75+75 | 1:1 | 54.2 | 70.3 | 98.6 | 86.4 | 12.2 |

**Table 13 Control effects of A2 or clodinafop-propargyl alone and of a combination thereof on Alopecurus aequalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 45.5 | 6.1 | 61.1 | 48.8 | 12.3 |
| 150+7.5 | 20:1 | 45.5 | 16.3 | 68.2 | 54.4 | 13.8 |
| 75+15 | 5:1 | 23.8 | 59.3 | 83.4 | 69.0 | 14.4 |
| 75+30 | 5:2 | 23.8 | 81.1 | 98.3 | 85.6 | 12.7 |

**Table 14 Control effects of A2 or pinoxaden alone and of a combination thereof on Alopecurus aequalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 45.5 | 3.5 | 58.8 | 47.4 | 11.4 |
| 150+7.5 | 20:1 | 45.5 | 14.1 | 67.3 | 53.2 | 14.1 |
| 75+15 | 5:1 | 23.8 | 43.0 | 71.9 | 56.6 | 15.3 |
| 75+30 | 5:2 | 23.8 | 72.4 | 92.1 | 79.0 | 13.1 |

**Table 15 Control effects of A2 or clethodim alone and of a combination thereof on Echinochloa crusgalli var. zelayensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 75.3 | 8.5 | 87.9 | 77.4 | 10.5 |
| 150+15 | 10:1 | 75.3 | 23.9 | 93.1 | 81.2 | 11.9 |
| 75+30 | 5:2 | 54.2 | 44.3 | 87.6 | 74.5 | 13.1 |
| 75+60 | 5:4 | 54.2 | 68.8 | 98.4 | 85.7 | 12.7 |

**Table 16 Control effects of A2 or sethoxydim alone and of a combination thereof on Echinochloa crusgalli var. zelayensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+15 | 10:1 | 75.3 | 6.5 | 88.1 | 76.9 | 11.2 |
| 150+30 | 5:1 | 75.3 | 22.3 | 93.4 | 80.8 | 12.6 |
| 75+60 | 5:4 | 54.2 | 42.4 | 87.9 | 73.6 | 14.3 |
| 75+120 | 5:8 | 54.2 | 62.4 | 97.2 | 82.8 | 14.4 |

**Table 17 Control effects of A2 or quizalofop-P-methyl alone and of a combination thereof on Echinochloa crusgalli var. zelayensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 75.3 | 8.5 | 89.3 | 77.4 | 11.9 |
| 150+7.5 | 20:1 | 75.3 | 12.6 | 91.7 | 78.4 | 13.3 |
| 75+15 | 5:1 | 54.2 | 40.4 | 88.2 | 72.7 | 15.5 |
| 75+30 | 5:2 | 54.2 | 71.0 | 99.4 | 86.7 | 12.7 |

**Table 18 Control effects of A2 or fluazifop-P-butyl alone and of a combination thereof on Echinochloa crusgalli var. zelayensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 75.3 | 2.0 | 88.6 | 75.8 | 12.8 |
| 150+7.5 | 20:1 | 75.3 | 18.2 | 92.8 | 79.8 | 13.0 |
| 75+15 | 5:1 | 54.2 | 37.3 | 87.1 | 71.3 | 15.8 |
| 75+30 | 5:2 | 54.2 | 73.1 | 98.1 | 87.7 | 10.4 |

**Table 19 Control effects of A2 or haloxyfop-P-methyl alone and of a combination thereof on Echinochloa crusgalli var. zelayensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 75.3 | 3.6 | 87.9 | 76.2 | 11.7 |
| 150+7.5 | 20:1 | 75.3 | 11.7 | 90.9 | 78.2 | 12.7 |
| 75+15 | 5:1 | 54.2 | 40.8 | 86.0 | 72.9 | 13.1 |
| 75+30 | 5:2 | 54.2 | 74.5 | 99.8 | 88.3 | 11.5 |

**Table 20 Control effects of A2 or atrazine alone and of a combination thereof on Echinochloa crusgalli var. zelayensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 75.3 | 4.5 | 89.4 | 76.4 | 13.0 |
| 150+150 | 1:1 | 75.3 | 15.4 | 90.2 | 79.1 | 11.1 |
| 75+300 | 1:4 | 54.2 | 26.9 | 78.8 | 66.5 | 12.3 |
| 75+600 | 1:8 | 54.2 | 65.5 | 94.7 | 84.2 | 10.5 |

**Table 21 Control effects of A2 or isoproturon alone and of a combination thereof on Alopecurus aequalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 45.5 | 2.6 | 59.4 | 46.9 | 12.5 |
| 150+150 | 1:1 | 45.5 | 11.9 | 64.7 | 52.0 | 12.7 |
| 75+300 | 1:4 | 23.8 | 57.2 | 81.9 | 67.4 | 14.5 |
| 75+600 | 1:8 | 23.8 | 76.5 | 95.3 | 82.1 | 13.2 |

**Table 22 Control effects of A2 or chlorotoluron alone and of a combination thereof on Alopecurus aequalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 45.5 | 1.7 | 56.5 | 46.4 | 10.1 |
| 150+150 | 1:1 | 45.5 | 12.8 | 63.9 | 52.5 | 11.4 |
| 75+300 | 1:4 | 23.8 | 40.6 | 68.5 | 54.7 | 13.8 |
| 75+600 | 1:8 | 23.8 | 71.9 | 91.2 | 78.6 | 12.6 |

**Table 23 Control effects of A2 or diuron alone and of a combination thereof on Echinochloa crusgalli var. zelayensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 75.3 | 2.0 | 86.6 | 75.8 | 10.8 |
| 150+150 | 1:1 | 75.3 | 13.0 | 91.3 | 78.5 | 12.8 |
| 75+300 | 1:4 | 54.2 | 29.3 | 79.1 | 67.6 | 11.5 |
| 75+600 | 1:8 | 54.2 | 55.0 | 91.5 | 79.4 | 12.1 |

**Table 24 Control effects of A2 or bentazone alone and of a combination thereof on Lindernia procumbens**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 15+18.75 | 4:5 | 78.9 | 4.3 | 91.2 | 79.8 | 11.4 |
| 15+37.5 | 2:5 | 78.9 | 10.0 | 93.2 | 81.0 | 12.2 |
| 7.5+75 | 1:10 | 42.3 | 45.4 | 82.3 | 68.5 | 13.8 |
| 7.5+150 | 1:20 | 42.3 | 76.1 | 98.7 | 86.2 | 12.5 |

**Table 25 Control effects of A2 or bromoxynil alone and of a combination thereof on Amaranthus retroflexus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+18.75 | 8:1 | 52.4 | 3.2 | 64.2 | 53.9 | 10.3 |
| 150+37.5 | 4:1 | 52.4 | 9.2 | 68.1 | 56.8 | 11.3 |
| 75+75 | 1:1 | 22.9 | 57.8 | 81.2 | 67.5 | 13.7 |
| 75+150 | 1:2 | 22.9 | 83.7 | 99.6 | 87.4 | 12.2 |

**Table 26 Control effects of A2 or propanil alone and of a combination thereof on Echinochloa crusgalli var. zelayensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 75.3 | 6.1 | 88.9 | 76.8 | 12.1 |
| 150+150 | 1:1 | 75.3 | 18.6 | 93.4 | 79.9 | 13.5 |
| 75+300 | 1:4 | 54.2 | 35.2 | 82.1 | 70.3 | 11.8 |
| 75+600 | 1:8 | 54.2 | 52.6 | 90.2 | 78.3 | 11.9 |

**Table 27 Control effects of A2 or cypyrafluone alone and of a combination thereof on Alopecurus aequalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+18.75 | 8:1 | 45.5 | 4.6 | 60.2 | 48.0 | 12.2 |
| 150+37.5 | 4:1 | 45.5 | 10.1 | 64.7 | 51.0 | 13.7 |
| 75+75 | 1:1 | 23.8 | 55.9 | 79.3 | 66.4 | 12.9 |
| 75+150 | 1:2 | 23.8 | 81.8 | 97.6 | 86.1 | 11.5 |

**Table 28 Control effects of A2 or bipyrazone alone and of a combination thereof on Descurainia sophia**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 30+1.875 | 16:1 | 74.2 | 4.3 | 86.5 | 75.3 | 11.2 |
| 30+3.75 | 8:1 | 74.2 | 19.0 | 92.7 | 79.1 | 13.6 |
| 15+7.5 | 2:1 | 35.7 | 48.7 | 80.2 | 67.0 | 13.2 |
| 15+15 | 1:1 | 35.7 | 82.9 | 99.3 | 89.0 | 10.3 |

**Table 29 Control effects of A2 or fenpyrazone alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 48.9 | 5.3 | 62.4 | 51.6 | 10.8 |
| 150+15 | 10:1 | 48.9 | 14.7 | 72.3 | 56.4 | 15.9 |
| 75+30 | 5:2 | 22.4 | 40.2 | 67.2 | 53.6 | 13.6 |
| 75+60 | 5:4 | 22.4 | 79.6 | 95.4 | 84.2 | 11.2 |

**Table 30 Control effects of A2 or tripyrasulfone alone and of a combination thereof on Echinochloa crusgalli var. zelayensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+18.75 | 8:1 | 75.3 | 6.9 | 88.2 | 77.0 | 11.2 |
| 150+37.5 | 4:1 | 75.3 | 16.2 | 94.5 | 79.3 | 15.2 |
| 75+75 | 1:1 | 54.2 | 42.8 | 87.9 | 73.8 | 14.1 |
| 75+150 | 1:2 | 54.2 | 74.5 | 98.9 | 88.3 | 10.6 |

**Table 31 Control effects of A2 or tefuryltrione alone and of a combination thereof on Echinochloa crusgalli var. zelayensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 75.3 | 6.9 | 89.2 | 77.0 | 12.2 |
| 150+15 | 10:1 | 75.3 | 17.0 | 91.6 | 79.5 | 12.1 |
| 75+30 | 5:2 | 54.2 | 44.3 | 86.8 | 74.5 | 12.3 |
| 75+60 | 5:4 | 54.2 | 68.3 | 97.6 | 85.5 | 12.1 |

**Table 32 Control effects of A2 or mesotrione alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+15 | 10:1 | 48.9 | 6.3 | 62.6 | 52.1 | 10.5 |
| 150+30 | 5:1 | 48.9 | 13.3 | 69.2 | 55.7 | 13.5 |
| 75+60 | 5:4 | 22.4 | 38.5 | 64.7 | 52.3 | 12.4 |
| 75+120 | 5:8 | 22.4 | 75.6 | 93.2 | 81.1 | 12.1 |

**Table 33 Control effects of A2 or tembotrione alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 48.9 | 3.7 | 61.5 | 50.8 | 10.7 |
| 150+7.5 | 20:1 | 48.9 | 12.1 | 69.9 | 55.1 | 14.8 |
| 75+15 | 5:1 | 22.4 | 41.2 | 68.6 | 54.4 | 14.2 |
| 75+30 | 5:2 | 22.4 | 73.8 | 91.2 | 79.7 | 11.5 |

**Table 34 Control effects of A2 or topramezone alone and of a combination thereof on Setaria viridis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 60+1.875 | 32:1 | 56.3 | 2.3 | 69.5 | 57.3 | 12.2 |
| 60+3.75 | 16:1 | 56.3 | 11.0 | 74.7 | 61.1 | 13.6 |
| 30+7.5 | 4:1 | 32.7 | 37.0 | 72.1 | 57.6 | 14.5 |
| 30+15 | 2:1 | 32.7 | 76.1 | 95.3 | 83.9 | 11.4 |

**Table 35 Control effects of A2 or isoxaflutole alone and of a combination thereof on Echinochloa crusgalli var. zelayensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 75.3 | 6.1 | 89.6 | 76.8 | 12.8 |
| 150+15 | 10:1 | 75.3 | 17.8 | 94.5 | 79.7 | 14.8 |
| 75+30 | 5:2 | 54.2 | 49.0 | 89.2 | 76.7 | 12.5 |
| 75+60 | 5:4 | 54.2 | 64.4 | 94.5 | 83.7 | 10.8 |

**Table 36 Control effects of A2 or benzobicylon alone and of a combination thereof on Echinochloa crusgalli var. zelayensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+37.5 | 4:1 | 75.3 | 7.3 | 90.2 | 77.1 | 13.1 |
| 150+75 | 2:1 | 75.3 | 16.2 | 91.8 | 79.3 | 12.5 |
| 75+150 | 1:2 | 54.2 | 44.9 | 86.5 | 74.8 | 11.7 |
| 75+300 | 1:4 | 54.2 | 55.9 | 91.3 | 79.8 | 11.5 |

**Table 37 Control effects of A2 or diflufenican alone and of a combination thereof on Veronica persica¹**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+15 | 10:1 | 38.4 | 2.1 | 51.2 | 39.7 | 11.5 |
| 150+30 | 5:1 | 38.4 | 14.4 | 61.8 | 47.3 | 14.5 |
| 75+60 | 5:4 | 18.2 | 41.3 | 65.8 | 52.0 | 13.8 |
| 75+120 | 5:8 | 18.2 | 76.7 | 93.3 | 80.9 | 12.4 |

**Table 38 Control effects of A2 or flurochloridone alone and of a combination thereof on Veronica persica¹**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 38.4 | 4.9 | 53.7 | 41.4 | 12.3 |
| 150+150 | 1:1 | 38.4 | 13.1 | 59.9 | 46.5 | 13.4 |
| 75+300 | 1:4 | 18.2 | 45.5 | 71.2 | 55.4 | 15.8 |
| 75+600 | 1:8 | 18.2 | 80.0 | 97.2 | 83.6 | 13.6 |

**Table 39 Control effects of A2 or clomazone alone and of a combination thereof on Echinochloa crusgalli var. zelayensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+45 | 10:3 | 75.3 | 5.7 | 89.4 | 76.7 | 12.7 |
| 150+90 | 5:3 | 75.3 | 10.1 | 90.2 | 77.8 | 12.4 |
| 75+180 | 5:12 | 54.2 | 48.8 | 88.9 | 76.6 | 12.3 |
| 75+360 | 5:24 | 54.2 | 70.7 | 99.7 | 86.6 | 13.1 |

**Table 40 Control effects of A2 or carfentrazone-ethyl alone and of a combination thereof on Veronica persica¹**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+1.875 | 80:1 | 38.4 | 2.4 | 51.8 | 39.9 | 11.9 |
| 150+3.75 | 40:1 | 38.4 | 11.5 | 58.3 | 45.5 | 12.8 |
| 75+7.5 | 10:1 | 18.2 | 37.3 | 62.4 | 48.7 | 13.7 |
| 75+15 | 5:1 | 18.2 | 68.7 | 87.1 | 74.4 | 12.7 |

**Table 41 Control effects of A2 or fomesafen alone and of a combination thereof on Amaranthus retroflexus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+22.5 | 20:3 | 52.4 | 5.0 | 64.9 | 54.8 | 10.1 |
| 150+45 | 10:3 | 52.4 | 11.3 | 71.2 | 57.8 | 13.4 |
| 75+90 | 5:6 | 22.9 | 45.5 | 72.6 | 58.0 | 14.6 |
| 75+180 | 5:12 | 22.9 | 82.0 | 98.5 | 86.1 | 12.4 |

**Table 42 Control effects of A2 or fluoroglycofen alone and of a combination thereof on Amaranthus retroflexus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+0.9375 | 160:1 | 52.4 | 2.5 | 65.4 | 53.6 | 11.8 |
| 150+1.875 | 80:1 | 52.4 | 14.5 | 71.3 | 59.3 | 12.0 |
| 75+3.75 | 20:1 | 22.9 | 40.1 | 67.6 | 53.8 | 13.8 |
| 75+7.5 | 10:1 | 22.9 | 70.7 | 89.9 | 77.4 | 12.5 |

**Table 43 Control effects of A2 or oxyfluorfen alone and of a combination thereof on Amaranthus retroflexus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 52.4 | 3.2 | 64.1 | 53.9 | 10.2 |
| 150+15 | 10:1 | 52.4 | 11.1 | 68.4 | 57.7 | 10.7 |
| 75+30 | 5:2 | 22.9 | 30.9 | 59.8 | 46.7 | 13.1 |
| 75+60 | 5:4 | 22.9 | 68.1 | 87.3 | 75.4 | 11.9 |

**Table 44 Control effects of A2 or lactofen alone and of a combination thereof on Amaranthus retroflexus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 52.4 | 1.3 | 63.5 | 53.0 | 10.5 |
| 150+15 | 10:1 | 52.4 | 12.2 | 71.2 | 58.2 | 13.0 |
| 75+30 | 5:2 | 22.9 | 39.8 | 65.8 | 53.6 | 12.2 |
| 75+60 | 5:4 | 22.9 | 65.5 | 84.2 | 73.4 | 10.8 |

**Table 45 Control effects of A2 or acifluorfen-sodium alone and of a combination thereof on Amaranthus retroflexus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+37.5 | 4:1 | 52.4 | 4.4 | 65.7 | 54.5 | 11.2 |
| 150+75 | 2:1 | 52.4 | 10.3 | 67.6 | 57.3 | 10.3 |
| 75+150 | 1:2 | 22.9 | 45.1 | 70.8 | 57.7 | 13.1 |
| 75+300 | 1:4 | 22.9 | 85.0 | 98.7 | 88.4 | 10.3 |

**Table 46 Control effects of A2 or flumioxazin alone and of a combination thereof on Amaranthus retroflexus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 52.4 | 5.5 | 67.5 | 55.0 | 12.5 |
| 150+15 | 10:1 | 52.4 | 12.4 | 71.3 | 58.3 | 13.0 |
| 75+30 | 5:2 | 22.9 | 37.4 | 63.9 | 51.7 | 12.2 |
| 75+60 | 5:4 | 22.9 | 78.9 | 94.5 | 83.7 | 10.8 |

**Table 47 Control effects of A2 or sulfentrazone alone and of a combination thereof on Echinochloa crusgalli var. zelayensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+1.875 | 80:1 | 75.3 | 2.8 | 87.1 | 76.0 | 11.1 |
| 150+3.75 | 40:1 | 75.3 | 15.4 | 92.4 | 79.1 | 13.3 |
| 75+7.5 | 10:1 | 54.2 | 26.9 | 78.8 | 66.5 | 12.3 |
| 75+15 | 5:1 | 54.2 | 54.1 | 90.2 | 79.0 | 11.2 |

**Table 48 Control effects of A2 or saflufenacil alone and of a combination thereof on Conyza Canadensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 57.2 | 3.0 | 70.8 | 58.5 | 12.3 |
| 150+7.5 | 20:1 | 57.2 | 11.9 | 75.5 | 62.3 | 13.2 |
| 75+15 | 5:1 | 36.7 | 39.2 | 75.7 | 61.5 | 14.2 |
| 75+30 | 5:2 | 36.7 | 76.5 | 98.3 | 85.1 | 13.2 |

**Table 49 Control effects of A2 or oxadiazon alone and of a combination thereof on Echinochloa crusgalli var. zelayensis (soil sealing treatment)**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+37.5 | 4:1 | 45.2 | 4.2 | 59.1 | 47.5 | 11.6 |
| 150+75 | 2:1 | 45.2 | 25.4 | 71.2 | 59.1 | 12.1 |
| 75+150 | 1:2 | 21.4 | 41.5 | 66.3 | 54.0 | 12.3 |
| 75+300 | 1:4 | 21.4 | 64.2 | 85.2 | 71.9 | 13.3 |

**Table 50 Control effects of A2 or oxadiargyl alone and of a combination thereof on Echinochloa crusgalli var. zelayensis (soil sealing treatment)**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 45.2 | 1.6 | 56.5 | 46.1 | 10.4 |
| 150+15 | 10:1 | 45.2 | 10.4 | 61.2 | 50.9 | 10.3 |
| 75+30 | 5:2 | 21.4 | 38.8 | 64.2 | 51.9 | 12.3 |
| 75+60 | 5:4 | 21.4 | 63.5 | 82.7 | 71.3 | 11.4 |

**Table 51 Control effects of A1 orpenoxsulam alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+1.875 | 80:1 | 76.3 | 3.8 | 87.4 | 77.2 | 10.2 |
| 150+3.75 | 40:1 | 76.3 | 15.6 | 92.2 | 80.0 | 12.2 |
| 75+7.5 | 10:1 | 55.2 | 46.5 | 88.9 | 76.1 | 12.8 |
| 75+15 | 5:1 | 55.2 | 69.4 | 99.7 | 86.3 | 13.4 |

**Table 52 Control effects of A1 or bispyribac-sodium alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+1.875 | 80:1 | 76.3 | 5.5 | 88.9 | 77.6 | 11.3 |
| 150+3.75 | 40:1 | 76.3 | 16.0 | 92.8 | 80.1 | 12.7 |
| 75+7.5 | 10:1 | 55.2 | 44.9 | 87.2 | 75.3 | 11.9 |
| 75+15 | 5:1 | 55.2 | 62.1 | 95.6 | 83.0 | 12.6 |

**Table 53 Control effects of A1 or pyrazosulfuron-ethyl alone and of a combination thereof on Ludwigia prostrate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+1.875 | 80:1 | 72.4 | 7.6 | 86.8 | 74.5 | 12.3 |
| 150+3.75 | 40:1 | 72.4 | 13.0 | 89.1 | 76.0 | 13.1 |
| 75+7.5 | 10:1 | 34.3 | 52.2 | 81.2 | 68.6 | 12.6 |
| 75+15 | 5:1 | 34.3 | 75.3 | 95.9 | 83.8 | 12.1 |

**Table 54 Control effects of A1 or nicosulfuron alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 76.3 | 3.8 | 88.4 | 77.2 | 11.2 |
| 150+7.5 | 20:1 | 76.3 | 14.3 | 91.6 | 79.7 | 11.9 |
| 75+15 | 5:1 | 55.2 | 40.2 | 87.5 | 73.2 | 14.3 |
| 75+30 | 5:2 | 55.2 | 58.5 | 94.3 | 81.4 | 12.9 |

**Table 55 Control effects of A1 or florasulam alone and of a combination thereof on Malachium aquaticum**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 15+0.375 | 40:1 | 69.6 | 3.6 | 80.9 | 70.7 | 10.2 |
| 15+0.75 | 20:1 | 69.6 | 17.4 | 86.2 | 74.9 | 11.3 |
| 7.5+1.5 | 5:1 | 35.8 | 56.4 | 85.9 | 72.0 | 13.9 |
| 7.5+3.0 | 5:2 | 35.8 | 77.6 | 98.2 | 85.6 | 12.6 |

**Table 56 Control effects of A1 or rimsulfuron alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+1.875 | 80:1 | 76.3 | 5.5 | 87.8 | 77.6 | 10.2 |
| 150+3.75 | 40:1 | 76.3 | 25.3 | 94.6 | 82.3 | 12.3 |
| 75+7.5 | 10:1 | 55.2 | 37.9 | 87.8 | 72.2 | 15.6 |
| 75+15 | 5:1 | 55.2 | 65.8 | 97.6 | 84.7 | 12.9 |

**Table 57 Control effects of A1 or imazethapyr alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 76.3 | 4.2 | 87.8 | 77.3 | 10.5 |
| 150+15 | 10:1 | 76.3 | 18.1 | 94.3 | 80.6 | 13.7 |
| 75+30 | 5:2 | 55.2 | 34.8 | 85.6 | 70.8 | 14.8 |
| 75+60 | 5:4 | 55.2 | 55.6 | 93.7 | 80.1 | 13.6 |

**Table 58 Control effects of A1 or imazapic alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+9.375 | 16:1 | 76.3 | 6.8 | 89.9 | 77.9 | 12.0 |
| 150+18.75 | 8:1 | 76.3 | 21.5 | 92.8 | 81.4 | 11.4 |
| 75+37.5 | 2:1 | 55.2 | 28.6 | 81.2 | 68.0 | 13.2 |
| 75+75 | 1:1 | 55.2 | 55.6 | 93.4 | 80.1 | 13.3 |

**Table 59 Control effects of A1 or imazamox alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 76.3 | 7.6 | 90.2 | 78.1 | 12.1 |
| 150+7.5 | 20:1 | 76.3 | 16.5 | 93.4 | 80.2 | 13.2 |
| 75+15 | 5:1 | 55.2 | 24.8 | 81.8 | 66.3 | 15.5 |
| 75+30 | 5:2 | 55.2 | 53.8 | 92.1 | 79.3 | 12.8 |

**Table 60 Control effects of A1 or sulfometuron-methyl alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+9.375 | 16:1 | 76.3 | 3.8 | 87.3 | 77.2 | 10.1 |
| 150+18.75 | 8:1 | 76.3 | 13.9 | 95.5 | 79.6 | 15.9 |
| 75+37.5 | 2:1 | 55.2 | 24.6 | 79.6 | 66.2 | 13.4 |
| 75+75 | 1:1 | 55.2 | 52.7 | 91.6 | 78.8 | 12.8 |

**Table 61 Control effects of A1 or cloransulam-methyl alone and of a combination thereof on Sonchus arvensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 60+1.875 | 32:1 | 70.7 | 6.5 | 84.1 | 72.6 | 11.5 |
| 60+3.75 | 16:1 | 70.7 | 15.0 | 89.6 | 75.1 | 14.5 |
| 30+7.5 | 4:1 | 33.3 | 52.8 | 82.2 | 68.5 | 13.7 |
| 30+15 | 2:1 | 33.3 | 72.9 | 93.8 | 81.9 | 11.9 |

**Table 62 Control effects of A1 or cyhalofop-butyl alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+9.375 | 16:1 | 76.3 | 5.9 | 87.9 | 77.7 | 10.2 |
| 150+18.75 | 8:1 | 76.3 | 11.4 | 89.6 | 79.0 | 10.6 |
| 75+37.5 | 2:1 | 55.2 | 29.9 | 81.4 | 68.6 | 12.8 |
| 75+75 | 1:1 | 55.2 | 69.6 | 97.6 | 86.4 | 11.2 |

**Table 63 Control effects of A1 or clodinafop-propargyl alone and of a combination thereof on Alopecurus japonicus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 48.1 | 3.0 | 61.4 | 49.7 | 11.8 |
| 150+7.5 | 20:1 | 48.1 | 10.6 | 69.0 | 53.6 | 15.4 |
| 75+15 | 5:1 | 25.6 | 57.8 | 83.8 | 68.6 | 15.2 |
| 75+30 | 5:2 | 25.6 | 79.9 | 98.8 | 85.1 | 13.8 |

**Table 64 Control effects of A1 or pinoxaden alone and of a combination thereof on Alopecurus japonicus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 48.1 | 2.5 | 61.3 | 49.4 | 11.9 |
| 150+7.5 | 20:1 | 48.1 | 12.1 | 68.6 | 54.4 | 14.2 |
| 75+15 | 5:1 | 25.6 | 41.7 | 72.7 | 56.6 | 16.1 |
| 75+30 | 5:2 | 25.6 | 71.8 | 92.5 | 79.0 | 13.5 |

**Table 65 Control effects of A1 or clethodim alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 76.3 | 3.4 | 87.3 | 77.1 | 10.2 |
| 150+15 | 10:1 | 76.3 | 27.0 | 93.6 | 82.7 | 10.9 |
| 75+30 | 5:2 | 55.2 | 43.8 | 87.4 | 74.8 | 12.6 |
| 75+60 | 5:4 | 55.2 | 67.4 | 98.1 | 85.4 | 12.7 |

**Table 66 Control effects of A1 or sethoxydim alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+15 | 10:1 | 76.3 | 5.1 | 88.6 | 77.5 | 11.1 |
| 150+30 | 5:1 | 76.3 | 21.5 | 93.8 | 81.4 | 12.4 |
| 75+60 | 5:4 | 55.2 | 42.6 | 88.2 | 74.3 | 13.9 |
| 75+120 | 5:8 | 55.2 | 61.6 | 97.2 | 82.8 | 14.4 |

**Table 67 Control effects of A1 or quizalofop-P-methyl alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 76.3 | 3.4 | 88.7 | 77.1 | 11.6 |
| 150+7.5 | 20:1 | 76.3 | 12.2 | 93.2 | 79.2 | 14.0 |
| 75+15 | 5:1 | 55.2 | 40.8 | 89.2 | 73.5 | 15.7 |
| 75+30 | 5:2 | 55.2 | 72.1 | 99.6 | 87.5 | 12.1 |

**Table 68 Control effects of A1 or fluazifop-P-butyl alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 76.3 | 4.2 | 88.9 | 77.3 | 11.6 |
| 150+7.5 | 20:1 | 76.3 | 13.9 | 92.3 | 79.6 | 12.7 |
| 75+15 | 5:1 | 55.2 | 38.4 | 87.2 | 72.4 | 14.8 |
| 75+30 | 5:2 | 55.2 | 74.1 | 98.6 | 88.4 | 10.2 |

**Table 69 Control effects of A1 or haloxyfop-P-methyl alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 76.3 | 3.0 | 87.2 | 77.0 | 10.2 |
| 150+7.5 | 20:1 | 76.3 | 15.6 | 92.1 | 80.0 | 12.1 |
| 75+15 | 5:1 | 55.2 | 40.2 | 86.2 | 73.2 | 13.0 |
| 75+30 | 5:2 | 55.2 | 73.4 | 98.8 | 88.1 | 10.7 |

**Table 70 Control effects of A1 or atrazine alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 76.3 | 3.8 | 89.5 | 77.2 | 12.3 |
| 150+150 | 1:1 | 76.3 | 13.5 | 90.4 | 79.5 | 10.9 |
| 75+300 | 1:4 | 55.2 | 24.8 | 78.6 | 66.3 | 12.3 |
| 75+600 | 1:8 | 55.2 | 66.5 | 95.7 | 85.0 | 10.7 |

**Table 71 Control effects of A1 or isoproturon alone and of a combination thereof on Alopecurus japonicus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 48.1 | 2.5 | 62.3 | 49.4 | 12.9 |
| 150+150 | 1:1 | 48.1 | 11.4 | 67.2 | 54.0 | 13.2 |
| 75+300 | 1:4 | 25.6 | 56.5 | 82.2 | 67.6 | 14.6 |
| 75+600 | 1:8 | 25.6 | 75.9 | 96.1 | 82.1 | 14.0 |

**Table 72 Control effects of A1 or chlorotoluron alone and of a combination thereof on Alopecurus japonicus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 48.1 | 2.9 | 60.5 | 49.6 | 10.9 |
| 150+150 | 1:1 | 48.1 | 13.1 | 66.7 | 54.9 | 11.8 |
| 75+300 | 1:4 | 25.6 | 39.8 | 69.6 | 55.2 | 14.3 |
| 75+600 | 1:8 | 25.6 | 71.9 | 91.9 | 79.1 | 12.7 |

**Table 73 Control effects of A1 or diuron alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 76.3 | 3.0 | 87.9 | 77.0 | 10.9 |
| 150+150 | 1:1 | 76.3 | 16.5 | 93.3 | 80.2 | 13.1 |
| 75+300 | 1:4 | 55.2 | 28.6 | 79.2 | 68.0 | 11.2 |
| 75+600 | 1:8 | 55.2 | 52.2 | 90.9 | 78.6 | 12.3 |

**Table 74 Control effects of A1 or bentazone alone and of a combination thereof on Abutilon theophrasti**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 15+18.75 | 4:5 | 79.6 | 5.9 | 91.7 | 80.8 | 10.9 |
| 15+37.5 | 2:5 | 79.6 | 11.8 | 94.1 | 82.0 | 12.1 |
| 7.5+75 | 1:10 | 44.3 | 49.0 | 85.2 | 71.6 | 13.6 |
| 7.5+150 | 1:20 | 44.3 | 69.1 | 94.7 | 82.8 | 11.9 |

**Table 75 Control effects of A1 or bromoxynil alone and of a combination thereof on Chenopodium album**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+18.75 | 8:1 | 55.6 | 3.1 | 67.5 | 57.0 | 10.5 |
| 150+37.5 | 4:1 | 55.6 | 10.8 | 72.1 | 60.4 | 11.7 |
| 75+75 | 1:1 | 23.1 | 57.7 | 81.5 | 67.5 | 14.0 |
| 75+150 | 1:2 | 23.1 | 83.6 | 99.7 | 87.4 | 12.3 |

**Table 76 Control effects of A1 or propanil alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 76.3 | 3.8 | 88.8 | 77.2 | 11.6 |
| 150+150 | 1:1 | 76.3 | 21.1 | 94.4 | 81.3 | 13.1 |
| 75+300 | 1:4 | 55.2 | 36.4 | 82.3 | 71.5 | 10.8 |
| 75+600 | 1:8 | 55.2 | 52.5 | 90.4 | 78.7 | 11.7 |

**Table 77 Control effects of A1 or cypyrafluone alone and of a combination thereof on Alopecurus japonicus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+18.75 | 8:1 | 48.1 | 4.0 | 62.5 | 50.2 | 12.3 |
| 150+37.5 | 4:1 | 48.1 | 24.9 | 75.5 | 61.0 | 14.5 |
| 75+75 | 1:1 | 25.6 | 54.8 | 79.7 | 66.4 | 13.3 |
| 75+150 | 1:2 | 25.6 | 81.3 | 98.1 | 86.1 | 12.0 |

**Table 78 Control effects of A1 or bipyrazone alone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 30+1.875 | 16:1 | 75.9 | 2.9 | 88.1 | 76.6 | 11.5 |
| 30+3.75 | 8:1 | 75.9 | 12.9 | 93.2 | 79.0 | 14.2 |
| 15+7.5 | 2:1 | 36.2 | 51.1 | 82.4 | 68.8 | 13.6 |
| 15+15 | 1:1 | 36.2 | 80.3 | 98.1 | 87.4 | 10.7 |

**Table 79 Control effects of A1 or fenpyrazone alone and of a combination thereof on Eleusine indica**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 52.2 | 2.9 | 64.6 | 53.6 | 11.0 |
| 150+15 | 10:1 | 52.2 | 10.9 | 73.6 | 57.4 | 16.2 |
| 75+30 | 5:2 | 24.4 | 38.6 | 67.5 | 53.6 | 13.9 |
| 75+60 | 5:4 | 24.4 | 79.1 | 95.6 | 84.2 | 11.4 |

**Table 80 Control effects of A1 or tripyrasulfone alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+18.75 | 8:1 | 76.3 | 4.6 | 88.4 | 77.4 | 11.0 |
| 150+37.5 | 4:1 | 76.3 | 16.0 | 94.7 | 80.1 | 14.6 |
| 75+75 | 1:1 | 55.2 | 42.6 | 88.2 | 74.3 | 13.9 |
| 75+150 | 1:2 | 55.2 | 74.3 | 98.6 | 88.5 | 10.1 |

**Table 81 Control effects of A1 or tefuryltrione alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 76.3 | 6.8 | 89.7 | 77.9 | 11.8 |
| 150+15 | 10:1 | 76.3 | 13.1 | 91.4 | 79.4 | 12.0 |
| 75+30 | 5:2 | 55.2 | 41.3 | 86.8 | 73.7 | 13.1 |
| 75+60 | 5:4 | 55.2 | 65.4 | 96.6 | 84.5 | 12.1 |

**Table 82 Control effects of A1 or mesotrione alone and of a combination thereof on Eleusine indica**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+15 | 10:1 | 52.2 | 4.0 | 64.8 | 54.1 | 10.7 |
| 150+30 | 5:1 | 52.2 | 10.9 | 71.1 | 57.4 | 13.7 |
| 75+60 | 5:4 | 24.4 | 36.9 | 65.0 | 52.3 | 12.7 |
| 75+120 | 5:8 | 24.4 | 75.0 | 93.5 | 81.1 | 12.4 |

**Table 83 Control effects of A1 or tembotrione alone and of a combination thereof on Eleusine indica**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 52.2 | 5.4 | 65.8 | 54.8 | 11.0 |
| 150+7.5 | 20:1 | 52.2 | 12.3 | 73.1 | 58.1 | 15.0 |
| 75+15 | 5:1 | 24.4 | 39.7 | 68.8 | 54.4 | 14.4 |
| 75+30 | 5:2 | 24.4 | 73.1 | 91.5 | 79.7 | 11.8 |

**Table84 Control effects of A1 or topramezone alone and of a combination thereof on Setaria glauca**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 60+1.875 | 32:1 | 57.6 | 7.3 | 72.5 | 60.7 | 11.8 |
| 60+3.75 | 16:1 | 57.6 | 10.6 | 76.3 | 62.1 | 14.2 |
| 30+7.5 | 4:1 | 34.7 | 35.8 | 71.1 | 58.1 | 13.0 |
| 30+15 | 2:1 | 34.7 | 72.3 | 94.3 | 81.9 | 12.4 |

**Table 85 Control effects of A1 or isoxaflutole alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 76.3 | 2.1 | 89.8 | 76.8 | 13.0 |
| 150+15 | 10:1 | 76.3 | 14.3 | 94.7 | 79.7 | 15.0 |
| 75+30 | 5:2 | 55.2 | 47.9 | 89.4 | 76.7 | 12.7 |
| 75+60 | 5:4 | 55.2 | 63.6 | 94.7 | 83.7 | 11.0 |

**Table 86 Control effects of A1 or benzobicylon alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+37.5 | 4:1 | 76.3 | 2.1 | 90.5 | 76.8 | 13.7 |
| 150+75 | 2:1 | 76.3 | 11.7 | 92.0 | 79.1 | 12.9 |
| 75+150 | 1:2 | 55.2 | 43.3 | 86.6 | 74.6 | 12.0 |
| 75+300 | 1:4 | 55.2 | 54.4 | 91.5 | 79.6 | 12.0 |

**Table 87 Control effects of A1 or diflufenican alone and of a combination thereof on Veronica persica²**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+15 | 10:1 | 42.4 | 2.3 | 55.7 | 43.7 | 12.0 |
| 150+30 | 5:1 | 42.4 | 10.2 | 63.3 | 48.3 | 15.0 |
| 75+60 | 5:4 | 19.6 | 40.3 | 66.3 | 52.0 | 14.3 |
| 75+120 | 5:8 | 19.6 | 76.2 | 93.8 | 80.9 | 12.9 |

**Table 88 Control effects of A1 or flurochloridone alone and of a combination thereof on Veronica persica²**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 42.4 | 2.1 | 56.4 | 43.6 | 12.8 |
| 150+150 | 1:1 | 42.4 | 12.3 | 63.4 | 49.5 | 13.9 |
| 75+300 | 1:4 | 19.6 | 44.5 | 71.7 | 55.4 | 16.3 |
| 75+600 | 1:8 | 19.6 | 79.6 | 97.7 | 83.6 | 14.1 |

**Table 89 Control effects of A1 or clomazone alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+45 | 10:3 | 76.3 | 8.6 | 89.6 | 78.3 | 11.3 |
| 150+90 | 5:3 | 76.3 | 19.0 | 93.5 | 80.8 | 12.7 |
| 75+180 | 5:12 | 55.2 | 47.7 | 89.1 | 76.6 | 12.5 |
| 75+360 | 5:24 | 55.2 | 70.1 | 99.8 | 86.6 | 13.2 |

**Table 90 Control effects of A1 or carfentrazone-ethyl alone and of a combination thereof on Veronica persica²**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+1.875 | 80:1 | 42.4 | 2.6 | 56.3 | 43.9 | 12.4 |
| 150+3.75 | 40:1 | 42.4 | 11.6 | 62.4 | 49.1 | 13.3 |
| 75+7.5 | 10:1 | 19.6 | 36.2 | 62.9 | 48.7 | 14.2 |
| 75+15 | 5:1 | 19.6 | 68.2 | 87.6 | 74.4 | 13.2 |

**Table 91 Control effects of A1 or fomesafen alone and of a combination thereof on Chenopodium album**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+22.5 | 20:3 | 55.6 | 2.7 | 67.0 | 56.8 | 10.2 |
| 150+45 | 10:3 | 55.6 | 18.6 | 77.5 | 63.9 | 13.6 |
| 75+90 | 5:6 | 23.1 | 45.4 | 73.0 | 58.0 | 15.0 |
| 75+180 | 5:12 | 23.1 | 81.9 | 98.8 | 86.1 | 12.7 |

**Table 92 Control effects of A1 or fluoroglycofen alone and of a combination thereof on Chenopodium album**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+0.9375 | 160:1 | 55.6 | 2.3 | 68.7 | 56.6 | 12.1 |
| 150+1.875 | 80:1 | 55.6 | 12.8 | 73.4 | 61.3 | 12.1 |
| 75+3.75 | 20:1 | 23.1 | 40.0 | 67.9 | 53.9 | 14.0 |
| 75+7.5 | 10:1 | 23.1 | 70.6 | 90.3 | 77.4 | 12.9 |

**Table 93 Control effects of A1 or oxyfluorfen alone and of a combination thereof on Chenopodium album**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 55.6 | 3.6 | 67.8 | 57.2 | 10.6 |
| 150+15 | 10:1 | 55.6 | 11.9 | 71.9 | 60.9 | 11.0 |
| 75+30 | 5:2 | 23.1 | 30.7 | 59.9 | 46.7 | 13.2 |
| 75+60 | 5:4 | 23.1 | 68.1 | 87.6 | 75.5 | 12.1 |

**Table 94 Control effects of A1 or lactofen alone and of a combination thereof on Chenopodium album**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 55.6 | 3.3 | 67.8 | 57.1 | 10.7 |
| 150+15 | 10:1 | 55.6 | 10.4 | 73.6 | 60.2 | 13.4 |
| 75+30 | 5:2 | 23.1 | 39.7 | 66.1 | 53.6 | 12.5 |
| 75+60 | 5:4 | 23.1 | 65.4 | 84.3 | 73.4 | 10.9 |

**Table 95 Control effects of A1 or acifluorfen-sodium alone and of a combination thereof on Chenopodium album**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+37.5 | 4:1 | 55.6 | 2.0 | 67.8 | 56.5 | 11.3 |
| 150+75 | 2:1 | 55.6 | 13.7 | 72.2 | 61.7 | 10.5 |
| 75+150 | 1:2 | 23.1 | 45.0 | 71.2 | 57.7 | 13.5 |
| 75+300 | 1:4 | 23.1 | 81.0 | 96.0 | 85.4 | 10.6 |

**Table 96 Control effects of A1 or flumioxazin alone and of a combination thereof on Chenopodium album**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 55.6 | 3.4 | 69.9 | 57.1 | 12.8 |
| 150+15 | 10:1 | 55.6 | 12.8 | 74.4 | 61.3 | 13.1 |
| 75+30 | 5:2 | 23.1 | 37.3 | 64.2 | 51.8 | 12.4 |
| 75+60 | 5:4 | 23.1 | 78.8 | 94.9 | 83.7 | 11.2 |

**Table 97 Control effects of A1 or sulfentrazone alone and of a combination thereof on Echinochloa caudate**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+1.875 | 80:1 | 76.3 | 6.6 | 89.2 | 77.9 | 11.4 |
| 150+3.75 | 40:1 | 76.3 | 10.8 | 92.6 | 78.9 | 13.8 |
| 75+7.5 | 10:1 | 55.2 | 24.5 | 79.1 | 66.2 | 12.9 |
| 75+15 | 5:1 | 55.2 | 52.6 | 90.4 | 78.8 | 11.6 |

**Table 98 Control effects of A1 or saflufenacil alone and of a combination thereof on Ipomoea purpurea**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 59.5 | 7.9 | 74.0 | 62.7 | 11.3 |
| 150+7.5 | 20:1 | 59.5 | 16.0 | 78.1 | 66.0 | 12.1 |
| 75+15 | 5:1 | 37.7 | 41.3 | 76.9 | 63.4 | 13.5 |
| 75+30 | 5:2 | 37.7 | 75.9 | 97.8 | 85.0 | 12.8 |

**Table 99 Control effects of A1 or oxadiazon alone and of a combination thereof on Echinochloa caudate (soil sealing treatment)**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+37.5 | 4:1 | 47.2 | 6.0 | 62.2 | 50.4 | 11.9 |
| 150+75 | 2:1 | 47.2 | 22.1 | 71.4 | 58.9 | 12.6 |
| 75+150 | 1:2 | 23.4 | 39.5 | 66.6 | 53.7 | 12.9 |
| 75+300 | 1:4 | 23.4 | 63.0 | 85.4 | 71.7 | 13.7 |

**Table 100 Control effects of A1 or oxadiargyl alone and of a combination thereof on Echinochloa caudate (soil sealing treatment)**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 47.2 | 1.7 | 58.7 | 48.1 | 10.6 |
| 150+15 | 10:1 | 47.2 | 10.8 | 63.3 | 52.9 | 10.4 |
| 75+30 | 5:2 | 23.4 | 37.2 | 64.4 | 51.9 | 12.5 |
| 75+60 | 5:4 | 23.4 | 62.5 | 83.0 | 71.3 | 11.7 |

**Table 101 Control effects of A4 or penoxsulam alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+1.875 | 80:1 | 74.7 | 4.7 | 86.6 | 75.9 | 10.7 |
| 150+3.75 | 40:1 | 74.7 | 13.8 | 90.2 | 78.2 | 12.0 |
| 75+7.5 | 10:1 | 52.6 | 47.9 | 87.8 | 75.3 | 12.5 |
| 75+15 | 5:1 | 52.6 | 68.4 | 98.7 | 85.0 | 13.7 |

**Table 102 Control effects of A4 or bispyribac-sodium alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+1.875 | 80:1 | 74.7 | 4.7 | 87.4 | 75.9 | 11.5 |
| 150+3.75 | 40:1 | 74.7 | 18.2 | 91.3 | 79.3 | 12.0 |
| 75+7.5 | 10:1 | 52.6 | 44.1 | 85.2 | 73.5 | 11.7 |
| 75+15 | 5:1 | 52.6 | 62.0 | 94.3 | 82.0 | 12.3 |

**Table 103 Control effects of A3 orpyrazosulfuron-ethyl alone and of a combination thereof on Ammannia arenaria**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+1.875 | 80:1 | 66.2 | 16.3 | 82.7 | 71.7 | 11.0 |
| 150+3.75 | 40:1 | 66.2 | 26.1 | 86.4 | 75.0 | 11.4 |
| 75+7.5 | 10:1 | 30.4 | 52.8 | 79.6 | 67.1 | 12.5 |
| 75+15 | 5:1 | 30.4 | 77.2 | 95.4 | 84.1 | 11.3 |

**Table 104 Control effects of A4 or nicosulfuron alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 74.7 | 9.9 | 88.4 | 77.2 | 11.2 |
| 150+7.5 | 20:1 | 74.7 | 18.2 | 91.8 | 79.3 | 12.5 |
| 75+15 | 5:1 | 52.6 | 40.5 | 86.2 | 71.8 | 14.4 |
| 75+30 | 5:2 | 52.6 | 62.4 | 94.3 | 82.2 | 12.1 |

**Table 105 Control effects of A3 or florasulam alone and of a combination thereof on Stellaria media**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 15+0.375 | 40:1 | 67.9 | 6.8 | 82.3 | 70.1 | 12.3 |
| 15+0.75 | 20:1 | 67.9 | 22.3 | 87.9 | 75.1 | 12.9 |
| 7.5+1.5 | 5:1 | 34.1 | 56.9 | 86.1 | 71.6 | 14.6 |
| 7.5+3.0 | 5:2 | 34.1 | 76.6 | 97.9 | 84.6 | 13.4 |

**Table 106 Control effects of A4 or rimsulfuron alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+1.875 | 80:1 | 74.7 | 10.3 | 88.3 | 77.3 | 11.0 |
| 150+3.75 | 40:1 | 74.7 | 26.9 | 93.7 | 81.5 | 12.2 |
| 75+7.5 | 10:1 | 52.6 | 43.7 | 88.0 | 73.3 | 14.7 |
| 75+15 | 5:1 | 52.6 | 69.6 | 98.1 | 85.6 | 12.5 |

**Table 107 Control effects of A4 or imazethapyr alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 74.7 | 6.7 | 86.8 | 76.4 | 10.4 |
| 150+15 | 10:1 | 74.7 | 17.8 | 92.7 | 79.2 | 13.5 |
| 75+30 | 5:2 | 52.6 | 34.6 | 83.1 | 69.0 | 14.1 |
| 75+60 | 5:4 | 52.6 | 58.2 | 93.0 | 80.2 | 12.8 |

**Table 108 Control effects of A4 or imazapic alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+9.375 | 16:1 | 74.7 | 4.0 | 87.0 | 75.7 | 11.3 |
| 150+18.75 | 8:1 | 74.7 | 21.3 | 92.1 | 80.1 | 12.0 |
| 75+37.5 | 2:1 | 52.6 | 30.4 | 82.4 | 67.0 | 15.4 |
| 75+75 | 1:1 | 52.6 | 59.7 | 93.4 | 80.9 | 12.5 |

**Table 109 Control effects of A4 or imazamox alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 74.7 | 4.0 | 88.4 | 75.7 | 12.7 |
| 150+7.5 | 20:1 | 74.7 | 12.6 | 90.4 | 77.9 | 12.5 |
| 75+15 | 5:1 | 52.6 | 27.6 | 80.1 | 65.7 | 14.4 |
| 75+30 | 5:2 | 52.6 | 54.4 | 91.2 | 78.4 | 12.8 |

**Table 110 Control effects of A4 or sulfometuron-methyl alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+9.375 | 16:1 | 74.7 | 3.2 | 85.9 | 75.5 | 10.4 |
| 150+18.75 | 8:1 | 74.7 | 12.6 | 92.7 | 77.9 | 14.8 |
| 75+37.5 | 2:1 | 52.6 | 38.0 | 84.1 | 70.6 | 13.5 |
| 75+75 | 1:1 | 52.6 | 53.8 | 90.8 | 78.1 | 12.7 |

**Table 111 Control effects of A3 or cloransulam-methyl alone and of a combination thereof on Cirsium setosum**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 60+1.875 | 32:1 | 64.3 | 13.6 | 80.8 | 69.1 | 11.6 |
| 60+3.75 | 16:1 | 64.3 | 23.1 | 86.5 | 72.5 | 13.9 |
| 30+7.5 | 4:1 | 31.5 | 53.8 | 81.9 | 68.3 | 13.5 |
| 30+15 | 2:1 | 31.5 | 71.9 | 93.0 | 80.7 | 12.2 |

**Table 112 Control effects of A4 or cyhalofop-butyl alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+9.375 | 16:1 | 74.7 | 5.5 | 87.5 | 76.1 | 11.4 |
| 150+18.75 | 8:1 | 74.7 | 15.0 | 89.7 | 78.5 | 11.2 |
| 75+37.5 | 2:1 | 52.6 | 32.1 | 81.5 | 67.8 | 13.7 |
| 75+75 | 1:1 | 52.6 | 63.5 | 97.9 | 82.7 | 15.2 |

**Table 113 Control effects of A3 or clodinafop-propargyl alone and of a combination thereof on Beckmannia syzigachne**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 42.8 | 10.3 | 60.7 | 48.7 | 12.0 |
| 150+7.5 | 20:1 | 42.8 | 20.1 | 67.8 | 54.3 | 13.5 |
| 75+15 | 5:1 | 23.0 | 59.6 | 83.0 | 68.9 | 14.1 |
| 75+30 | 5:2 | 23.0 | 81.2 | 97.9 | 85.5 | 12.4 |

**Table 114 Control effects of A3 or pinoxaden alone and of a combination thereof on Beckmannia syzigachne**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 42.8 | 7.9 | 58.4 | 47.3 | 11.1 |
| 150+7.5 | 20:1 | 42.8 | 18.0 | 66.9 | 53.1 | 13.8 |
| 75+15 | 5:1 | 23.0 | 43.5 | 71.5 | 56.5 | 15.0 |
| 75+30 | 5:2 | 23.0 | 72.6 | 91.7 | 78.9 | 12.8 |

**Table 115 Control effects of A4 or clethodim alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 74.7 | 6.7 | 88.0 | 76.4 | 11.6 |
| 150+15 | 10:1 | 74.7 | 19.0 | 92.4 | 79.5 | 12.9 |
| 75+30 | 5:2 | 52.6 | 37.8 | 85.6 | 70.5 | 15.1 |
| 75+60 | 5:4 | 52.6 | 62.7 | 96.0 | 82.3 | 13.7 |

**Table 116 Control effects of A4 or sethoxydim alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+15 | 10:1 | 74.7 | 5.5 | 87.8 | 76.1 | 11.7 |
| 150+30 | 5:1 | 74.7 | 13.8 | 93.0 | 78.2 | 14.8 |
| 75+60 | 5:4 | 52.6 | 35.4 | 87.7 | 69.4 | 18.3 |
| 75+120 | 5:8 | 52.6 | 68.4 | 97.4 | 85.0 | 12.4 |

**Table 117 Control effects of A4 or quizalofop-P-methyl alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 74.7 | 5.9 | 86.3 | 76.2 | 10.1 |
| 150+7.5 | 20:1 | 74.7 | 14.6 | 88.7 | 78.4 | 10.3 |
| 75+15 | 5:1 | 52.6 | 38.6 | 86.2 | 70.9 | 15.3 |
| 75+30 | 5:2 | 52.6 | 63.3 | 95.4 | 82.6 | 12.8 |

**Table 118 Control effects of A4 or fluazifop-P-butyl alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 74.7 | 5.5 | 87.6 | 76.1 | 11.5 |
| 150+7.5 | 20:1 | 74.7 | 14.2 | 90.3 | 78.3 | 12.0 |
| 75+15 | 5:1 | 52.6 | 32.9 | 85.0 | 68.2 | 16.8 |
| 75+30 | 5:2 | 52.6 | 71.5 | 97.1 | 86.5 | 10.6 |

**Table 119 Control effects of A4 or haloxyfop-P-methyl alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 74.7 | 7.9 | 88.0 | 76.7 | 11.3 |
| 150+7.5 | 20:1 | 74.7 | 19.0 | 92.0 | 79.5 | 12.5 |
| 75+15 | 5:1 | 52.6 | 30.4 | 86.1 | 67.0 | 19.1 |
| 75+30 | 5:2 | 52.6 | 66.9 | 97.8 | 84.3 | 13.5 |

**Table 120 Control effects of A4 or atrazine alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 74.7 | 6.7 | 87.4 | 76.4 | 11.0 |
| 150+150 | 1:1 | 74.7 | 21.7 | 91.3 | 80.2 | 11.1 |
| 75+300 | 1:4 | 52.6 | 26.4 | 75.4 | 65.1 | 10.3 |
| 75+600 | 1:8 | 52.6 | 61.8 | 92.7 | 81.9 | 10.8 |

**Table 121 Control effects of A3 or isoproturon alone and of a combination thereof on Beckmannia syzigachne**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 42.8 | 7.0 | 59.0 | 46.8 | 12.2 |
| 150+150 | 1:1 | 42.8 | 15.9 | 64.3 | 51.9 | 12.4 |
| 75+300 | 1:4 | 23.0 | 57.6 | 81.5 | 67.3 | 14.2 |
| 75+600 | 1:8 | 23.0 | 76.6 | 94.9 | 82.0 | 12.9 |

**Table 122 Control effects of A3 or chlorotoluron alone and of a combination thereof on Beckmannia syzigachne**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 42.8 | 5.5 | 56.1 | 45.9 | 10.2 |
| 150+150 | 1:1 | 42.8 | 16.8 | 63.5 | 52.4 | 11.1 |
| 75+300 | 1:4 | 23.0 | 41.1 | 68.1 | 54.6 | 13.5 |
| 75+600 | 1:8 | 23.0 | 72.1 | 90.8 | 78.5 | 12.3 |

**Table 123 Control effects of A4 or diuron alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 74.7 | 4.1 | 86.3 | 75.7 | 10.6 |
| 150+150 | 1:1 | 74.7 | 14.0 | 90.8 | 78.2 | 12.6 |
| 75+300 | 1:4 | 52.6 | 31.3 | 78.7 | 67.4 | 11.3 |
| 75+600 | 1:8 | 52.6 | 56.2 | 91.1 | 79.2 | 11.9 |

**Table 124 Control effects of A3 or bentazone alone and of a combination thereof on Xanthium strumarium**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 15+18.75 | 4:5 | 77.2 | 10.9 | 91.4 | 79.7 | 11.7 |
| 15+37.5 | 2:5 | 77.2 | 16.1 | 93.4 | 80.9 | 12.5 |
| 7.5+75 | 1:10 | 40.8 | 46.6 | 82.5 | 68.4 | 14.1 |
| 7.5+150 | 1:20 | 40.8 | 76.5 | 98.9 | 86.1 | 12.8 |

**Table 125 Control effects of A3 or bromoxynil alone and of a combination thereof on Acalypha australis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+18.75 | 8:1 | 51.6 | 4.6 | 64.5 | 53.8 | 10.6 |
| 150+37.5 | 4:1 | 51.6 | 10.6 | 68.4 | 56.7 | 11.6 |
| 75+75 | 1:1 | 20.7 | 58.9 | 81.5 | 67.4 | 14.0 |
| 75+150 | 1:2 | 20.7 | 84.0 | 99.9 | 87.3 | 12.5 |

**Table 126 Control effects of A4 or propanil alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 74.7 | 7.6 | 88.5 | 76.6 | 11.9 |
| 150+150 | 1:1 | 74.7 | 19.9 | 93.0 | 79.7 | 13.3 |
| 75+300 | 1:4 | 52.6 | 37.0 | 81.7 | 70.1 | 11.6 |
| 75+600 | 1:8 | 52.6 | 53.9 | 89.8 | 78.1 | 11.7 |

**Table 127 Control effects of A3 or cypyrafluone alone and of a combination thereof on Beckmannia syzigachne**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+18.75 | 8:1 | 42.8 | 9.0 | 59.8 | 47.9 | 11.9 |
| 150+37.5 | 4:1 | 42.8 | 14.2 | 64.3 | 50.9 | 13.4 |
| 75+75 | 1:1 | 23.0 | 56.3 | 78.9 | 66.3 | 12.6 |
| 75+150 | 1:2 | 23.0 | 81.8 | 97.2 | 86.0 | 11.2 |

**Table 128 Control effects of A3 or bipyrazone alone and of a combination thereof on Sinapis arvensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 30+1.875 | 16:1 | 72.7 | 9.9 | 87.0 | 75.4 | 11.6 |
| 30+3.75 | 8:1 | 72.7 | 23.8 | 93.2 | 79.2 | 14.0 |
| 15+7.5 | 2:1 | 33.2 | 50.8 | 80.7 | 67.1 | 13.6 |
| 15+15 | 1:1 | 33.2 | 83.7 | 99.8 | 89.1 | 10.7 |

**Table 129 Control effects of A3 or fenpyrazone alone and of a combination thereof on Chloris virgata**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 48.3 | 5.5 | 62.2 | 51.2 | 11.0 |
| 150+15 | 10:1 | 48.3 | 14.8 | 72.1 | 56.0 | 16.1 |
| 75+30 | 5:2 | 22.0 | 39.9 | 67.0 | 53.2 | 13.8 |
| 75+60 | 5:4 | 22.0 | 79.2 | 95.2 | 83.8 | 11.4 |

**Table 130 Control effects of A4 or tripyrasulfone alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+18.75 | 8:1 | 74.7 | 8.9 | 87.9 | 77.0 | 11.0 |
| 150+37.5 | 4:1 | 74.7 | 18.0 | 94.2 | 79.3 | 15.0 |
| 75+75 | 1:1 | 52.6 | 44.6 | 87.6 | 73.8 | 13.9 |
| 75+150 | 1:2 | 52.6 | 75.2 | 98.6 | 88.3 | 10.4 |

**Table 131 Control effects of A4 or tefuryltrione alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 74.7 | 8.9 | 88.9 | 77.0 | 12.0 |
| 150+15 | 10:1 | 74.7 | 18.8 | 91.3 | 79.5 | 11.9 |
| 75+30 | 5:2 | 52.6 | 46.1 | 86.5 | 74.5 | 12.1 |
| 75+60 | 5:4 | 52.6 | 69.3 | 97.3 | 85.5 | 11.9 |

**Table 132 Control effects of A3 or mesotrione alone and of a combination thereof on Chloris virgata**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+15 | 10:1 | 48.3 | 6.5 | 62.4 | 51.7 | 10.7 |
| 150+30 | 5:1 | 48.3 | 13.4 | 69.0 | 55.3 | 13.7 |
| 75+60 | 5:4 | 22.0 | 38.3 | 64.5 | 51.9 | 12.6 |
| 75+120 | 5:8 | 22.0 | 75.2 | 93.0 | 80.7 | 12.3 |

**Table 133 Control effects of A3 or tembotrione alone and of a combination thereof on Chloris virgata**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 48.3 | 4.0 | 61.3 | 50.4 | 10.9 |
| 150+7.5 | 20:1 | 48.3 | 12.3 | 69.7 | 54.7 | 15.0 |
| 75+15 | 5:1 | 22.0 | 41.0 | 68.4 | 54.0 | 14.4 |
| 75+30 | 5:2 | 22.0 | 73.4 | 91.0 | 79.3 | 11.7 |

**Table 134 Control effects of A3 or topramezone alone and of a combination thereof on Setaria faberi**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 60+1.875 | 32:1 | 55.4 | 3.2 | 69.2 | 56.8 | 12.4 |
| 60+3.75 | 16:1 | 55.4 | 11.7 | 74.4 | 60.6 | 13.8 |
| 30+7.5 | 4:1 | 32.5 | 36.5 | 71.8 | 57.1 | 14.7 |
| 30+15 | 2:1 | 32.5 | 75.4 | 95.0 | 83.4 | 11.6 |

**Table 135 Control effects of A4 or isoxaflutole alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 74.7 | 8.1 | 89.3 | 76.8 | 12.6 |
| 150+15 | 10:1 | 74.7 | 19.6 | 94.2 | 79.7 | 14.6 |
| 75+30 | 5:2 | 52.6 | 50.6 | 88.9 | 76.6 | 12.3 |
| 75+60 | 5:4 | 52.6 | 65.5 | 94.2 | 83.7 | 10.6 |

**Table 136 Control effects of A4 or benzobicylon alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+37.5 | 4:1 | 74.7 | 9.3 | 89.9 | 77.1 | 12.9 |
| 150+75 | 2:1 | 74.7 | 18.0 | 91.5 | 79.3 | 12.3 |
| 75+150 | 1:2 | 52.6 | 46.6 | 86.2 | 74.7 | 11.5 |
| 75+300 | 1:4 | 52.6 | 57.3 | 91.0 | 79.8 | 11.3 |

**Table 137 Control effects of A3 or diflufenican alone and of a combination thereof on Solanum nigrum**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+15 | 10:1 | 37.5 | 6.0 | 52.9 | 41.3 | 11.6 |
| 150+30 | 5:1 | 37.5 | 15.0 | 61.5 | 46.9 | 14.6 |
| 75+60 | 5:4 | 16.9 | 41.7 | 65.5 | 51.6 | 13.9 |
| 75+120 | 5:8 | 16.9 | 76.5 | 93.0 | 80.5 | 12.5 |

**Table 138 Control effects of A3 or flurochloridone alone and of a combination thereof on Solanum nigrum**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 37.5 | 5.5 | 53.4 | 41.0 | 12.4 |
| 150+150 | 1:1 | 37.5 | 13.7 | 59.6 | 46.1 | 13.5 |
| 75+300 | 1:4 | 16.9 | 45.8 | 70.9 | 55.0 | 15.9 |
| 75+600 | 1:8 | 16.9 | 79.7 | 96.9 | 83.2 | 13.7 |

**Table 139 Control effects of A4 or clomazone alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+45 | 10:3 | 74.7 | 8.6 | 89.1 | 76.9 | 12.3 |
| 150+90 | 5:3 | 74.7 | 12.9 | 89.9 | 78.0 | 12.0 |
| 75+180 | 5:12 | 52.6 | 50.9 | 88.6 | 76.7 | 11.9 |
| 75+360 | 5:24 | 52.6 | 72.1 | 99.4 | 86.8 | 12.7 |

**Table 140 Control effects of A3 or carfentrazone-ethyl alone and of a combination thereof on Solanum nigrum**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+1.875 | 80:1 | 37.5 | 6.3 | 53.5 | 41.5 | 12.0 |
| 150+3.75 | 40:1 | 37.5 | 12.1 | 58.0 | 45.1 | 12.9 |
| 75+7.5 | 10:1 | 16.9 | 38.0 | 62.1 | 48.5 | 13.6 |
| 75+15 | 5:1 | 16.9 | 68.7 | 86.8 | 74.0 | 12.8 |

**Table 141 Control effects of A3 or fomesafen alone and of a combination thereof on Acalypha australis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+22.5 | 20:3 | 51.6 | 6.4 | 65.2 | 54.7 | 10.4 |
| 150+45 | 10:3 | 51.6 | 12.6 | 71.5 | 57.7 | 13.7 |
| 75+90 | 5:6 | 20.7 | 46.9 | 72.9 | 57.9 | 14.9 |
| 75+180 | 5:12 | 20.7 | 82.4 | 98.8 | 86.0 | 12.7 |

**Table 142 Control effects of A3 or fluoroglycofen alone and of a combination thereof on Acalypha australis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+0.9375 | 160:1 | 51.6 | 4.0 | 65.7 | 53.5 | 12.1 |
| 150+1.875 | 80:1 | 51.6 | 15.7 | 71.6 | 59.2 | 12.3 |
| 75+3.75 | 20:1 | 20.7 | 41.6 | 67.9 | 53.7 | 14.1 |
| 75+7.5 | 10:1 | 20.7 | 71.4 | 90.2 | 77.3 | 12.8 |

**Table 143 Control effects of A3 or oxyfluorfen alone and of a combination thereof on Acalypha australis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 51.6 | 4.6 | 64.4 | 53.8 | 10.5 |
| 150+15 | 10:1 | 51.6 | 12.4 | 68.7 | 57.6 | 11.0 |
| 75+30 | 5:2 | 20.7 | 32.7 | 60.1 | 46.6 | 13.4 |
| 75+60 | 5:4 | 20.7 | 68.9 | 87.6 | 75.3 | 12.2 |

**Table 144 Control effects of A3 or lactofen alone and of a combination thereof on Acalypha australis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 51.6 | 2.7 | 63.8 | 52.9 | 10.8 |
| 150+15 | 10:1 | 51.6 | 13.5 | 71.5 | 58.1 | 13.3 |
| 75+30 | 5:2 | 20.7 | 41.4 | 66.1 | 53.5 | 12.5 |
| 75+60 | 5:4 | 20.7 | 66.4 | 84.5 | 73.3 | 11.1 |

**Table 145 Control effects of A3 or acifluorfen-sodium alone and of a combination thereof on Acalypha australis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+37.5 | 4:1 | 51.6 | 5.8 | 66.0 | 54.4 | 11.5 |
| 150+75 | 2:1 | 51.6 | 11.6 | 67.9 | 57.2 | 10.6 |
| 75+150 | 1:2 | 20.7 | 46.6 | 71.1 | 57.6 | 13.4 |
| 75+300 | 1:4 | 20.7 | 85.3 | 99.0 | 88.3 | 10.6 |

**Table 146 Control effects of A3 or flumioxazin alone and of a combination thereof on Acalypha australis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 51.6 | 6.9 | 67.8 | 54.9 | 12.8 |
| 150+15 | 10:1 | 51.6 | 13.7 | 71.6 | 58.2 | 13.3 |
| 75+30 | 5:2 | 20.7 | 39.0 | 64.2 | 51.6 | 12.5 |
| 75+60 | 5:4 | 20.7 | 79.3 | 94.8 | 83.6 | 11.1 |

**Table 147 Control effects of A4 or sulfentrazone alone and of a combination thereof on Echinochloa oryzoides**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+1.875 | 80:1 | 74.7 | 5.8 | 86.8 | 76.2 | 10.7 |
| 150+3.75 | 40:1 | 74.7 | 18.1 | 92.1 | 79.3 | 12.9 |
| 75+7.5 | 10:1 | 52.6 | 29.7 | 78.5 | 66.7 | 11.9 |
| 75+15 | 5:1 | 52.6 | 56.1 | 89.9 | 79.2 | 10.8 |

**Table 148 Control effects of A3 or saflufenacil alone and of a combination thereof on Sonchus oleraceus L.**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+3.75 | 40:1 | 55.5 | 5.4 | 70.6 | 57.9 | 12.7 |
| 150+7.5 | 20:1 | 55.5 | 13.9 | 75.3 | 61.7 | 13.6 |
| 75+15 | 5:1 | 33.8 | 40.9 | 75.5 | 60.9 | 14.6 |
| 75+30 | 5:2 | 33.8 | 76.6 | 98.1 | 84.5 | 13.6 |

**Table 149 Control effects of A4 or oxadiazon alone and of a combination thereof on Echinochloa oryzoides (soil sealing treatment)**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+37.5 | 4:1 | 42.5 | 5.1 | 56.8 | 45.4 | 11.4 |
| 150+75 | 2:1 | 42.5 | 10.3 | 60.3 | 48.4 | 11.9 |
| 75+150 | 1:2 | 18.9 | 39.7 | 63.2 | 51.1 | 12.1 |
| 75+300 | 1:4 | 18.9 | 50.8 | 73.2 | 60.1 | 13.1 |

**Table 150 Control effects of A4 or oxadiargyl alone and of a combination thereof on Echinochloa oryzoides (soil sealing treatment)**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+7.5 | 20:1 | 42.5 | 2.6 | 54.2 | 44.0 | 10.2 |
| 150+15 | 10:1 | 42.5 | 12.7 | 59.9 | 49.8 | 10.1 |
| 75+30 | 5:2 | 18.9 | 41.6 | 64.7 | 52.6 | 12.1 |
| 75+60 | 5:4 | 18.9 | 63.3 | 81.4 | 70.2 | 11.2 |

**Table 151 Control effects of A172 or glyphosate alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 38.9 | 12.3 | 62.1 | 46.4 | 15.7 |
| 150+150 | 1:1 | 38.9 | 24.6 | 73.9 | 53.9 | 20.0 |
| 75+300 | 1:4 | 21.2 | 43.5 | 78.1 | 55.5 | 22.7 |
| 75+600 | 1:8 | 21.2 | 76.4 | 93.1 | 81.4 | 11.7 |

**Table 152 Control effects of A172 or glufosinate ammonium alone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 47.9 | 2.1 | 65.2 | 49.0 | 16.2 |
| 150+150 | 1:1 | 47.9 | 8.7 | 72.3 | 52.4 | 19.9 |
| 75+300 | 1:4 | 22.4 | 15.3 | 53.7 | 34.3 | 19.4 |
| 75+600 | 1:8 | 22.4 | 34.5 | 74.2 | 49.2 | 25.0 |

**Table 153 Control effects of A67 or glyphosate alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 62.2 | 12.3 | 82.4 | 66.8 | 15.6 |
| 150+150 | 1:1 | 62.2 | 24.6 | 93.3 | 71.5 | 21.8 |
| 75+300 | 1:4 | 23.4 | 43.5 | 78.1 | 56.7 | 21.4 |
| 75+600 | 1:8 | 23.4 | 76.4 | 95.9 | 81.9 | 14.0 |

**Table 154 Control effects of A67 or glyphosate alone and of a combination thereof on Eleusine indica**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 75.3 | 6.9 | 88.7 | 77.0 | 11.7 |
| 150+150 | 1:1 | 75.3 | 13.6 | 92.3 | 78.7 | 13.6 |
| 75+300 | 1:4 | 42.5 | 21.3 | 71.4 | 54.7 | 16.7 |
| 75+600 | 1:8 | 42.5 | 68.9 | 93.9 | 82.1 | 11.8 |

**Table 155 Control effects of A67 or glyphosate alone and of a combination thereof on Sinapis arvensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 72.8 | 2.5 | 86.2 | 73.5 | 12.7 |
| 150+150 | 1:1 | 72.8 | 9.4 | 90.9 | 75.4 | 15.5 |
| 75+300 | 1:4 | 45.7 | 19.8 | 73.6 | 56.5 | 17.1 |
| 75+600 | 1:8 | 45.7 | 37.2 | 85.2 | 65.9 | 19.3 |

**Table 156 Control effects of A67 or glyphosate alone and of a combination thereof on Alopecurus japonicus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 52.4 | 7.6 | 71.3 | 56.0 | 15.3 |
| 150+150 | 1:1 | 52.4 | 19.5 | 75.4 | 61.7 | 13.7 |
| 75+300 | 1:4 | 28.7 | 30.8 | 65.5 | 50.7 | 14.8 |
| 75+600 | 1:8 | 28.7 | 66.9 | 89.4 | 76.4 | 13.0 |

**Table 157 Control effects of A67 or glufosinate ammonium alone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 75.6 | 2.1 | 87.4 | 76.1 | 11.3 |
| 150+150 | 1:1 | 75.6 | 8.7 | 91.6 | 77.7 | 13.9 |
| 75+300 | 1:4 | 51.4 | 15.3 | 83.2 | 58.8 | 24.4 |
| 75+600 | 1:8 | 51.4 | 34.5 | 90.3 | 68.2 | 22.1 |

**Table 158 Control effects of A67 or glufosinate ammonium alone and of a combination thereof on Amaranthus retroflexus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 63.9 | 10.2 | 82.6 | 67.6 | 15.0 |
| 150+150 | 1:1 | 63.9 | 19.6 | 89.4 | 71.0 | 18.4 |
| 75+300 | 1:4 | 31.7 | 28.6 | 83.7 | 51.2 | 32.5 |
| 75+600 | 1:8 | 31.7 | 54.1 | 92.3 | 68.7 | 23.6 |

**Table 159 Control effects of A67 or paraquat dichloride alone and of a combination thereof on Conyza Canadensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 65.6 | 3.2 | 78.4 | 66.7 | 11.7 |
| 150+150 | 1:1 | 65.6 | 17.2 | 85.1 | 71.5 | 13.6 |
| 75+300 | 1:4 | 45.9 | 47.9 | 84.9 | 71.8 | 13.1 |
| 75+600 | 1:8 | 45.9 | 75.2 | 97.6 | 86.6 | 11.0 |

**Table160 Control effects of A67 or diquat Dibromide monohydrate alone and of a combination thereof on Veronica didyma**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 43.1 | 5.5 | 57.7 | 46.2 | 11.5 |
| 150+150 | 1:1 | 43.1 | 12.6 | 73.8 | 50.3 | 23.5 |
| 75+300 | 1:4 | 23.2 | 41.3 | 78.3 | 54.9 | 23.4 |
| 75+600 | 1:8 | 23.2 | 80.4 | 95.8 | 84.9 | 10.9 |

**Table 161 Control effects of A1 or glyphosate alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 69.1 | 12.3 | 85.3 | 72.9 | 12.4 |
| 150+150 | 1:1 | 69.1 | 24.6 | 94.6 | 76.7 | 17.9 |
| 75+300 | 1:4 | 25.9 | 43.5 | 75.4 | 58.1 | 17.3 |
| 75+600 | 1:8 | 25.9 | 76.4 | 96.1 | 82.5 | 13.6 |

**Table 162 Control effects of A1 or glyphosate alone and of a combination thereof on Eleusine indica**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 81.2 | 6.9 | 95.7 | 82.5 | 13.2 |
| 150+150 | 1:1 | 81.2 | 13.6 | 97.8 | 83.8 | 14.0 |
| 75+300 | 1:4 | 46.9 | 21.3 | 76.4 | 58.2 | 18.2 |
| 75+600 | 1:8 | 46.9 | 68.9 | 97.9 | 83.5 | 14.4 |

**Table 163 Control effects of A1 or glyphosate alone and of a combination thereof on Sinapis arvensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 79.9 | 2.5 | 93.1 | 80.4 | 12.7 |
| 150+150 | 1:1 | 79.9 | 9.4 | 97.3 | 81.8 | 15.5 |
| 75+300 | 1:4 | 50.4 | 19.8 | 79.8 | 60.2 | 19.6 |
| 75+600 | 1:8 | 50.4 | 37.2 | 87.4 | 68.9 | 18.5 |

**Table164 Control effects of A1 or glyphosate alone and of a combination thereof on Alopecurus japonicus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 57.6 | 7.6 | 79.7 | 60.8 | 18.9 |
| 150+150 | 1:1 | 57.6 | 19.5 | 83.8 | 65.9 | 17.9 |
| 75+300 | 1:4 | 31.3 | 30.8 | 75.2 | 52.5 | 22.7 |
| 75+600 | 1:8 | 31.3 | 66.9 | 95.1 | 77.3 | 17.8 |

**Table 165 Control effects of A1 or glufosinate ammonium alone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 82.4 | 2.1 | 95.8 | 82.8 | 13.0 |
| 150+150 | 1:1 | 82.4 | 8.7 | 98.7 | 83.9 | 14.8 |
| 75+300 | 1:4 | 56.5 | 15.3 | 82.5 | 63.2 | 19.3 |
| 75+600 | 1:8 | 56.5 | 34.5 | 90.5 | 71.5 | 19.0 |

**Table 166 Control effects of A1 or glufosinate ammonium alone and of a combination thereof on Amaranthus retroflexus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 71.7 | 10.2 | 91.4 | 74.6 | 16.8 |
| 150+150 | 1:1 | 71.7 | 19.6 | 97.2 | 77.2 | 20.0 |
| 75+300 | 1:4 | 35.4 | 28.6 | 76.7 | 53.9 | 22.8 |
| 75+600 | 1:8 | 35.4 | 54.1 | 90.2 | 70.3 | 19.9 |

**Table167 Control effects of A4 or glyphosate alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 56.4 | 12.3 | 72.5 | 61.8 | 10.7 |
| 150+150 | 1:1 | 56.4 | 24.6 | 82.1 | 67.1 | 15.0 |
| 75+300 | 1:4 | 22.2 | 43.5 | 68.8 | 56.0 | 12.8 |
| 75+600 | 1:8 | 22.2 | 76.4 | 94.4 | 81.6 | 12.8 |

**Table 168 Control effects of A4 or glyphosate alone and of a combination thereof on Eleusine indica**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 69.2 | 6.9 | 84.1 | 71.3 | 12.8 |
| 150+150 | 1:1 | 69.2 | 13.6 | 89.2 | 73.4 | 15.8 |
| 75+300 | 1:4 | 38.5 | 21.3 | 69.8 | 51.6 | 18.2 |
| 75+600 | 1:8 | 38.5 | 68.9 | 94.9 | 80.9 | 14.0 |

**Table 169 Control effects of A4 or glyphosate alone and of a combination thereof on Sinapis arvensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 65.9 | 2.5 | 82.1 | 66.8 | 15.3 |
| 150+150 | 1:1 | 65.9 | 9.4 | 89.3 | 69.1 | 20.2 |
| 75+300 | 1:4 | 41.1 | 19.8 | 71.2 | 52.8 | 18.4 |
| 75+600 | 1:8 | 41.1 | 37.2 | 81.2 | 63.0 | 18.2 |

**Table 170 Control effects of A4 or glyphosate alone and of a combination thereof on Alopecurus japonicus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 47.2 | 7.6 | 67.1 | 51.2 | 15.9 |
| 150+150 | 1:1 | 47.2 | 19.5 | 72.3 | 57.5 | 14.8 |
| 75+300 | 1:4 | 24.9 | 30.8 | 63.4 | 48.0 | 15.4 |
| 75+600 | 1:8 | 24.9 | 66.9 | 87.2 | 75.1 | 12.1 |

**Table 171 Control effects of A4 or glufosinate ammonium alone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 67.2 | 2.1 | 79.1 | 67.9 | 11.2 |
| 150+150 | 1:1 | 67.2 | 8.7 | 86.4 | 70.1 | 16.3 |
| 75+300 | 1:4 | 44.2 | 15.3 | 70.2 | 52.7 | 17.5 |
| 75+600 | 1:8 | 44.2 | 34.5 | 79.2 | 63.5 | 15.7 |

**Table 172 Control effects of A4 or glufosinate ammonium alone and of a combination thereof on Amaranthus retroflexus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 57.2 | 10.2 | 72.5 | 61.6 | 10.9 |
| 150+150 | 1:1 | 57.2 | 19.6 | 82.6 | 65.6 | 17.0 |
| 75+300 | 1:4 | 26.7 | 28.6 | 71.4 | 47.7 | 23.7 |
| 75+600 | 1:8 | 26.7 | 54.1 | 84.7 | 66.4 | 18.3 |

**Table 173 Control effects of A171or glyphosate alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 31.9 | 12.3 | 52.3 | 40.3 | 12.0 |
| 150+150 | 1:1 | 31.9 | 24.6 | 64.2 | 48.7 | 15.5 |
| 75+300 | 1:4 | 19.2 | 43.5 | 69.2 | 54.3 | 14.9 |
| 75+600 | 1:8 | 19.2 | 76.4 | 92.3 | 80.9 | 11.4 |

**Table 174 Control effects of A171or glufosinate ammonium alone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 28.9 | 2.1 | 42.2 | 30.4 | 11.8 |
| 150+150 | 1:1 | 28.9 | 8.7 | 53.2 | 35.1 | 18.1 |
| 75+300 | 1:4 | 12.2 | 15.3 | 46.2 | 25.6 | 20.6 |
| 75+600 | 1:8 | 12.2 | 34.5 | 61.3 | 42.5 | 18.8 |

**Table 175 Control effects of A211 or glyphosate alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 68.3 | 12.3 | 83.2 | 72.2 | 11.0 |
| 150+150 | 1:1 | 68.3 | 24.6 | 90.9 | 76.1 | 14.8 |
| 75+300 | 1:4 | 31.3 | 43.5 | 85.2 | 61.2 | 24.0 |
| 75+600 | 1:8 | 31.3 | 76.4 | 98.7 | 83.8 | 14.9 |

**Table 176 Control effects of A211 or glufosinate ammoniumalone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 14.6 | 2.1 | 34.2 | 16.4 | 17.8 |
| 150+150 | 1:1 | 14.6 | 8.7 | 43.8 | 22.0 | 21.8 |
| 75+300 | 1:4 | 5.8 | 15.3 | 41.9 | 20.2 | 21.7 |
| 75+600 | 1:8 | 5.8 | 34.5 | 61.3 | 38.3 | 23.0 |

**Table 177 Control effects of A94 or glyphosate alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 51.7 | 12.3 | 72.3 | 57.6 | 14.7 |
| 150+150 | 1:1 | 51.7 | 24.6 | 82.5 | 63.6 | 18.9 |
| 75+300 | 1:4 | 23.4 | 43.5 | 79.5 | 56.7 | 22.8 |
| 75+600 | 1:8 | 23.4 | 76.4 | 95.3 | 81.9 | 13.4 |

**Table 178 Control effects of A94 or glufosinate ammonium alone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 12.6 | 2.1 | 31.2 | 14.4 | 16.8 |
| 150+150 | 1:1 | 12.6 | 8.7 | 42.7 | 20.2 | 22.5 |
| 75+300 | 1:4 | 6.2 | 15.3 | 38.9 | 20.6 | 18.3 |
| 75+600 | 1:8 | 6.2 | 34.5 | 52.8 | 38.6 | 14.2 |

**Table 179 Control effects of A173 or glyphosate alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 73.6 | 12.3 | 89.7 | 76.8 | 12.9 |
| 150+150 | 1:1 | 73.6 | 24.6 | 93.2 | 80.1 | 13.1 |
| 75+300 | 1:4 | 38.2 | 43.5 | 84.3 | 65.1 | 19.2 |
| 75+600 | 1:8 | 38.2 | 76.4 | 95.9 | 85.4 | 10.5 |

**Table 180 Control effects of A173 or glufosinate ammonium alone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 52.4 | 2.1 | 66.9 | 53.4 | 13.5 |
| 150+150 | 1:1 | 52.4 | 8.7 | 76.8 | 56.5 | 20.3 |
| 75+300 | 1:4 | 24.8 | 15.3 | 52.5 | 36.3 | 16.2 |
| 75+600 | 1:8 | 24.8 | 34.5 | 67.3 | 50.7 | 16.6 |

**Table 181 Control effects of A212 or glyphosate alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 24.6 | 12.3 | 51.4 | 33.9 | 17.5 |
| 150+150 | 1:1 | 24.6 | 24.6 | 62.1 | 43.1 | 19.0 |
| 75+300 | 1:4 | 11.5 | 43.5 | 70.4 | 50.0 | 20.4 |
| 75+600 | 1:8 | 11.5 | 76.4 | 95.3 | 79.1 | 16.2 |

**Table 182 Control effects of A212 or glufosinate ammonium alone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 14.5 | 2.1 | 34.8 | 16.3 | 18.5 |
| 150+150 | 1:1 | 14.5 | 8.7 | 46.2 | 21.9 | 24.3 |
| 75+300 | 1:4 | 8.6 | 15.3 | 43.7 | 22.6 | 21.1 |
| 75+600 | 1:8 | 8.6 | 34.5 | 61.2 | 40.1 | 21.1 |

**Table 183 Control effects of A141 or glyphosate alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 55.8 | 12.3 | 76.4 | 61.2 | 15.2 |
| 150+150 | 1:1 | 55.8 | 24.6 | 83.1 | 66.7 | 16.4 |
| 75+300 | 1:4 | 27.7 | 43.5 | 73.2 | 59.2 | 14.0 |
| 75+600 | 1:8 | 27.7 | 76.4 | 95.1 | 82.9 | 12.2 |

**Table 184 Control effects of A141 or glufosinate ammonium alone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 16.4 | 2.1 | 31.1 | 18.2 | 12.9 |
| 150+150 | 1:1 | 16.4 | 8.7 | 42.9 | 23.7 | 19.2 |
| 75+300 | 1:4 | 7.8 | 15.3 | 36.2 | 21.9 | 14.3 |
| 75+600 | 1:8 | 7.8 | 34.5 | 54.8 | 39.6 | 15.2 |

**Table 185 Control effects of A163 or glyphosate alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 45.4 | 12.3 | 71.2 | 52.2 | 19.0 |
| 150+150 | 1:1 | 45.4 | 24.6 | 81.6 | 58.9 | 22.7 |
| 75+300 | 1:4 | 16.6 | 43.5 | 74.9 | 52.9 | 22.0 |
| 75+600 | 1:8 | 16.6 | 76.4 | 95.8 | 80.3 | 15.5 |

**Table 186 Control effects of A163 or glyphosate alone and of a combination thereof on Eleusine indica**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 56.0 | 6.9 | 73.7 | 59.0 | 14.7 |
| 150+150 | 1:1 | 56.0 | 13.6 | 86.1 | 62.0 | 24.1 |
| 75+300 | 1:4 | 31.7 | 21.3 | 65.0 | 46.2 | 18.8 |
| 75+600 | 1:8 | 31.7 | 68.9 | 91.7 | 78.8 | 12.9 |

**Table 187 Control effects of A163 or glyphosate alone and of a combination thereof on Sinapis arvensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 47.2 | 2.5 | 69.7 | 48.5 | 21.2 |
| 150+150 | 1:1 | 47.2 | 9.4 | 77.3 | 52.1 | 25.2 |
| 75+300 | 1:4 | 29.6 | 19.8 | 70.4 | 43.6 | 26.8 |
| 75+600 | 1:8 | 29.6 | 37.2 | 81.1 | 55.8 | 25.3 |

**Table 188 Control effects of A163 or glyphosate alone and of a combination thereof on Alopecurus japonicus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 44.0 | 7.6 | 61.8 | 48.3 | 13.5 |
| 150+150 | 1:1 | 44.0 | 19.5 | 71.8 | 54.9 | 16.9 |
| 75+300 | 1:4 | 24.1 | 30.8 | 62.3 | 47.5 | 14.8 |
| 75+600 | 1:8 | 24.1 | 66.9 | 89.3 | 74.9 | 14.4 |

**Table 189 Control effects of A163 or glufosinate ammonium alone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 60.5 | 2.1 | 73.9 | 61.3 | 12.6 |
| 150+150 | 1:1 | 60.5 | 8.7 | 88.0 | 63.9 | 24.1 |
| 75+300 | 1:4 | 41.1 | 15.3 | 74.3 | 50.1 | 24.2 |
| 75+600 | 1:8 | 41.1 | 34.5 | 86.2 | 61.4 | 24.8 |

**Table 190 Control effects of A163 or glufosinate ammonium alone and of a combination thereof on Amaranthus retroflexus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 53.7 | 10.2 | 70.1 | 58.4 | 11.7 |
| 150+150 | 1:1 | 53.7 | 19.6 | 85.8 | 62.8 | 23.0 |
| 75+300 | 1:4 | 26.6 | 28.6 | 70.5 | 47.6 | 22.9 |
| 75+600 | 1:8 | 26.6 | 54.1 | 88.5 | 66.3 | 22.2 |

**Table 191 Control effects of A163 or paraquat dichloride alone and of a combination thereof on Conyza Canadensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 55.8 | 3.2 | 75.9 | 57.2 | 18.7 |
| 150+150 | 1:1 | 55.8 | 17.2 | 81.5 | 63.4 | 18.1 |
| 75+300 | 1:4 | 39.0 | 47.9 | 81.7 | 68.2 | 13.5 |
| 75+600 | 1:8 | 39.0 | 75.2 | 97.5 | 84.9 | 12.6 |

**Table 192 Control effects of A163 or diquat Dibromide monohydrate alone and of a combination thereof on Veronica didyma**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 34.5 | 5.5 | 55.2 | 38.1 | 17.1 |
| 150+150 | 1:1 | 34.5 | 12.6 | 70.2 | 42.7 | 27.5 |
| 75+300 | 1:4 | 18.6 | 41.3 | 75.1 | 52.2 | 22.9 |
| 75+600 | 1:8 | 18.6 | 80.4 | 97.7 | 84.0 | 13.7 |

**Table 193 Control effects of A130 or glyphosate alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 36.8 | 12.3 | 66.3 | 44.6 | 21.7 |
| 150+150 | 1:1 | 36.8 | 24.6 | 75.5 | 52.3 | 23.2 |
| 75+300 | 1:4 | 16.7 | 43.5 | 72.7 | 52.9 | 19.8 |
| 75+600 | 1:8 | 16.7 | 76.4 | 93.9 | 80.3 | 13.6 |

**Table 194 Control effects of A130 or glufosinate ammonium alone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 13.2 | 2.1 | 32.6 | 15.0 | 17.6 |
| 150+150 | 1:1 | 13.2 | 8.7 | 45.8 | 20.8 | 25.0 |
| 75+300 | 1:4 | 5.4 | 15.3 | 41.1 | 19.9 | 21.2 |
| 75+600 | 1:8 | 5.4 | 34.5 | 56.2 | 38.0 | 18.2 |

**Table 195 Control effects of A213 or glyphosate alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 31.2 | 12.3 | 53.9 | 39.7 | 14.2 |
| 150+150 | 1:1 | 31.2 | 24.6 | 67.9 | 48.1 | 19.8 |
| 75+300 | 1:4 | 14.9 | 43.5 | 68.2 | 51.9 | 16.3 |
| 75+600 | 1:8 | 14.9 | 76.4 | 91.3 | 79.9 | 11.4 |

**Table 196 Control effects of A213 orglufosinate ammoniumalone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 26.8 | 2.1 | 43.9 | 28.3 | 15.6 |
| 150+150 | 1:1 | 26.8 | 8.7 | 52.8 | 33.2 | 19.6 |
| 75+300 | 1:4 | 14.6 | 15.3 | 48.7 | 27.7 | 21.0 |
| 75+600 | 1:8 | 14.6 | 34.5 | 61.2 | 44.1 | 17.1 |

**Table 197 Control effects of A214 or glyphosate alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 44.6 | 12.3 | 63.9 | 51.4 | 12.5 |
| 150+150 | 1:1 | 44.6 | 24.6 | 74.7 | 58.2 | 16.5 |
| 75+300 | 1:4 | 21.9 | 43.5 | 74.6 | 55.9 | 18.7 |
| 75+600 | 1:8 | 21.9 | 76.4 | 95.6 | 81.6 | 14.0 |

**Table 198 Control effects of A214 or glufosinate ammonium alone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 46.2 | 2.1 | 65.8 | 47.3 | 18.5 |
| 150+150 | 1:1 | 46.2 | 8.7 | 73.8 | 50.9 | 22.9 |
| 75+300 | 1:4 | 24.8 | 15.3 | 68.8 | 36.3 | 32.5 |
| 75+600 | 1:8 | 24.8 | 34.5 | 72.3 | 50.7 | 21.6 |

**Table 199 Control effects of A2 or glyphosate alone and of a combination thereof on Digitaria sanguinalis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 51.6 | 12.3 | 73.8 | 57.6 | 16.2 |
| 150+150 | 1:1 | 51.6 | 24.6 | 87.2 | 63.5 | 23.7 |
| 75+300 | 1:4 | 19.4 | 43.5 | 74.7 | 54.5 | 20.2 |
| 75+600 | 1:8 | 19.4 | 76.4 | 94.5 | 81.0 | 13.5 |

**Table 200 Control effects of A2 or glyphosate alone and of a combination thereof on Eleusine indica**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 63.3 | 6.9 | 83.2 | 65.8 | 17.4 |
| 150+150 | 1:1 | 63.3 | 13.6 | 88.7 | 68.2 | 20.5 |
| 75+300 | 1:4 | 35.7 | 21.3 | 68.2 | 49.4 | 18.8 |
| 75+600 | 1:8 | 35.7 | 68.9 | 91.8 | 80.0 | 11.8 |

**Table 201 Control effects of A2 or glyphosate alone and of a combination thereof on Sinapis arvensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 60.4 | 2.5 | 81.1 | 61.4 | 19.7 |
| 150+150 | 1:1 | 60.4 | 9.4 | 88.2 | 64.1 | 24.1 |
| 75+300 | 1:4 | 37.9 | 19.8 | 72.5 | 50.2 | 22.3 |
| 75+600 | 1:8 | 37.9 | 37.2 | 83.3 | 61.0 | 22.3 |

**Table 202 Control effects of A2 or glyphosate alone and of a combination thereof o Alopecurus japonicusn**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 44.5 | 7.6 | 65.4 | 48.8 | 16.6 |
| 150+150 | 1:1 | 44.5 | 19.5 | 73.9 | 55.4 | 18.5 |
| 75+300 | 1:4 | 24.4 | 30.8 | 63.6 | 47.7 | 15.9 |
| 75+600 | 1:8 | 24.4 | 66.9 | 89.8 | 75.0 | 14.8 |

**Table 203 Control effects of A2 or glufosinate ammonium alone and of a combination thereof on Capsella bursa-pastoris**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 65.0 | 2.1 | 79.3 | 65.8 | 13.5 |
| 150+150 | 1:1 | 65.0 | 8.7 | 85.9 | 68.1 | 17.8 |
| 75+300 | 1:4 | 44.2 | 15.3 | 76.3 | 52.7 | 23.6 |
| 75+600 | 1:8 | 44.2 | 34.5 | 84.1 | 63.5 | 20.6 |

**Table 204 Control effects of A2 or glufosinate ammonium alone and of a combination thereof on Amaranthus retroflexus**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 51.8 | 10.2 | 69.7 | 56.7 | 13.0 |
| 150+150 | 1:1 | 51.8 | 19.6 | 82.5 | 61.2 | 21.3 |
| 75+300 | 1:4 | 25.7 | 28.6 | 72.4 | 46.9 | 25.5 |
| 75+600 | 1:8 | 25.7 | 54.1 | 83.5 | 65.9 | 17.6 |

**Table 205 Control effects of A2 or paraquat dichloride alone and of a combination thereof on Conyza Canadensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 54.4 | 3.2 | 67.2 | 55.9 | 11.3 |
| 150+150 | 1:1 | 54.4 | 17.2 | 78.9 | 62.3 | 16.6 |
| 75+300 | 1:4 | 38.1 | 47.9 | 82.2 | 67.7 | 14.5 |
| 75+600 | 1:8 | 38.1 | 75.2 | 98.4 | 84.6 | 13.8 |

**Table 206 Control effects of A2 or diquat Dibromide monohydrate alone and of a combination thereof on Veronica didyma**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 150+75 | 2:1 | 36.6 | 5.5 | 61.7 | 40.1 | 21.6 |
| 150+150 | 1:1 | 36.6 | 12.6 | 75.3 | 44.6 | 30.7 |
| 75+300 | 1:4 | 19.7 | 41.3 | 79.0 | 52.9 | 26.1 |
| 75+600 | 1:8 | 19.7 | 80.4 | 97.3 | 84.3 | 13.0 |

**Table 207 Control effects of A2 or triclopyr alone and of a combination thereof on Conyza Canadensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 60+300 | 1:5 | 22.6 | 78.4 | 95.1 | 83.3 | 11.8 |

**Table 208 Control effects of A2 or MCPAalone and of a combination thereof on Conyza Canadensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 120+75 | 1.6:1 | 47.9 | 18.8 | 71.3 | 57.7 | 13.6 |

**Table 209 Control effects of A2 or dicamba alone and of a combination thereof on Conyza Canadensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 60+150 | 1:2.5 | 22.6 | 58.7 | 81.4 | 68.0 | 13.4 |

**Table 210 Control effects of A2 or picloram alone and of a combination thereof on Conyza Canadensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 120+7.5 | 16:1 | 47.9 | 5.0 | 60.8 | 50.5 | 10.3 |
| 60+60 | 1:1 | 22.6 | 69.4 | 88.4 | 76.3 | 12.1 |

**Table 211 Control effects of A2 or aminopyralid alone and of a combination thereof on Conyza Canadensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 120+15 | 8:1 | 47.9 | 19.0 | 71.2 | 57.8 | 13.4 |
| 60+30 | 2:1 | 22.6 | 40.7 | 65.8 | 54.1 | 11.7 |

**Table 212 Control effects of A2 or fluroxypyr alone and of a combination thereof on Conyza Canadensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 120+37.5 | 3.2:1 | 47.9 | 5.8 | 63.4 | 50.9 | 12.5 |

**Table 213 Control effects of A2 or florpyrauxifen benzyl alone and of a combination thereof on Conyza Canadensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 120+1.875 | 64:1 | 47.9 | 3.5 | 59.8 | 49.7 | 10.1 |
| 60+7.5 | 8:1 | 22.6 | 47.4 | 73.2 | 59.3 | 13.9 |

**Table 214 Control effects of A2 or halauxifen-methyl alone and of a combination thereof on Conyza Canadensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 120+3.75 | 32:1 | 47.9 | 20.5 | 72.4 | 58.6 | 13.8 |
| 60+15 | 4:1 | 22.6 | 81.5 | 99.3 | 85.7 | 13.6 |

**Table 215 Control effects of A2 or quinclorac alone and of a combination thereof on Conyza Canadensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 120+30 | 4:1 | 47.9 | 11.7 | 72.5 | 54.0 | 18.5 |
| 120+60 | 2:1 | 47.9 | 28.8 | 82.2 | 62.9 | 19.3 |
| 60+120 | 1:2 | 22.6 | 53.7 | 87.4 | 64.2 | 23.2 |
| 60+240 | 1:4 | 22.6 | 76.2 | 94.7 | 81.6 | 13.1 |

**Table 216 Control effects of A2 or clopyralid alone and of a combination thereof on Conyza Canadensis**

| A + B dose (g a.i./ha) | A:B | Control effect (%) of A applied alone in corresponding dose | Control effect (%) of B applied alone in corresponding dose | Control effect of A + B (%),E | E0 (%) | E-E0 (%) |
|---|---|---|---|---|---|---|
| 120+15 | 8:1 | 47.9 | 6.1 | 78.3 | 51.1 | 27.2 |
| 120+30 | 4:1 | 47.9 | 29.8 | 85.5 | 63.4 | 22.1 |
| 60+60 | 1:1 | 22.6 | 53.5 | 86.7 | 64.0 | 22.7 |
| 60+120 | 1:2 | 22.6 | 82.8 | 98.6 | 86.7 | 11.9 |

### C) Pilot sites

Tests wherein the herbicidal compositions prepared in Examples 1 to 150 were used to control weeds in the fields.

In 2018, a demonstration popularization test was conducted at the pilot sites in Qingdao city of Shandong Province. The weeds in the fields mainly included: *Digitaria sanguinalis, Eleusine indica, Echinochloa crus-galli, Setaria viridis, Panicum miliaceum L., Amaranthus retroflexus, Acalypha australis, Equisetum arvense, Mollugo pentaphyllaL., Juncellus serotinusand* so forth.

### Experimental methods:

Foliage treatment: In the stage of 3-5 leaves of the weeds, the agent was evenly sprayed on stems and leaves through a manual sprayer, wherein the amount of added water was 30 kg/667m².

The specific tested agents and dosage thereof were shown in Table 217. The area of the pilot site was 50 square meters, and each treatment was repeated for 4 times. The weed control efficiency after 45 days of application was shown in Table 217.

Weed control effect expressed by fresh weight (%) = (fresh weight of blank control weed - fresh weight of treated weed) / fresh weight of blank control weed x 100

**Table 217 The control effects of the claimed compositions in pilot sites**

| Example no. | Dosage (g a.i./ha) | Control effect expressed by fresh weight (%) |
|---|---|---|
| 1 | 150 | 97.8 |
| 2 | 180 | 95.6 |
| 3 | 210 | 93.8 |
| 4 | 150 | 98.3 |
| 5 | 180 | 95.2 |
| 6 | 210 | 94.6 |
| 7 | 150 | 97.5 |
| 8 | 180 | 96.7 |
| 9 | 210 | 94.9 |
| 10 | 180 | 96.6 |
| 11 | 210 | 96.7 |
| 12 | 240 | 94.1 |
| 13 | 124.5 | 97.1 |
| 14 | 154.5 | 96.3 |
| 15 | 184.5 | 94.9 |
| 16 | 150 | 96.3 |
| 17 | 180 | 97.8 |
| 18 | 210 | 95.2 |
| 19 | 210 | 95.4 |
| 20 | 240 | 97.8 |
| 21 | 270 | 94.4 |
| 22 | 270 | 95.9 |
| 23 | 300 | 97.4 |
| 24 | 330 | 95.2 |
| 25 | 180 | 95.1 |
| 26 | 210 | 98.9 |
| 27 | 240 | 95.5 |
| 28 | 270 | 94.2 |
| 29 | 300 | 98.9 |
| 30 | 330 | 94.7 |
| 31 | 150 | 94.7 |
| 32 | 180 | 98.5 |
| 33 | 210 | 95.5 |
| 34 | 270 | 93.9 |
| 35 | 300 | 98.3 |
| 36 | 330 | 95.8 |
| 37 | 165 | 97.5 |
| 38 | 195 | 95.1 |
| 39 | 225 | 93.6 |
| 40 | 195 | 97.6 |
| 41 | 225 | 94.9 |
| 42 | 255 | 94.1 |
| 43 | 210 | 97.3 |
| 44 | 240 | 95.8 |
| 45 | 270 | 94.6 |
| 46 | 345 | 96.1 |
| 47 | 375 | 96.5 |
| 48 | 405 | 93.4 |
| 49 | 180 | 96.8 |
| 50 | 210 | 95.8 |
| 51 | 240 | 94.7 |
| 52 | 180 | 95.6 |
| 53 | 210 | 97.5 |
| 54 | 240 | 94.7 |
| 55 | 180 | 95.1 |
| 56 | 210 | 97.3 |
| 57 | 240 | 94.2 |
| 58 | 870 | 95.2 |
| 59 | 900 | 97.1 |
| 60 | 930 | 94.7 |
| 61 | 870 | 94.9 |
| 62 | 900 | 97.8 |
| 63 | 930 | 95.2 |
| 64 | 870 | 93.7 |
| 65 | 900 | 98.7 |
| 66 | 930 | 93.5 |
| 67 | 1020 | 94.4 |
| 68 | 1050 | 97.7 |
| 69 | 1080 | 95.3 |
| 70 | 720 | 93.2 |
| 71 | 750 | 97.5 |
| 72 | 780 | 95.3 |
| 73 | 300 | 92.7 |
| 74 | 330 | 96.5 |
| 75 | 360 | 95.3 |
| 76 | 1620 | 94.5 |
| 77 | 1650 | 94.9 |
| 78 | 1680 | 97.2 |
| 79 | 255 | 94.1 |
| 80 | 285 | 94.8 |
| 81 | 315 | 96.3 |
| 82 | 150 | 93.5 |
| 83 | 180 | 94.5 |
| 84 | 210 | 96.8 |
| 85 | 255 | 94.2 |
| 86 | 285 | 94.7 |
| 87 | 315 | 96.2 |
| 88 | 300 | 94.9 |
| 89 | 330 | 93.2 |
| 90 | 360 | 98.5 |
| 91 | 210 | 92.3 |
| 92 | 240 | 94.1 |
| 93 | 270 | 96.9 |
| 94 | 270 | 95.1 |
| 95 | 300 | 92.5 |
| 96 | 330 | 96.7 |
| 97 | 210 | 94.8 |
| 98 | 240 | 92.2 |
| 99 | 270 | 96.3 |
| 100 | 165 | 94.2 |
| 101 | 195 | 93.8 |
| 102 | 225 | 94.4 |
| 103 | 210 | 97.9 |
| 104 | 240 | 95.7 |
| 105 | 270 | 94.5 |
| 106 | 420 | 97.1 |
| 107 | 450 | 93.3 |
| 108 | 480 | 93.8 |
| 109 | 270 | 97.2 |
| 110 | 300 | 93.7 |
| 111 | 330 | 94.2 |
| 112 | 870 | 96.5 |
| 113 | 900 | 93.8 |
| 114 | 930 | 92.9 |
| 115 | 570 | 99.8 |
| 116 | 600 | 92.6 |
| 117 | 630 | 92.9 |
| 118 | 150 | 96.6 |
| 119 | 180 | 94.3 |
| 120 | 210 | 92.3 |
| 121 | 495 | 97.9 |
| 122 | 525 | 94.6 |
| 123 | 555 | 96.8 |
| 124 | 135 | 95.4 |
| 125 | 165 | 95.8 |
| 126 | 195 | 97.4 |
| 127 | 300 | 92.1 |
| 128 | 330 | 93.5 |
| 129 | 360 | 96.4 |
| 130 | 240 | 93.5 |
| 131 | 270 | 95.4 |
| 132 | 300 | 96.3 |
| 133 | 570 | 93.1 |
| 134 | 600 | 93.2 |
| 135 | 630 | 99.3 |
| 136 | 210 | 92.1 |
| 137 | 240 | 92.7 |
| 138 | 270 | 95.5 |
| 139 | 480 | 95.1 |
| 140 | 510 | 93.6 |
| 141 | 540 | 98.2 |
| 142 | 480 | 93.4 |
| 143 | 510 | 97.9 |
| 144 | 540 | 94.6 |
| 145 | 720 | 91.5 |
| 146 | 750 | 96.7 |
| 147 | 780 | 94.9 |
| 148 | 210 | 93.7 |
| 149 | 240 | 95.8 |
| 150 | 270 | 96.3 |

### D) In-house evaluation tests

The indoor evaluation test was conducted using the herbicide composition produced by A) Example 151-165, and the specific test method was the same as the corresponding part of B) the Efficacy Assays.

### Test weed: Echinochloa crus-galli, Digitaria sanguinalis, Eleusine indica, Setaria viridis, Panicum miliaceum L., Amaranthus retroflexus, Abutilon theophrasti, Acalypha australis.

Test crop (containing glyphosate-, 2,4-D-resistance trait): maize SmartStax^{™}Pro x Enlist^{™}(Event Name MON87427 x MON89034 x TC1507 x MON87411 x 59122 x DAS40278), Soybean Conkesta Enlist E3^{™} (Event Name DAS81419 x) (DAS44406).

Leaf age in the stem and leaf treatments: weed in the stage of 3-5 leaves, maize in the stage of 3-5 leaves with one leaf not fully expanded, and soybean in 2nd to 3rd trilobular stage.

The specific test agents, dosages and the results of the 20-day post-application surveys were shown in Table 218.

Weed control effect expressed by fresh weight (%) = (fresh weight of blank control weed - fresh weight of treated weed) / fresh weight of blank control weed x 100

**Table 218 Application of the compounded compositions on transgenic herbicide-resistant trait crops**

| Agents | Dosage (g a.i./ha) | Weed control effect expressed by fresh weight (%) | Safety of the maize | Safety of the soybean |
|---|---|---|---|---|
| 151 | 1125 | 93.1 | Safety | Safety |
| 152 | 900 | 96.4 | Safety | Safety |
| 153 | 877.5 | 97.2 | Safety | Safety |
| 154 | 945 | 95.2 | Safety | Safety |
| 155 | 1125 | 94.9 | Safety | Safety |
| 156 | 900 | 92.3 | Safety | Safety |
| 157 | 1125 | 91.7 | Safety | Safety |
| 158 | 900 | 93.9 | Safety | Safety |
| 159 | 1125 | 94.6 | Safety | Safety |
| 160 | 900 | 92.0 | Safety | Safety |
| 161 | 900 | 95.5 | Safety | Safety |
| 162 | 900 | 94.2 | Safety | Safety |
| 163 | 900 | 91.6 | Safety | Safety |
| 164 | 900 | 93.2 | Safety | Safety |
| 165 | 900 | 96.0 | Safety | Safety |

After making extensive experimentations and explorations, the present inventors have unexpectedly discovered that after the claimed compsositions are used to control broadleaf weeds such as *Ammannia arenaria, Amaranthus retroflexus, Acalypha australis, Solanum nigrum, Eclipta prostrate, Galium aparine L., Convolvulus arvensis, Conyza Canadensis, Capsella bursa-pastoris, Abutilon theophrasti, Veronica persica, Malachium aquaticum, Stellaria media, Sinapis arvensis, Ludwigia prostrate, Lindernia procumbens, Sonchus arvensis, Sonchus oleraceus L., Cirsium setosum, Xanthium strumarium, Descurainia sophia, Chenopodium album, Commelina communis, Ipomoea purpurea,* etc.; grassy weeds such as *Alopecurus aequalis, Alopecurus japonicus, Chloris virgata, Echinochloa crus-galli, Echinochloa crusgalli var. zelayensis, Echinochloa oryzoides, Echinochloa caudate, Setaria faberi, Setaria viridis, Setaria glauca, Digitaria sanguinalis, Eleusine indica, Beckmannia syzigachne, Eriochloa villosa, Panicum miliaceum,* etc.; and equisetaceous weeds such as *Equisetum arvense,* etc., and, surprising and unexpected synergistic effects are achieved, and the synergistic effects are particularly significant at low doses, thereby reducing application dose and reducing environmental pollution, and the rational compounding leads to reduced agricultural costs and highly effective control of weeds resistant to ALS and ACCase inhibitors. The claimed compositions have a good application prospect. At the same time, it was shown by experimentations that the claimed compositions exhibit good selectivity and excellent synergistic effects in fields such as wheat fields, maize fields and rice fields, as well as for crops such as peanuts, sugar cane, sorghum, millet, potato, rape, soybean, cotton, vegetables, annual bluegrass, Tall fescue, and *Zoysia japonica,* and can be developed into herbicidical blends having broad market values.

## Claims

1. An herbicidal composition comprising an active ingredient A and an active ingredient B in an herbicidally effective amount, wherein the ingredient A to the ingredient B is in a weight ratio of 1:30~100:1, wherein, the combination of active ingredient A and the active ingredient B is selected from group 1 and group 2,
(1) group 1:
the active ingredient A is one or more compounds selected from an R-pyridyloxycarboxylic acid represented by formula I and salt, ester derivative thereof, 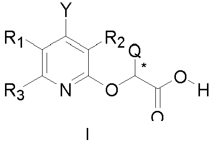
the ester is 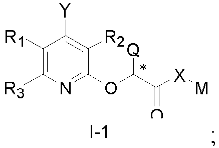
the carbon atom with an asterisk is a chiral center, which is in R-configuration;
the active ingredient B is selected from the following one or more compounds,
(1) ALS inhibitor selected from: penoxsulam, bispyribac-sodium, pyrazosulfuron-ethyl, nicosulfuron, florasulam, rimsulfuron, imazethapyr, imazapic, imazamox, sulfometuron-methyl, and cloransulam-methyl;
(2) ACCase inhibitor selected from: cyhalofop-butyl, clodinafop-propargyl, pinoxaden, clethodim, sethoxydim, quizalofop-P-methyl, fluazifop-P-butyl, and haloxyfop-P-methyl;
(3) PSII inhibitor selected from: atrazine, isoproturon, chlorotoluron, diuron, bentazone, bromoxynil, and propanil;
(4) HPPD inhibitor selected from: cypyrafluone, bipyrazone, fenpyrazone, tripyrasulfone, tefuryltrione, mesotrione, tembotrione, topramezone, isoxaflutole, and benzobicylon;
(5) PDS inhibitor selected from: diflufenican, and flurochloridone;
(6) DOXP inhibitor: clomazone;
(7) PPO inhibitor selected from: carfentrazone-ethyl, fomesafen, fluoroglycofen, oxyfluorfen, lactofen, acifluorfen-sodium, flumioxazin, sulfentrazone, saflufenacil, oxadiazon, and oxadiargyl;
(8) Synthetic hormone inhibitor selected from: triclopyr, MCPA, dicamba, picloram, aminopyralid, fluroxypyr, florpyrauxifen benzyl, halauxifen-methyl, quinclorac, and clopyralid;
(9) EPSPS inhibitor: glyphosate;
(10) GS inhibitor selected from, glufosinate ammonium;
(11) PSI inhibitor selected from, diquat Dibromide monohydrate, and paraquat dichloride;
wherein, R₁, R₂ each independently represent chloro;
R₃ represents fluoro;
Q represents methyl;
Y represents NH₂;
the salt is sodium salt, lithium salt or potassium salt;
in formula I-1, X represents O or S;
M represents methyl, undecyl, 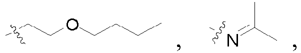 tetrahydrofurylmethylene, furylmethylene; or benzyl that is unsubstituted or substituted by fluoro or methyl;
(2) group 2:
the active ingredient A is one or more compounds selected from A171, A172, A173 and A212, the active ingredient B is one or more compounds selected from glyphosate and glufosinate ammonium,
| | |
|---|---|
| A171 | 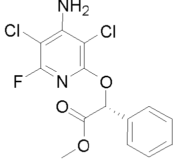 |
| A172 | 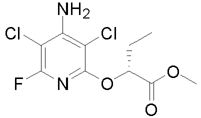 |
| A173 | 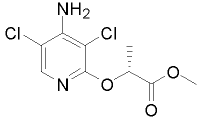 |
| A212 | 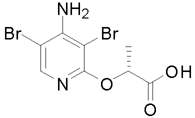 |

2. The herbicidal composition according to claim 1, wherein, in the group 1, the active ingredient A is one or more compounds selected from,
| No. of component A | Structure |
|---|---|
| A1 | 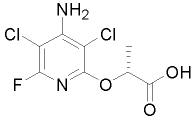 |
| A2 | 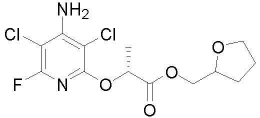 |
| A3 | A1 sodium salt |
| A4 | A1 potassium salt |
| A67 | 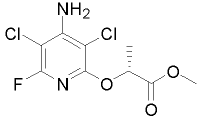 |
| A94 | 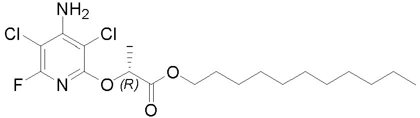 |
| A130 | 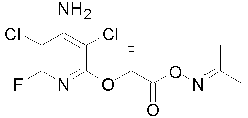 |
| A141 | 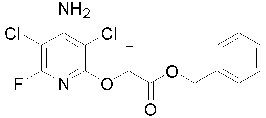 |
| A163 | 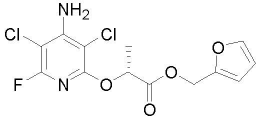 |
| A211 | 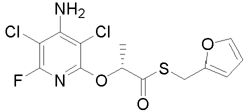 |
| A213 | 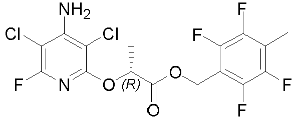 |
| A214 | 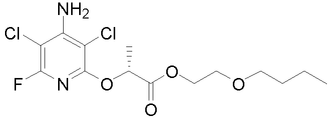 |

3. The herbicidal composition according to any one of claims 1 to 2, wherein the ingredient A to the ingredient B is in a weight ratio of 1:20~100:1 or 1:20~50:1, or 1:20~30:1 or 1:20~20:1, or 1:10~10:1 or 1:8~8:1, or 1:5~5:1, 1:1~2:1 or 1:1~1: 2.

4. The herbicidal composition according to any one of claims 1 to 3, wherein the ingredients A and B together account for 1-95 % or 10-80% of the total weight of the herbicidal composition.

5. The herbicidal composition according to any one of claims 1 to 3, wherein the herbicidal composition further comprises a conventional auxiliary, preferably said conventional auxiliary comprises a carrier, and/or a surfactant.

6. The herbicidal composition according to any one of claims 1 to 3, wherein the herbicidal composition further comprises one or more safeners.

7. The herbicidal composition according to claim 6, the safener is one or more compounds selected from: isoxadifen-ethyl, cyprosulfamide, mefenpyr-diethyl, cloquintocet-mexyl, gibberellic acid, furilazole and metcamifen.

8. The herbicidal composition according to any one of claims 1 to 7, wherein the herbicidal composition is in a form of a formulation which is selected from: a dispersible oil suspension, a water suspension, a suspoemulsion, a wettable powder, an emulsifiable concentrate, a water-dispersible granule, an aqueous emulsion and a microemulsion.

9. Use of the herbicidal composition according to any one of claims 1 to 7 for controlling a weed.

10. Use of the herbicidal composition according to any one of claims 1 to 7 for selectively controlling a weed in a useful crop.

11. The use for selectively controlling a weed in a useful crop according to claim 10, wherein, the useful crop is a genetically modified crop or a crop treated by gene editing technology.

12. A method for controlling unwanted plant growth, comprising applying the herbicidal composition according to any one of claims 1 to 7 to plants, plant parts, plant seeds or plant growing area.

13. A method for selectively controlling a weed in a useful crop, comprising applying the herbicidal composition according to any one of claims 1 to 7 to plants, plant parts, plant seeds or plant growing area.

14. The method according to claim 13, wherein, the useful crop is genetically modified crop or a crop treated by gene editing technology.

## Patentansprüche

1. Herbizidzusammensetzung, welche einen Wirkstoff A und einen Wirkstoff B in einer herbizidisch wirksamen Menge aufweist, wobei der Wirkstoff A zum Wirkstoff B in einem Gewichtsverhältnis von 1:30~100:1 ist, wobei die Kombination aus dem Wirkstoff A und dem Wirkstoff B aus Gruppe 1 und Gruppe 2 ausgewählt ist,
(1) Gruppe 1:
wobei der Wirkstoff A eine oder mehr Verbindungen ist, die aus einer R-Pyridyloxycarbonsäure, die durch Formel I dargestellt ist, einem Salz und einem Esterderivat davon ausgewählt ist, 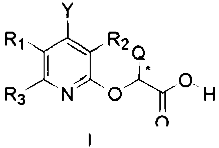
wobei der Ester 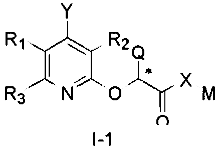 ist,
wobei das Kohlenstoffatom mit einem Stern ein chirales Zentrum ist, welches in R-Konfiguration ist,
wobei der Wirkstoff B aus der folgenden einen oder mehr Verbindungen ausgewählt ist,
(1) ALS-Inhibitor, der ausgewählt ist aus: Penoxsulam, Bispyribac-Natrium, Pyrazosulfuron-ethyl, Nicosulfuron, Florasulam, Rimsulfuron, Imazethapyr, Imazapic, Imazamox, Sulfometuron-methyl und Cloransulam-methyl,
(2) ACCase-Inhibitor, der ausgewählt ist aus: Cyhalofop-butyl, Clodinafoppropargyl, Pinoxaden, Clethodim, Sethoxydim, Quizalofop-P-methyl, Fluazifop-P-butyl und Haloxyfop-P-methyl,
(3) PSII-Inhibitor, der ausgewählt ist aus: Atrazin, Isoproturon, Chlorotoluron, Diuron, Bentazon, Bromoxynil und Propanil,
(4) HPPD-Inhibitor, der ausgewählt ist aus: Cypyrafluon, Bipyrazon, Fenpyrazon, Tripyrasulfon, Tefuryltrion, Mesotrion, Tembotrion, Topramezon, Isoxaflutol und Benzobicylon,
(5) PDS-Inhibitor, der ausgewählt ist aus: Diflufenican und Flurochloridon,
(6) DOXP-Inhibitor: Clomazon,
(7) PPO-Inhibitor, der ausgewählt ist aus: Carfentrazon-ethyl, Fomesafen, Fluoroglycofen, Oxyfluorfen, Lactofen, Acifluorfen-Natrium, Flumioxazin, Sulfentrazon, Saflufenacil, Oxadiazon und Oxadiargyl,
(8) Synthetisch-Hormon-Inhibitor, der ausgewählt ist aus: Triclopyr, MCPA, Dicamba, Picloram, Aminopyralid, Fluroxypyr, Florpyrauxifen-benzyl, Halauxifenmethyl, Quinclorac und Clopyralid,
(9) EPSPS-Inhibitor: Glyphosat,
(10) GS-Inhibitor, der ausgewählt ist aus Glufosinat-Ammonium,
(11) PSI-Inhibitor, der ausgewählt ist aus Diquatdibromid-Monohydrat und Paraquatdichlorid,
wobei R₁, R₂ jeweils unabhängig Chlor darstellen,
R₃ Fluor darstellt,
Q Methyl darstellt,
Y NH₂ darstellt,
wobei das Salz ein Natriumsalz, ein Lithiumsalz oder ein Kaliumsalz ist,
wobei in Formel I-1 X O oder S darstellt,
wobei M Methyl, Undecyl, 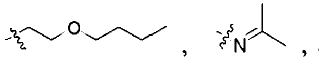 Tetrahydrofurylmethylen, Furylmethylen oder Benzyl darstellt, das unsubstituiert oder substituiert durch Fluor oder Methyl ist,
(2) Gruppe 2:
wobei der Wirkstoff A eine oder mehr Verbindungen ist, die ausgewählt ist aus A171, A172, A173 und A212, wobei der Wirkstoff B eine oder mehr Verbindungen ist, die ausgewählt ist aus Glyphosat und Glufosinat-Ammonium,
| | |
|---|---|
| A171 | 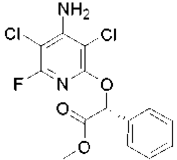 |
| A172 | 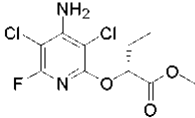 |
| A173 | 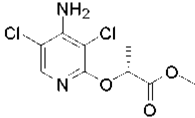 |
| A212 | 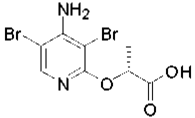 |

2. Herbizidzusammensetzung nach Anspruch 1, wobei, in der Gruppe 1, der Wirkstoff A eine oder mehr Verbindungen ist ausgewählt aus,
| Nr. der Verbindung A | Struktur |
|---|---|
| A1 | 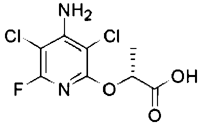 |
| A2 | 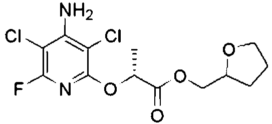 |
| A3 | A1 Natriumsalz |
| A4 | A1 Kaliumsalz |
| A67 | 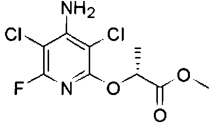 |
| A94 | 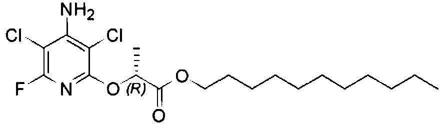 |
| A130 | 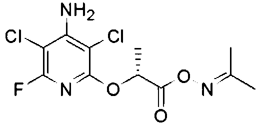 |
| A141 | 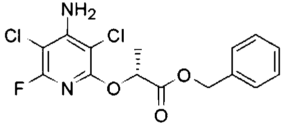 |
| A163 | 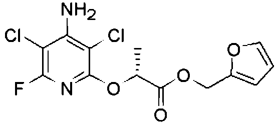 |
| A211 | 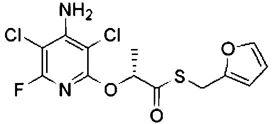 |
| A213 | 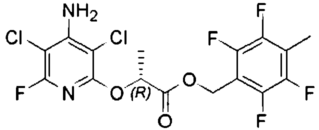 |
| A214 | 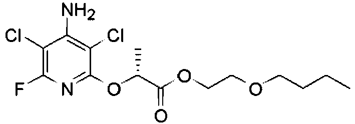 |

3. Herbizidzusammensetzung nach irgendeinem der Ansprüche 1 bis 2, wobei der Wirkstoff A zum Wirkstoff B in einem Gewichtsverhältnis von 1:20~100:1 oder 1:20~50:1 oder 1:20~30:1 oder 1:20~20:1 oder 1:10~10:1 oder 1:8~8:1 oder 1:5~5:1, 1:1~2:1 oder 1:1~1:2 ist.

4. Herbizidzusammensetzung nach irgendeinem der Ansprüche 1 bis 3, wobei die Wirkstoffe A und B zusammen 1-95% oder 10-80% des Gesamtgewichts der Herbizidzusammensetzung ausmachen.

5. Herbizidzusammensetzung nach irgendeinem der Ansprüche 1 bis 3, wobei die Herbizidzusammensetzung ferner einen herkömmlichen Hilfsstoff aufweist, wobei, bevorzugt, der herkömmliche Hilfsstoff einen Träger und/oder ein Tensid aufweist.

6. Herbizidzusammensetzung nach irgendeinem der Ansprüche 1 bis 3, wobei die Herbizidzusammensetzung ferner einen oder mehrere Safener aufweist.

7. Herbizidzusammensetzung nach Anspruch 6, wobei der Safener eine oder mehrere Verbindungen ist, die ausgewählt ist aus: Isoxadifen-ethyl, Cyprosulfamid, Mefenpyr-diethyl, Cloquintocet-mexyl, Gibberellinsäure, Furilazol und Metcamifen.

8. Herbizidzusammensetzung nach irgendeinem der Ansprüche 1 bis 7, wobei die Herbizidzusammensetzung in Form einer Formulierung ist, die ausgewählt ist aus: einer Dispergierbar-Öl-Suspension, einer Wassersuspension, einer Suspoemulsion, einem benetzbaren Pulver, einem emulgierbaren Konzentrat, einem Wasser-Dispergierbar-Granulat, einer wässrigen Emulsion und einer Mikroemulsion.

9. Verwendung der Herbizidzusammensetzung nach irgendeinem der Ansprüche 1 bis 7 zum Bekämpfen eines Unkrauts.

10. Verwendung der Herbizidzusammensetzung nach irgendeinem der Ansprüche 1 bis 7 zum selektiven Bekämpfen eines Unkrauts in einer Nutzpflanze.

11. Verwendung zum selektiven Bekämpfen eines Unkrauts in einer Nutzpflanze nach Anspruch 10, wobei die Nutzpflanze eine gentechnisch-veränderte Pflanze oder eine durch Gen-Editier-Technologie behandelte Pflanze ist.

12. Verfahren zum Bekämpfen unerwünschten Pflanzenwachstums, welches die Herbizidzusammensetzung nach irgendeinem der Ansprüche 1 bis 7 auf Pflanzen, Pflanzenteile, Pflanzensamen oder Pflanzen-Anbau-Gebiet anwendet.

13. Verfahren zum selektiven Bekämpfen eines Unkrauts in einer Nutzpflanze, welches die Herbizidzusammensetzung nach irgendeinem der Ansprüche 1 bis 7 auf Pflanzen, Pflanzenteile, Pflanzensamen oder Pflanzen-Anbau-Gebiet anwendet.

14. Verfahren nach Anspruch 13, wobei die Nutzpflanze eine gentechnisch-veränderte Pflanze oder eine durch Gen-Editier-Technologie behandelte Pflanze ist.

## Revendications

1. Composition herbicide comprenant une substance active A et une substance active B en une quantité efficace sur le plan herbicide, dans laquelle un rapport pondéral de la substance A à la substance B est de 1:30~100:1, dans laquelle la combinaison de la substance active A et de la substance active B est sélectionnée parmi le groupe 1 et le groupe 2,
(1) groupe 1 :
la substance active A est un ou plusieurs composés sélectionnés parmi un acide R-pyridyloxycarboxylique représenté par la formule I et un sel, un dérivé d'ester de celui-ci, 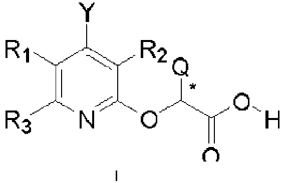
l'ester est 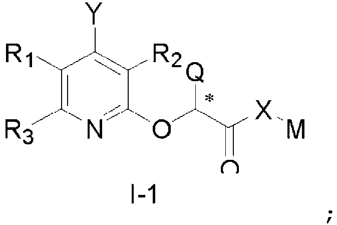
l'atome de carbone portant un astérisque est un centre chiral, qui est en configuration R ;
la substance active B est sélectionnée parmi les un ou plusieurs composés suivants,
(1) un inhibiteur de l'ALS sélectionné parmi : penoxsulam, bispyribac-sodium, pyrazosulfuron-éthyle, nicosulfuron, florasulam, rimsulfuron, imazéthapyr, imazapic, imazamox, sulfométuron-méthyle et cloransulam-méthyle ;
(2) un inhibiteur d'ACCase sélectionné parmi : cyhalofop-butyle, clodinafop-propargyle, pinoxadène, cléthodime, séthoxydime, quizalofop-P-méthyle, fluazifop-P-butyle et haloxyfop-P-méthyle ;
(3) un inhibiteur de PSII sélectionné parmi : atrazine, isoproturon, chlorotolurone, diuron, bentazone, bromoxynil et propanil ;
(4) un inhibiteur de HPPD sélectionné parmi : cypyrafluone, bipyrazone, fenpyrazone, tripyrasulfone, téfuryltrione, mésotrione, tembotrione, topramézone, isoxaflutole et benzobicylon ;
(5) un inhibiteur de PDS sélectionné parmi : diflufénican et flurochloridone ;
(6) un inhibiteur de DOXP : clomazone ;
(7) un inhibiteur de PPO sélectionné parmi : carfentrazone-éthyle, fomesafène, fluoroglycofène, oxyfluorfène, lactofène, acifluorfène-sodium, flumioxazine, sulfentrazone, saflufénacil, oxadiazon et oxadiargyl ;
(8) un inhibiteur d'hormone synthétique sélectionné parmi : triclopyr, MCPA, dicamba, picloram, aminopyralide, fluroxypyr, florpyrauxifène-benzyle, halauxifène-méthyle, quinclorac et clopyralid ;
(9) un inhibiteur d'EPSPS : glyphosate ;
(10) un inhibiteur de GS sélectionné parmi glufosinate d'ammonium ;
(11) un inhibiteur de PSI sélectionné parmi dibromure de diquat monohydraté et dichlorure de paraquat ; dans laquelle R₁, R₂ représentent chacun indépendamment chloro ; R₃ représente fluoro ;
Q représente méthyle ;
Y représente NH₂ ;
le sel est le sel de sodium, le sel de lithium ou le sel de potassium ;
dans la formule I-1, X représente O ou S ;
M représente méthyle, undécyle, 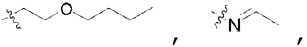 tétrahydrofurylméthylène, furylméthylène ; ou benzyle qui est non substitué ou substitué par fluoro ou méthyle ;
(2) groupe 2 :
la substance active A est un ou plusieurs composés sélectionnés parmi A171, A172, A173 et A212, la substance active B est un ou plusieurs composés sélectionnés parmi le glyphosate et le glufosinate d'ammonium,
| | |
|---|---|
| A171 | 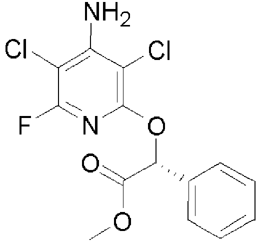 |
| A172 | 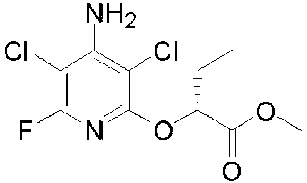 |
| A173 | 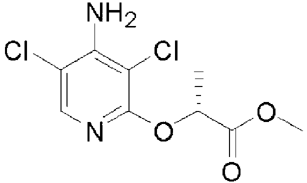 |
| A212 | 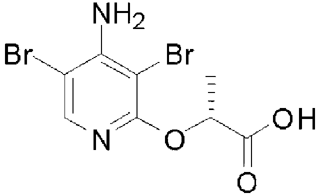 |

2. Composition herbicide selon la revendication 1, dans laquelle, dans le groupe 1, la substance active A est un ou plusieurs composés sélectionnés parmi,
| N° de composant A | Structure |
|---|---|
| A1 | 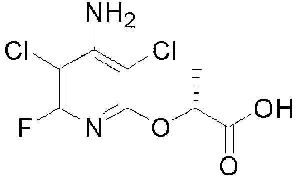 |
| A2 | 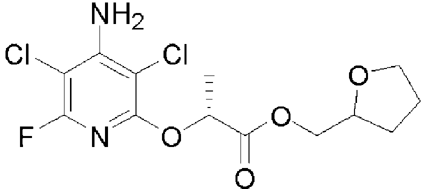 |
| A3 | Sel de sodium de A1 |
| A4 | Sel de potassium de A1 |
| A67 | 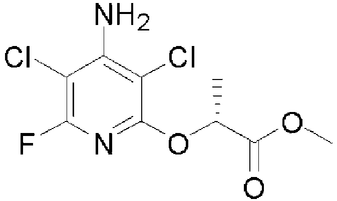 |
| A94 | 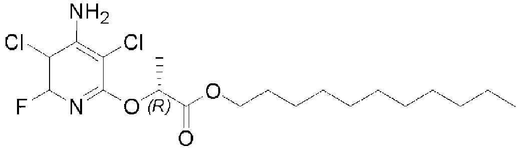 |
| A130 | 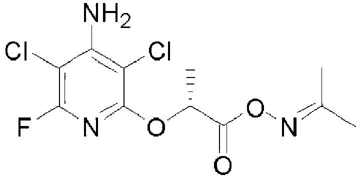 |
| A141 | 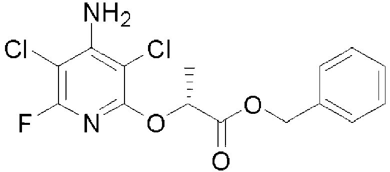 |
| A163 | 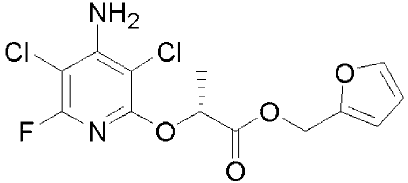 |
| A211 | 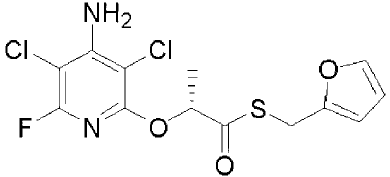 |
| A213 | 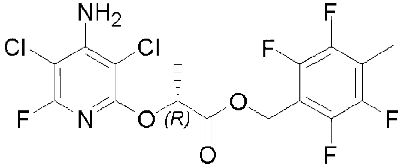 |
| A214 | 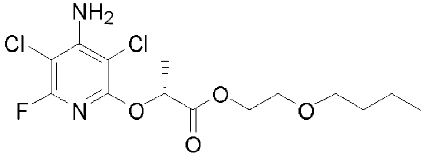 |

3. Composition herbicide selon l'une quelconque des revendications 1 à 2, dans laquelle un rapport pondéral de la substance A à la substance B est de 1:20~100:1 ou 1:20~50:1, ou 1:20~30:1 ou 1:20~20:1, ou 1:10~10:1 ou 1:8~8:1, ou 1:5~5:1, 1:1~2:1 ou 1:1~1: 2.

4. Composition herbicide selon l'une quelconque des revendications 1 à 3, dans laquelle les substances A et B représentent ensemble 1-95 % ou 10-80 % du poids total de la composition herbicide.

5. Composition herbicide selon l'une quelconque des revendications 1 à 3, dans laquelle la composition herbicide comprend en outre un auxiliaire classique, de préférence ledit auxiliaire classique comprend un support, et/ou un tensioactif.

6. Composition herbicide selon l'une quelconque des revendications 1 à 3, dans laquelle la composition herbicide comprend en outre un ou plusieurs phytoprotecteurs.

7. Composition herbicide selon la revendication 6, dans laquelle le phytoprotecteur est un ou plusieurs composés sélectionnés parmi : isoxadifène-éthyle, cyprosulfamide, méfénpyr-diéthyle, cloquintocet-mexyl, acide gibbérellique, furilazole et métcamifène.

8. Composition herbicide selon l'une quelconque des revendications 1 à 7, dans laquelle la composition herbicide est sous forme de formulation qui est sélectionnée parmi : une suspension huileuse dispersible, une suspension aqueuse, une suspo-émulsion, une poudre mouillable, un concentré émulsifiable, un granulé hydrodispersible, une émulsion aqueuse et une microémulsion.

9. Utilisation de la composition herbicide selon l'une quelconque des revendications 1 à 7 pour lutter contre une mauvaise herbe.

10. Utilisation de la composition herbicide selon l'une quelconque des revendications 1 à 7 pour lutter sélectivement contre une mauvaise herbe dans une culture utile.

11. Utilisation pour lutter sélectivement contre une mauvaise herbe dans une culture utile selon la revendication 10, dans laquelle la culture utile est une culture génétiquement modifiée ou une culture traitée par technologie d'édition génétique.

12. Procédé de régulation de la croissance de végétaux indésirables, comprenant l'application de la composition herbicide selon l'une quelconque des revendications 1 à 7 sur des plantes, des parties de plantes, des graines de plantes ou une zone de culture végétale.

13. Procédé de lutte sélective contre une mauvaise herbe dans une culture utile, comprenant l'application de la composition herbicide selon l'une quelconque des revendications 1 à 7 sur des plantes, des parties de plantes, des graines de plantes ou une zone de culture de plantes.

14. Procédé selon la revendication 13, dans lequel la culture utile est une culture génétiquement modifiée ou une culture traitée par technologie d'édition génétique.
